# EUROPEAN PATENT SPECIFICATION

(11) **EP 3 038 834 B1**
(45) Date of publication and mention of the grant of the patent: **12.12.2018**
(21) Application number: 14767207.5
(22) Date of filing: 29.08.2014
(51) Int. Cl.: B41J 2/04

(54) **MANIPULATION OF DROPLETS ON HYDROPHILIC OR VARIEGATED-HYDROPHILIC SURFACES**
MANIPULATION VON TRÖPFCHEN AUF HYDROPHILEN ODER VARIEGIERT HYDROPHILEN OBERFLÄCHEN
MANIPULATION DE GOUTTELETTES SUR DES SURFACES HYDROPHILES OU HYDROPHILES PANACHÉES

(30) Priority: 30.08.2013 US 201361872154 P; 01.11.2013 US 201361898689 P; 04.12.2013 US 201361911616 P; 24.01.2014 US 201461931011 P
(43) Date of publication of application: 06.07.2016
(73) Proprietor: Illumina, Inc., San Diego, CA 92122 (US); Illumina France S.A.R.L., 75003 Paris (FR)
(72) Inventor: JAMSHIDI, Arash, Hayward, CA 94545 (US); LIN, Yan-You, Hayward, CA 94545 (US); ARAVANIS, Alex, Hayward, CA 94545 (US); DELATTRE, Cyril, San Diego, CA 92122 (US); RIVAL, Arnaud, 38330 Saint Nazaire les Eymes (FR); FOLEY, Jennifer, San Diego, CA 92122 (US); SABOUNCHI, Poorya, Hayward, CA 94545 (US); KHURANA, Tarun, Hayward, CA 94545 (US); BABAZADEH, Majid, Hayward, CA 94545 (US); AMINI, Hamed, San Diego, CA 92122 (US); VENKATESAN, Bala Murali, San Diego, CA 92122 (US); BOWEN, M. Shane, San Diego, CA 92122 (US); BARNARD, Steven M., San Diego, CA 92122 (US); ROGERT BACIGALUPO, Maria Candelaria, San Diego, CA 92122 (US); DEHLINGER, Dietrich, Hayward, CA 94545 (US)
(74) Representative: Witte, Weller & Partner Patentanwälte mbB
(86) International application number: PCT/US2014/053571
(87) International publication number: WO 2015/031849

(56) References cited:
- EP-A1- 0 963 842
- EP-A1- 1 612 046
- US-A1- 2012 044 299

## Description

This application is based on, and claims the benefit of, U.S. Provisional Application Ser. No. 61/872,154, filed August 30, 2013, currently pending; U.S. Provisional Application Ser. No. 61/898,689, filed November 1, 2013, currently pending; U.S. Provisional Application Ser. No. 61/911,616, filed December 4, 2013, currently pending; and U.S. Provisional Application Ser. No. 61/931,011, filed January 24, 2014, currently pending.

### 1 Background

A droplet actuator typically includes one or more substrates configured to form a surface or gap for conducting droplet operations. The one or more substrates establish a droplet operations surface or gap for conducting droplet operations and may also include electrodes arranged to conduct the droplet operations. The droplet operations substrate or the gap between the substrates may be coated or filled with a filler fluid that is immiscible with the liquid that forms the droplets. The surfaces of the substrates facing the droplet operations gap are typically hydrophobic. However, certain surface-based chemistries are conducted on hydrophilic surfaces. Consequently, there is a need in the art for techniques for conducting chemical assays in a droplet actuator having hydrophilic regions or surfaces.

### 2 Definitions

As used herein, the following terms have the meanings indicated.
"Activate," with reference to one or more electrodes, means affecting a change in the electrical state of the one or more electrodes which, in the presence of a droplet, results in a droplet operation. Activation of an electrode can be accomplished using alternating current (AC) or direct current (DC). Any suitable voltage may be used. For example, an electrode may be activated using a voltage which is greater than about 150 V, or greater than about 200 V, or greater than about 250 V, or from about 275 V to about 1000 V, or about 300 V. Where an AC signal is used, any suitable frequency may be employed. For example, an electrode may be activated using an AC signal having a frequency from about 1 Hz to about 10 MHz, or from about 10 Hz to about 60 Hz, or from about 20 Hz to about 40 Hz, or about 30 Hz. "Bead," with respect to beads on a droplet actuator, means any bead or particle that is capable of interacting with a droplet on or in proximity with a droplet actuator. Beads may be any of a wide variety of shapes, such as spherical, generally spherical, egg shaped, disc shaped, cubical, amorphous and other three dimensional shapes. The bead may, for example, be capable of being subjected to a droplet operation in a droplet on a droplet actuator or otherwise configured with respect to a droplet actuator in a manner which permits a droplet on the droplet actuator to be brought into contact with the bead on the droplet actuator and/or off the droplet actuator. Beads may be provided in a droplet, in a droplet operations gap, or on a droplet operations surface. Beads may be provided in a reservoir that is external to a droplet operations gap or situated apart from a droplet operations surface, and the reservoir may be associated with a flow path that permits a droplet including the beads to be brought into a droplet operations gap or into contact with a droplet operations surface. Beads may be manufactured using a wide variety of materials, including for example, resins, and polymers. The beads may be any suitable size, including for example, microbeads, microparticles, nanobeads and nanoparticles. In some cases, beads are magnetically responsive; in other cases beads are not significantly magnetically responsive. For magnetically responsive beads, the magnetically responsive material may constitute substantially all of a bead, a portion of a bead, or only one component of a bead. The remainder of the bead may include, among other things, polymeric material, coatings, and moieties which permit attachment of an assay reagent. Examples of suitable beads include flow cytometry microbeads, polystyrene microparticles and nanoparticles, functionalized polystyrene microparticles and nanoparticles, coated polystyrene microparticles and nanoparticles, silica microbeads, fluorescent microspheres and nanospheres, functionalized fluorescent microspheres and nanospheres, coated fluorescent microspheres and nanospheres, color dyed microparticles and nanoparticles, magnetic microparticles and nanoparticles, superparamagnetic microparticles and nanoparticles (e.g., DYNABEADS® particles, available from Invitrogen Group, Carlsbad, CA), fluorescent microparticles and nanoparticles, coated magnetic microparticles and nanoparticles, ferromagnetic microparticles and nanoparticles, coated ferromagnetic microparticles and nanoparticles, and those described in Watkins et al., U.S. Patent Pub. No. 20050260686, entitled "Multiplex Flow Assays Preferably with Magnetic Particles as Solid Phase," published on November 24, 2005; Chandler., U.S. Patent Pub. No. 20030132538, entitled "Encapsulation of Discrete Quanta of Fluorescent Particles," published on July 17, 2003; Chandler et al., U.S. Patent Pub. No. 20050118574, entitled "Multiplexed Analysis of Clinical Specimens Apparatus and Method," published on June 2, 2005; Chandler et al., U.S. Patent Pub. No. 20050277197, entitled "Microparticles with Multiple Fluorescent Signals and Methods of Using Same," published on December 15, 2005; and Chandler et al., U.S. Patent Pub. No. 20060159962, entitled "Magnetic Microspheres for use in Fluorescence-based Applications," published on July 20, 2006 for their teaching concerning beads and magnetically responsive materials and beads. Beads may be pre-coupled with a biomolecule or other substance that is able to bind to and form a complex with a biomolecule. Beads may be pre-coupled with an antibody, protein or antigen, DNA/RNA probe or any other molecule with an affinity for a desired target. Examples of droplet actuator techniques for immobilizing magnetically responsive beads and/or non-magnetically responsive beads and/or conducting droplet operations protocols using beads are described in Pollack et al., U.S. Patent Pub. No. 20080053205, entitled "Droplet-Based Particle Sorting," published on March 6, 2008; U.S. Patent App. No. 61/039,183, entitled "Multiplexing Bead Detection in a Single Droplet," filed on March 25, 2008; Pamula et al., U.S. Patent App. No. 61/047,789, entitled "Droplet Actuator Devices and Droplet Operations Using Beads," filed on April 25, 2008; U.S. Patent App. No. 61/086,183, entitled "Droplet Actuator Devices and Methods for Manipulating Beads," filed on August 5, 2008; Eckhardt et al., International Patent Pub. No. WO/2008/098236, entitled "Droplet Actuator Devices and Methods Employing Magnetic Beads," published on August 14, 2008; Grichko et al., International Patent Pub. No. WO/2008/134153, entitled "Bead-based Multiplexed Analytical Methods and Instrumentation," published on November 6, 2008; Eckhardt et al., International Patent Pub. No. WO/2008/116221, "Bead Sorting on a Droplet Actuator," published on September 25, 2008; and Eckhardt et al., International Patent Pub. No. WO/2007/120241, entitled "Droplet-based Biochemistry," published on October 25, 2007.

Bead characteristics may be employed in the multiplexing aspects of the present disclosure. Examples of beads having characteristics suitable for multiplexing, as well as methods of detecting and analyzing signals emitted from such beads, may be found in Whitman et al., U.S. Patent Pub. No. 20080305481, entitled "Systems and Methods for Multiplex Analysis of PCR in Real Time," published on December 11, 2008; Roth, U.S. Patent Pub. No. 20080151240, "Methods and Systems for Dynamic Range Expansion," published on June 26, 2008; Sorensen et al., U.S. Patent Pub. No. 20070207513, entitled "Methods, Products, and Kits for Identifying an Analyte in a Sample," published on September 6, 2007; Roth, U.S. Patent Pub. No. 20070064990, entitled "Methods and Systems for Image Data Processing," published on March 22, 2007; Chandler et al., U.S. Patent Pub. No. 20060159962, entitled "Magnetic Microspheres for use in Fluorescence-based Applications," published on July 20, 2006; Chandler et al., U.S. Patent Pub. No. 20050277197, entitled "Microparticles with Multiple Fluorescent Signals and Methods of Using Same," published on December 15, 2005; and Chandler et al., U.S. Patent Publication No. 20050118574, entitled "Multiplexed Analysis of Clinical Specimens Apparatus and Method," published on June 2, 2005.

"Droplet" means a volume of liquid on a droplet actuator. Typically, a droplet is at least partially bounded by a filler fluid. For example, a droplet may be completely surrounded by a filler fluid or may be bounded by filler fluid and one or more surfaces of the droplet actuator. As another example, a droplet may be bounded by filler fluid, one or more surfaces of the droplet actuator, and/or the atmosphere. As yet another example, a droplet may be bounded by filler fluid and the atmosphere. Droplets may, for example, be aqueous or non-aqueous or may be mixtures or emulsions including aqueous and non-aqueous components. Droplets may take a wide variety of shapes; nonlimiting examples include generally disc shaped, slug shaped, truncated sphere, ellipsoid, spherical, partially compressed sphere, hemispherical, ovoid, cylindrical, combinations of such shapes, and various shapes formed during droplet operations, such as merging or splitting or formed as a result of contact of such shapes with one or more surfaces of a droplet actuator. For examples of droplet fluids that may be subjected to droplet operations using the approach of the present disclosure, see Eckhardt et al., International Patent Pub. No. WO/2007/120241, entitled, "Droplet-Based Biochemistry," published on October 25, 2007.

In various embodiments, a droplet may include a biological sample, such as whole blood, lymphatic fluid, serum, plasma, sweat, tear, saliva, sputum, cerebrospinal fluid, amniotic fluid, seminal fluid, vaginal excretion, serous fluid, synovial fluid, pericardial fluid, peritoneal fluid, pleural fluid, transudates, exudates, cystic fluid, bile, urine, gastric fluid, intestinal fluid, fecal samples, liquids containing single or multiple cells, liquids containing organelles, fluidized tissues, fluidized organisms, liquids containing multi-celled organisms, biological swabs and biological washes. Moreover, a droplet may include a reagent, such as water, deionized water, saline solutions, acidic solutions, basic solutions, detergent solutions and/or buffers. A droplet can include nucleic acids, such as DNA, genomic DNA, RNA, mRNA or analogs thereof; nucleotides such as deoxyribonucleotides, ribonucleotides or analogs thereof such as analogs having terminator moieties such as those described in Bentley et al., Nature 456:53-59 (2008); Gormley et al., International Patent Pub. No. WO/2013/131962, entitled, "Improved Methods of Nucleic Acid Sequencing," published on September 12, 2013; Barnes et al., U.S. Patent No. 7,057,026, entitled "Labelled Nucleotides," issued on June 6, 2006; Kozlov et al., International Patent Pub. No. WO/2008/042067, entitled, "Compositions and Methods for Nucleotide Sequencing," published on April 10, 2008; Rigatti et al., International Patent Pub. No. WO/2013/117595, entitled, "Targeted Enrichment and Amplification of Nucleic Acids on a Support," published on August 15, 2013; Hardin et al., U.S. Patent No. 7,329,492, entitled "Methods for Real-Time Single Molecule Sequence Determination," issued on February 12, 2008; Hardin et al., U.S. Patent No. 7,211,414, entitled "Enzymatic Nucleic Acid Synthesis: Compositions and Methods for Altering Monomer Incorporation Fidelity," issued on May 1, 2007; Turner et al., U.S. Patent No. 7,315,019, entitled "Arrays of Optical Confinements and Uses Thereof," issued on January 1, 2008; Xu et al., U.S. Patent No. 7,405,281, entitled "Fluorescent Nucleotide Analogs and Uses Therefor," issued on July 29, 2008; and Ranket al., U.S. Patent Pub. No. 20080108082, entitled "Polymerase Enzymes and Reagents for Enhanced Nucleic Acid Sequencing," published on May 8, 2008; enzymes such as polymerases, ligases, recombinases, or transposases; binding partners such as antibodies, epitopes, streptavidin, avidin, biotin, lectins or carbohydrates; or other biochemically active molecules. Other examples of droplet contents include reagents, such as a reagent for a biochemical protocol, such as a nucleic acid amplification protocol, an affinity-based assay protocol, an enzymatic assay protocol, a sequencing protocol, and/or a protocol for analyses of biological fluids. A droplet may include one or more beads.
"Droplet Actuator" means a device for manipulating droplets. For examples of droplet actuators, see Pamula et al., U.S. Patent No. 6,911,132, entitled "Apparatus for Manipulating Droplets by Electrowetting-Based Techniques," issued on June 28, 2005; Pamula et al., U.S. Patent Pub. No. 20060194331, entitled "Apparatuses and Methods for Manipulating Droplets on a Printed Circuit Board," published on August 31, 2006; Pollack et al., International Patent Pub. No. WO/2007/120241, entitled "Droplet-Based Biochemistry," published on October 25, 2007; Shenderov, U.S. Patent No. 6,773,566, entitled "Electrostatic Actuators for Microfluidics and Methods for Using Same," issued on August 10, 2004; Shenderov, U.S. Patent No. 6,565,727, entitled "Actuators for Microfluidics Without Moving Parts," issued on May 20, 2003; Kim et al., U.S. Patent Pub. No. 20030205632, entitled "Electrowetting-driven Micropumping," published on November 6, 2003; Kim et al., U.S. Patent Pub. No. 20060164490, entitled "Method and Apparatus for Promoting the Complete Transfer of Liquid Drops from a Nozzle," published on July 27, 2006; Kim et al., U.S. Patent Pub. No. 20070023292, entitled "Small Object Moving on Printed Circuit Board," published on February 1, 2007; Shah et al., U.S. Patent Pub. No. 20090283407, entitled "Method for Using Magnetic Particles in Droplet Microfluidics," published on November 19, 2009; Kim et al., U.S. Patent Pub. No. 20100096266, entitled "Method and Apparatus for Real-time Feedback Control of Electrical Manipulation of Droplets on Chip," published on April 22, 2010; Velev, U.S. Patent No. 7,547,380, entitled "Droplet Transportation Devices and Methods Having a Fluid Surface," issued on June 16, 2009; Sterling et al., U.S. Patent No. 7,163,612, entitled "Method, Apparatus and Article for Microfluidic Control via Electrowetting, for Chemical, Biochemical and Biological Assays and the Like," issued on January 16, 2007; Becker et al., U.S. Patent No. 7,641,779, entitled "Method and Apparatus for Programmable Fluidic Processing," issued on January 5, 2010; Becker et al., U.S. Patent No. 6,977,033, entitled "Method and Apparatus for Programmable Fluidic Processing," issued on December 20, 2005; Decre et al., U.S. Patent No. 7,328,979, entitled "System for Manipulation of a Body of Fluid," issued on February 12, 2008; Yamakawa et al., U.S. Patent Pub. No. 20060039823, entitled "Chemical Analysis Apparatus," published on February 23, 2006; Wu, U.S. Patent Pub. No. 20110048951, entitled "Digital Microfluidics Based Apparatus for Heat-exchanging Chemical Processes," published on March 3, 2011; Fouillet et al., U.S. Patent Pub. No. 20090192044, entitled "Electrode Addressing Method," published on July 30, 2009; Fouillet et al., U.S. Patent No. 7,052,244, entitled "Device for Displacement of Small Liquid Volumes Along a Micro-catenary Line by Electrostatic Forces," issued on May 30, 2006; Marchand et al., U.S. Patent Pub. No. 20080124252, entitled "Droplet Microreactor," published on May 29, 2008; Adachi et al., U.S. Patent Pub. No. 20090321262, entitled "Liquid Transfer Device," published on December 31, 2009; Roux et al., U.S. Patent Pub. No. 20050179746, entitled "Device for Controlling the Displacement of a Drop Between Two or Several Solid Substrates," published on August 18, 2005; and Dhindsa et al., "Virtual Electrowetting Channels: Electronic Liquid Transport with Continuous Channel Functionality," Lab Chip, 10:832-836 (2010).

Certain droplet actuators will include one or more substrates arranged with a droplet operations gap therebetween and electrodes associated with (e.g., layered on, attached to, and/or embedded in) the one or more substrates and arranged to conduct one or more droplet operations. For example, certain droplet actuators will include a base (or bottom) substrate, droplet operations electrodes associated with the substrate, one or more dielectric layers atop the substrate and/or electrodes, and optionally one or more hydrophobic layers atop the substrate, dielectric layers and/or the electrodes forming a droplet operations surface. A top substrate may also be provided, which is separated from the droplet operations surface by a gap, commonly referred to as a droplet operations gap. Various electrode arrangements on the top and/or bottom substrates are discussed in the above-referenced patents and applications and certain novel electrode arrangements are discussed in the description of the present disclosure. During droplet operations it is preferred that droplets remain in continuous contact or frequent contact with a ground or reference electrode. A ground or reference electrode may be associated with the top substrate facing the gap, the bottom substrate facing the gap, in the gap. Where electrodes are provided on both substrates, electrical contacts for coupling the electrodes to a droplet actuator instrument for controlling or monitoring the electrodes may be associated with one or both plates. In some cases, electrodes on one substrate are electrically coupled to the other substrate so that only one substrate is in contact with the droplet actuator. In one embodiment, a conductive material (e.g., an epoxy, such as MASTER BOND™ Polymer System EP79, available from Master Bond, Inc., Hackensack, NJ) provides the electrical connection between electrodes on one substrate and electrical paths on the other substrates, e.g., a ground electrode on a top substrate may be coupled to an electrical path on a bottom substrate by such a conductive material. Where multiple substrates are used, a spacer may be provided between the substrates to determine the height of the gap therebetween and define on-actuator dispensing reservoirs. The spacer height may, for example, be at least about 5 µm, 100 µm, 200 µm, 250 µm, 275 µm or more. Alternatively or additionally the spacer height may be at most about 600 µm, 400 µm, 350 µm, 300 µm, or less. The spacer may, for example, be formed of a layer of projections form the top or bottom substrates, and/or a material inserted between the top and bottom substrates. One or more openings may be provided in the one or more substrates for forming a fluid path through which liquid may be delivered into the droplet operations gap. The one or more openings may in some cases be aligned for interaction with one or more electrodes, e.g., aligned such that liquid flowed through the opening will come into sufficient proximity with one or more droplet operations electrodes to permit a droplet operation to be effected by the droplet operations electrodes using the liquid. The base (or bottom) and top substrates may in some cases be formed as one integral component. One or more reference electrodes may be provided on the base (or bottom) and/or top substrates and/or in the gap. Examples of reference electrode arrangements are provided in the above referenced patents and patent applications. In various embodiments, the manipulation of droplets by a droplet actuator may be electrode mediated, e.g., electrowetting mediated or dielectrophoresis mediated or Coulombic force mediated. Examples of other techniques for controlling droplet operations that may be used in the droplet actuators of the present disclosure include using devices that induce hydrodynamic fluidic pressure, such as those that operate on the basis of mechanical principles (e.g. external syringe pumps, pneumatic membrane pumps, vibrating membrane pumps, vacuum devices, centrifugal forces, piezoelectric/ultrasonic pumps and acoustic forces); electrical or magnetic principles (e.g. electroosmotic flow, electrokinetic pumps, ferrofluidic plugs, electrohydrodynamic pumps, attraction or repulsion using magnetic forces and magnetohydrodynamic pumps); thermodynamic principles (e.g. gas bubble generation/phase-change-induced volume expansion); other kinds of surface-wetting principles (e.g. electrowetting, and optoelectrowetting, as well as chemically, thermally, structurally and radioactively induced surface-tension gradients); gravity; surface tension (e.g., capillary action); electrostatic forces (e.g., electroosmotic flow); centrifugal flow (substrate disposed on a compact disc and rotated); magnetic forces (e.g., oscillating ions causes flow); magnetohydrodynamic forces; and vacuum or pressure differential. In certain embodiments, combinations of two or more of the foregoing techniques may be employed to conduct a droplet operation in a droplet actuator of the present disclosure. Similarly, one or more of the foregoing may be used to deliver liquid into a droplet operations gap, e.g., from a reservoir in another device or from an external reservoir of the droplet actuator (e.g., a reservoir associated with a droplet actuator substrate and a flow path from the reservoir into the droplet operations gap). Droplet operations surfaces of certain droplet actuators of the present disclosure may be made from hydrophobic materials or may be coated or treated to make them hydrophobic. For example, in some cases some portion or all of the droplet operations surfaces may be derivatized with low surface-energy materials or chemistries, e.g., by deposition or using in situ synthesis using compounds such as poly- or per-fluorinated compounds in solution or polymerizable monomers. Examples include TEFLON® AF (available from DuPont, Wilmington, DE), members of the cytop family of materials, coatings in the FLUOROPEL® family of hydrophobic and superhydrophobic coatings (available from Cytonix Corporation, Beltsville, MD), silane coatings, fluorosilane coatings, hydrophobic phosphonate derivatives (e.g., those sold by Aculon, Inc), and NOVEC™ electronic coatings (available from 3M Company, St. Paul, MN), other fluorinated monomers for plasma-enhanced chemical vapor deposition (PECVD), and organosiloxane (e.g., SiOC) for PECVD. In some cases, the droplet operations surface may include a hydrophobic coating having a thickness ranging from about 10 nm to about 1,000 nm. Moreover, in some embodiments, the top substrate of the droplet actuator includes an electrically conducting organic polymer, which is then coated with a hydrophobic coating or otherwise treated to make the droplet operations surface hydrophobic. For example, the electrically conducting organic polymer that is deposited onto a plastic substrate may be poly(3,4-ethylenedioxythiophene) poly(styrenesulfonate) (PEDOT:PSS). Other examples of electrically conducting organic polymers and alternative conductive layers are described in Pollack et al., International Patent Pub. No. WO/2011/002957, entitled "Droplet Actuator Devices and Methods," published on January 6, 2011. One or both substrates may be fabricated using a printed circuit board (PCB), glass, indium tin oxide (ITO)-coated glass, and/or semiconductor materials as the substrate. When the substrate is ITO-coated glass, the ITO coating is preferably a thickness of at least about 20 nm, 50 nm, 75 nm, 100 nm or more. Alternatively or additionally the thickness can be at most about 200 nm, 150 nm, 125 nm or less. In some cases, the top and/or bottom substrate includes a PCB substrate that is coated with a dielectric, such as a polyimide dielectric, which may in some cases also be coated or otherwise treated to make the droplet operations surface hydrophobic. When the substrate includes a PCB, the following materials are examples of suitable materials: MITSUI™ BN-300 (available from MITSUI Chemicals America, Inc., San Jose CA); ARLON™ 11N (available from Arlon, Inc, Santa Ana, CA).; NELCO® N4000-6 and N5000-30/32 (available from Park Electrochemical Corp., Melville, NY); ISOLA™ FR406 (available from Isola Group, Chandler, AZ), especially IS620; fluoropolymer family (suitable for fluorescence detection since it has low background fluorescence); polyimide family; polyester; polyethylene naphthalate; polycarbonate; polyetheretherketone; liquid crystal polymer; cyclo-olefin copolymer (COC); cyclo-olefin polymer (COP); aramid; THERMOUNT® nonwoven aramid reinforcement (available from DuPont, Wilmington, DE); NOMEX® brand fiber (available from DuPont, Wilmington, DE); and paper. Various materials are also suitable for use as the dielectric component of the substrate. Examples include: vapor deposited dielectric, such as PARYLENE™ C (especially on glass), PARYLENE™ N, and PARYLENE™ HT (for high temperature, ∼300°C) (available from Parylene Coating Services, Inc., Katy, TX); TEFLON® AF coatings; cytop; soldermasks, such as liquid photoimageable soldermasks (e.g., on PCB) like TAIYO™ PSR4000 series, TAIYO™ PSR and AUS series (available from Taiyo America, Inc. Carson City, NV) (good thermal characteristics for applications involving thermal control), and PROBIMER™ 8165 (good thermal characteristics for applications involving thermal control (available from Huntsman Advanced Materials Americas Inc., Los Angeles, CA); dry film soldermask, such as those in the VACREL® dry film soldermask line (available from DuPont, Wilmington, DE); film dielectrics, such as polyimide film (e.g., KAPTON® polyimide film, available from DuPont, Wilmington, DE), polyethylene, and fluoropolymers (e.g., FEP), polytetrafluoroethylene; polyester; polyethylene naphthalate; cyclo-olefin copolymer (COC); cyclo-olefin polymer (COP); any other PCB substrate material listed above; black matrix resin; polypropylene; and black flexible circuit materials, such as DuPont™ Pyralux® HXC and DuPont™ Kapton® MBC (available from DuPont, Wilmington, DE). Droplet transport voltage and frequency may be selected for performance with reagents used in specific assay protocols. Design parameters may be varied, e.g., number and placement of on-actuator reservoirs, number of independent electrode connections, size (volume) of different reservoirs, placement of magnets/bead washing zones, electrode size, inter-electrode pitch, and gap height (between top and bottom substrates) may be varied for use with specific reagents, protocols, droplet volumes, etc. In some cases, a substrate of the present disclosure may be derivatized with low surface-energy materials or chemistries, e.g., using deposition or in situ synthesis using poly-or per-fluorinated compounds in solution or polymerizable monomers. Examples include TEFLON® AF coatings and FLUOROPEL® coatings for dip or spray coating, other fluorinated monomers for plasma-enhanced chemical vapor deposition (PECVD), and organosiloxane (e.g., SiOC) for PECVD. Additionally, in some cases, some portion or all of the droplet operations surface may be coated with a substance for reducing background noise, such as background fluorescence from a PCB substrate. For example, the noise-reducing coating may include a black matrix resin, such as the black matrix resins available from Toray industries, Inc., Japan. Electrodes of a droplet actuator are typically controlled by a controller or a processor, which is itself provided as part of a system, which may include processing functions as well as data and software storage and input and output capabilities. Reagents may be provided on the droplet actuator in the droplet operations gap or in a reservoir fluidly coupled to the droplet operations gap. The reagents may be in liquid form, e.g., droplets, or they may be provided in a reconstitutable form in the droplet operations gap or in a reservoir fluidly coupled to the droplet operations gap. Reconstitutable reagents may typically be combined with liquids for reconstitution. An example of reconstitutable reagents suitable for use with the methods and apparatus set forth herein includes those described in Meathrel et al., U.S. Patent No. 7,727,466, entitled "Disintegratable Films for Diagnostic Devices," issued on June 1, 2010.

"Droplet operation" means any manipulation of a droplet on a droplet actuator. A droplet operation may, for example, include: loading a droplet into the droplet actuator; dispensing one or more droplets from a source droplet; splitting, separating or dividing a droplet into two or more droplets; transporting a droplet from one location to another in any direction; merging or combining two or more droplets into a single droplet; diluting a droplet; mixing a droplet; agitating a droplet; deforming a droplet; retaining a droplet in position; incubating a droplet; heating a droplet; vaporizing a droplet; cooling a droplet; disposing of a droplet; transporting a droplet out of a droplet actuator; other droplet operations described herein; and/or any combination of the foregoing. The terms "merge," "merging," "combine," "combining" and the like are used to describe the creation of one droplet from two or more droplets. It should be understood that when such a term is used in reference to two or more droplets, any combination of droplet operations that are sufficient to result in the combination of the two or more droplets into one droplet may be used. For example, "merging droplet A with droplet B," can be achieved by transporting droplet A into contact with a stationary droplet B, transporting droplet B into contact with a stationary droplet A, or transporting droplets A and B into contact with each other. The terms "splitting," "separating" and "dividing" are not intended to imply any particular outcome with respect to volume of the resulting droplets (i.e., the volume of the resulting droplets can be the same or different) or number of resulting droplets (the number of resulting droplets may be 2, 3, 4, 5 or more). The term "mixing" refers to droplet operations which result in more homogenous distribution of one or more components within a droplet. Examples of "loading" droplet operations include microdialysis loading, pressure assisted loading, robotic loading, passive loading, and pipette loading. Droplet operations may be electrode-mediated. In some cases, droplet operations are further facilitated by the use of hydrophilic and/or hydrophobic regions on surfaces and/or by physical obstacles. For examples of droplet operations, see the patents and patent applications cited above under the definition of "droplet actuator." Impedance or capacitance sensing or imaging techniques may sometimes be used to determine or confirm the outcome of a droplet operation. Examples of such techniques are described in Sturmer et al., U.S. Patent Pub. No. 20100194408, entitled "Capacitance Detection in a Droplet Actuator," published on Aug. 5, 2010.

Generally speaking, the sensing or imaging techniques may be used to confirm the presence or absence of a droplet at a specific electrode. For example, the presence of a dispensed droplet at the destination electrode following a droplet dispensing operation confirms that the droplet dispensing operation was effective. Similarly, the presence of a droplet at a detection spot at an appropriate step in an assay protocol may confirm that a previous set of droplet operations has successfully produced a droplet for detection. Droplet transport time can be quite fast. For example, in various embodiments, transport of a droplet from one electrode to the next may exceed about 1 sec, or about 0.1 sec, or about 0.01 sec, or about 0.001 sec. In one embodiment, the electrode is operated in AC mode but is switched to DC mode for imaging. It is helpful for conducting droplet operations for the footprint area of droplet to be similar to electrowetting area; in other words, 1x-, 2x- 3x-droplets are usefully controlled operated using 1, 2, and 3 electrodes, respectively. If the droplet footprint is greater than number of electrodes available for conducting a droplet operation at a given time, the difference between the droplet size and the number of electrodes should typically not be greater than 1; in other words, a 2x droplet is usefully controlled using 1 electrode and a 3x droplet is usefully controlled using 2 electrodes. When droplets include beads, it is useful for droplet size to be equal to the number of electrodes controlling the droplet, e.g., transporting the droplet.
"Filler fluid" means a fluid associated with a droplet operations substrate of a droplet actuator, which fluid is sufficiently immiscible with a droplet phase to render the droplet phase subject to electrode-mediated droplet operations. For example, the droplet operations gap of a droplet actuator is typically filled with a filler fluid. The filler fluid may, for example, be or include a low-viscosity oil, such as silicone oil or hexadecane filler fluid. The filler fluid may be or include a halogenated oil, such as a fluorinated or perfluorinated oil. The filler fluid may fill the entire gap of the droplet actuator or may coat one or more surfaces of the droplet actuator. Filler fluids may be conductive or non-conductive. Filler fluids may be selected to improve droplet operations and/or reduce loss of reagent or target substances from droplets, improve formation of microdroplets, reduce cross contamination between droplets, reduce contamination of droplet actuator surfaces, reduce degradation of droplet actuator materials, etc. For example, filler fluids may be selected for compatibility with droplet actuator materials. As an example, fluorinated filler fluids may be usefully employed with fluorinated surface coatings. Fluorinated filler fluids are useful to reduce loss of lipophilic compounds, such as umbelliferone substrates like 6-hexadecanoylamido-4-methylumbelliferone substrates (e.g., for use in Krabbe, Niemann-Pick, or other assays); other umbelliferone substrates are described in Winger et al., U.S. Patent Pub. No. 20110118132, entitled "Enzymatic Assays Using Umbelliferone Substrates with Cyclodextrins in Droplets of Oil," published on May 19, 2011. Examples of suitable fluorinated oils include those in the Galden line, such as Galden HT170 (bp = 170 °C, viscosity = 1.8 cSt, density = 1.77), Galden HT200 (bp = 200C, viscosity = 2.4 cSt, d = 1.79), Galden HT230 (bp = 230C, viscosity = 4.4 cSt, d = 1.82) (all from Solvay Solexis); those in the Novec line, such as Novec 7500 (bp = 128C, viscosity = 0.8 cSt, d = 1.61), Fluorinert FC-40 (bp = 155 °C, viscosity = 1.8 cSt, d = 1.85), Fluorinert FC-43 (bp = 174 °C, viscosity = 2.5 cSt, d = 1.86) (both from 3M). In general, selection of perfluorinated filler fluids is based on kinematic viscosity (< 7 cSt is preferred, but not required), and on boiling point (> 150 °C is preferred, but not required, for use in DNA/RNA-based applications (PCR, etc.)). Filler fluids may, for example, be doped with surfactants or other additives. For example, additives may be selected to improve droplet operations and/or reduce loss of reagent or target substances from droplets, formation of microdroplets, cross contamination between droplets, contamination of droplet actuator surfaces, degradation of droplet actuator materials, etc. Composition of the filler fluid, including surfactant doping, may be selected for performance with reagents used in the specific assay protocols and effective interaction or non-interaction with droplet actuator materials. Examples of filler fluids and filler fluid formulations suitable for use with the methods and apparatus set forth herein are provided in Srinivasan et al, International Patent Pub. No. WO/2010/027894, entitled "Droplet Actuators, Modified Fluids and Methods," published on June 3, 2010; Srinivasan et al, International Patent Pub. No. WO/2009/021173, entitled "Use of Additives for Enhancing Droplet Operations," published on February 12, 2009; Sista et al., International Patent Pub. No. WO/2008/098236, entitled "Droplet Actuator Devices and Methods Employing Magnetic Beads," published on January 15, 2009; and Monroe et al., U.S. Patent Pub. No. 20080283414, entitled "Electrowetting Devices," published on November 20, 2 008. Fluorinated oils may in some cases be dope( with fluorinated surfactants, e.g., Zonyl FSO-100 (Sigma-Aldrich) and/or others. A filler fluid is typically a liquid. In some embodiments, a filler gas can be used instead of a liquid. "Immobilize" with respect to magnetically responsive beads, means that the beads are substantially restrained in position in a droplet or in filler fluid on a droplet actuator. For example, in one embodiment, immobilized beads are sufficiently restrained in position in a droplet to permit execution of a droplet splitting operation, yielding one droplet with substantially all of the beads and one droplet substantially lacking in the beads.
"Magnetically responsive" means responsive to a magnetic field. "Magnetically responsive beads" include or are composed of magnetically responsive materials. Examples of magnetically responsive materials include paramagnetic materials, ferromagnetic materials, ferrimagnetic materials, and metamagnetic materials. Examples of suitable paramagnetic materials include iron, nickel, and cobalt, as well as metal oxides, such as Fe3O4, BaFe12O19, CoO, NiO, Mn₂O₃, Cr₂O₃, and CoMnP.
"Poly(N-(5-azidoacetamidylpentyl) acrylamide-co-acrylamide-co-acrylonitrile) or PAZAM" (also known as PAZAM-PAN) is an example of a polyacrylamide gel coating. In some applications, the PAZAM and/or PAZAM-PAN can be modified to be thermally responsive, thereby forming a thermo-responsive polyacrylamide gel. More details about PAZAM can be found with reference to George et al., U.S. Patent App. No. 13/784,368, entitled "Polymer Coatings," filed on March 4, 2013, published as US 2014/0079923 A1.

"Reservoir" means an enclosure or partial enclosure configured for holding, storing, or supplying liquid. A droplet actuator system of the present disclosure may include on-cartridge reservoirs and/or off-cartridge reservoirs. On-cartridge reservoirs may be (1) on-actuator reservoirs, which are reservoirs in the droplet operations gap or on the droplet operations surface; (2) off-actuator reservoirs, which are reservoirs on the droplet actuator cartridge, but outside the droplet operations gap, and not in contact with the droplet operations surface; or (3) hybrid reservoirs which have on-actuator regions and off-actuator regions. An example of an off-actuator reservoir is a reservoir in the top substrate. An off-actuator reservoir is typically in fluid communication with an opening or flow path arranged for flowing liquid from the off-actuator reservoir into the droplet operations gap, such as into an on-actuator reservoir. An off-cartridge reservoir may be a reservoir that is not part of the droplet actuator cartridge at all, but which flows liquid to some portion of the droplet actuator cartridge. For example, an off-cartridge reservoir may be part of a system or docking station to which the droplet actuator cartridge is coupled during operation. Similarly, an off-cartridge reservoir may be a reagent storage container or syringe which is used to force fluid into an on-cartridge reservoir or into a droplet operations gap. A system using an off-cartridge reservoir will typically include a fluid passage means whereby liquid may be transferred from the off-cartridge reservoir into an on-cartridge reservoir or into a droplet operations gap.

"Transporting into the magnetic field of a magnet," "transporting towards a magnet," and the like, as used herein to refer to droplets and/or magnetically responsive beads within droplets, is intended to refer to transporting into a region of a magnetic field capable of substantially attracting magnetically responsive beads in the droplet. Similarly, "transporting away from a magnet or magnetic field," "transporting out of the magnetic field of a magnet," and the like, as used herein to refer to droplets and/or magnetically responsive beads within droplets, is intended to refer to transporting away from a region of a magnetic field capable of substantially attracting magnetically responsive beads in the droplet, whether or not the droplet or magnetically responsive beads is completely removed from the magnetic field. It will be appreciated that in any of such cases described herein, the droplet may be transported towards or away from the desired region of the magnetic field, and/or the desired region of the magnetic field may be moved towards or away from the droplet. Reference to an electrode, a droplet, or magnetically responsive beads being "within" or "in" a magnetic field, or the like, is intended to describe a situation in which the electrode is situated in a manner which permits the electrode to transport a droplet into and/or away from a desired region of a magnetic field, or the droplet or magnetically responsive beads is/are situated in a desired region of the magnetic field, in each case where the magnetic field in the desired region is capable of substantially attracting any magnetically responsive beads in the droplet. Similarly, reference to an electrode, a droplet, or magnetically responsive beads being "outside of' or "away from" a magnetic field, and the like, is intended to describe a situation in which the electrode is situated in a manner which permits the electrode to transport a droplet away from a certain region of a magnetic field, or the droplet or magnetically responsive beads is/are situated away from a certain region of the magnetic field, in each case where the magnetic field in such region is not capable of substantially attracting any magnetically responsive beads in the droplet or in which any remaining attraction does not eliminate the effectiveness of droplet operations conducted in the region. In various aspects of the present disclosure, a system, a droplet actuator, or another component of a system may include a magnet, such as one or more permanent magnets (e.g., a single cylindrical or bar magnet or an array of such magnets, such as a Halbach array) or an electromagnet or array of electromagnets, to form a magnetic field for interacting with magnetically responsive beads or other components on chip. Such interactions may, for example, include substantially immobilizing or restraining movement or flow of magnetically responsive beads during storage or in a droplet during a droplet operation or pulling magnetically responsive beads out of a droplet.
"Washing" with respect to washing a bead (or other substrate) means reducing the amount and/or concentration of one or more substances in contact with the bead (or other substrate) or exposed to the bead (or other substrate) from a droplet in contact with the bead (or other substrate). The reduction in the amount and/or concentration of the substance may be partial, substantially complete, or even complete. The substance may be any of a wide variety of substances; examples include target substances for further analysis, and unwanted substances, such as components of a sample, contaminants, and/or excess reagent. In some embodiments, a washing operation begins with a starting droplet in contact with a magnetically responsive bead, where the droplet includes an initial amount and initial concentration of a substance. The washing operation may proceed using a variety of droplet operations. The washing operation may yield a droplet including the magnetically responsive bead, where the droplet has a total amount and/or concentration of the substance which is less than the initial amount and/or concentration of the substance. Examples of suitable washing techniques are described in Pamula et al., U.S. Patent No. 7,439,014, entitled "Droplet-Based Surface Modification and Washing," issued on October 21, 2008.

The terms "top," "bottom," "over," "under," and "on" are used throughout the description with reference to the relative positions of components of the droplet actuator, such as relative positions of top and bottom substrates of the droplet actuator. It will be appreciated that the droplet actuator is functional regardless of its orientation in space.
When a liquid in any form (e.g., a droplet or a continuous body, whether moving or stationary) is described as being "on", "at", or "over" an electrode, array, matrix or surface, such liquid could be either in direct contact with the electrode/array/matrix/surface, or could be in contact with one or more layers or films that are interposed between the liquid and the electrode/array/matrix/surface. In one example, filler fluid can be considered as a film between such liquid and the electrode/array/matrix/surface.
When a droplet is described as being "on" or "loaded on" a droplet actuator, it should be understood that the droplet is arranged on the droplet actuator in a manner which facilitates using the droplet actuator to conduct one or more droplet operations on the droplet, the droplet is arranged on the droplet actuator in a manner which facilitates sensing of a property of or a signal from the droplet, and/or the droplet has been subjected to a droplet operation on the droplet US-A-2012/044299 discloses the preamble of claim 1.

### 3 Brief Description of the Drawings

Figures 1A and 1B illustrate a plan view and cross-sectional view, respectively, of an example of a portion of a droplet actuator that has a hydrophilic region on the top substrate thereof;
Figures 2, 3, 4, 5, 6A, and 6B show other examples of configuring hydrophilic region in the droplet actuator of Figures 1A and 1B;
Figures 7A, 7B, 7C, and 7D illustrate side views of the droplet actuator of Figures 1A and 1B and a process of using the droplet actuator to expose a droplet to hydrophilic region;
Figures 8, 9, and 10 illustrate plan views of yet other configurations of hydrophilic region on the top substrate of a droplet actuator;
Figures 11A, 11B, 11C, and 11D illustrate side views of the droplet actuator of Figures 1A and 1B and a process of using the droplet actuator to exchange fluid at hydrophilic region;
Figures 12A and 12B illustrate a plan view and cross-sectional view, respectively, of an example of a 3D pattern of alternating hydrophilic and hydrophobic regions in a droplet actuator;
Figure 13 illustrates a top view of an example of an electrode arrangement in which a series of small hydrophilic regions are provided in relation to a line of larger droplet operations electrodes;
Figure 14 illustrates a top view of an example of an electrode arrangement in which a narrow elongated hydrophilic region is provided in relation to a line of larger droplet operations electrodes;
Figure 15 illustrates a top view of an example of an electrode arrangement in which a single narrow hydrophilic region traverses multiple lines of larger droplet operations electrodes;
Figure 16 illustrates a top view of an example of an electrode arrangement in which multiple segments of hydrophilic regions traverse multiple lines of larger droplet operations electrodes, respectively;
Figures 17A, 17B, 18A, 18B, 19A, 19B, 20A, and 20B show examples of mechanisms for retaining the displacement droplet in proximity to the hydrophilic region when displaced therefrom;
Figures 21A and 21B illustrate a plan view and cross-sectional view, respectively, of an example of a hydrophilic region formed of metal;
Figures 22, 23, 24 and 25 illustrate plan views of examples of patterned hydrophobic regions in relation to the footprint of the droplet operations electrodes;
Figures 26A, 26B, and 26C illustrate plan views of an electrode arrangement, which is a grid of droplet operations electrodes, and a process of displacing an aqueous liquid away from the hydrophilic region;
Figures 27A and 27B illustrate plan views of an electrode arrangement, which is a grid of droplet operations electrodes, and a method of transporting an aqueous droplet away from hydrophilic region;
Figures 28A and 28B illustrate plan views of the electrode arrangement of Figures 27A and 27B and a process of adding additional liquid to the aqueous droplet in order to enable it to be transported away from the hydrophilic region;
Figures 29A, 29B, and 29C illustrates a side view of a portion of a droplet actuator that includes varying gap heights to create a pumping effect for removing an aqueous liquid from the hydrophilic region;
Figures 30A and 30B illustrate a plan view and a side view, respectively, of a region of the droplet actuator that includes the hydrophilic region on top substrate and showing the difficultly of transporting a droplet underneath the hydrophilic region;
Figures 31A, 31B, and 31C illustrate top views of an electrode arrangement and a process of using a large-volume droplet to move a small-volume droplet without applying droplet operations to the small-volume droplet;
Figures 32A and 32B illustrate a top view and side view, respectively, of the droplet actuator that includes the hydrophilic region installed in a recessed region for assisting droplets onto the hydrophilic region;
Figure 33 illustrates a side view of the droplet actuator and an example of pre-filling the surface of the hydrophilic region with liquid in order to make it easier to transport a droplet onto the hydrophilic surface;
Figure 34 illustrates a side view of an embodiment of the droplet actuator that is designed to create a droplet operations effect (or electrowetting effect) on the top substrate using electrodes on the bottom substrate;
Figures 35A, 35B, 35C, and 35D illustrate side views of the droplet actuator that includes a dielectric layer on the top substrate to impart an electrowetting effect on the top substrate using electrodes on the bottom substrate to assist in transporting droplets atop the hydrophilic region;
Figure 36 illustrates a side view of another configuration of the droplet actuator of Figures 35A, 35B, 35C, and 35D;
Figure 37 illustrates a cross-sectional view of a portion of a droplet actuator that has a variegated-hydrophilic region on the top substrate thereof;
Figures 38A and 38B illustrate a plan view and a cross-sectional view, respectively, of an example of a portion of the variegated-hydrophilic region shown in Figure 37;
Figure 39 illustrates an example of a process of forming the variegated-hydrophilic region;
Figure 40 illustrates another example of a process of forming the variegated-hydrophilic region;
Figures 41, 42, and 43 show techniques for dewetting the variegated-hydrophilic region;
Figures 44A and 44B illustrate a plan view and a cross-sectional view, respectively, of a portion of another example of the variegated-hydrophilic region shown in Figure 37;
Figure 45 illustrates a side view of an example of the variegated-hydrophilic region on the bottom substrate of a droplet actuator;
Figure 46 illustrates a plan view of an example of a droplet operations arrangement that includes the variegated-hydrophilic region on the bottom substrate of a droplet actuator and a process of transporting a droplet across the variegated-hydrophilic region;
Figure 47 illustrates a cross-sectional view of a portion of a droplet actuator that has a superhydrophobic region on the top substrate thereof;
Figure 48 illustrates an example of a process of forming the superhydrophobic region;
Figure 49 shows images of examples of superhydrophobic regions, wherein the superhydrophobic regions are formed by adding surface roughness to the variegated-hydrophilic region;
Figures 50A and 50B illustrate cross-sectional views of the variegated-hydrophilic region when in use;
Figure 51 illustrates a side view of a portion of a droplet actuator that uses a flexible PCB and flip-chip bonding for monolithic integration of a CMOS detector and digital fluidics;
Figure 52 illustrates a side view of a portion of a droplet actuator that uses a flexible PCB and flow cell integration of a CMOS detector and digital fluidics;
Figure 53 illustrates a side view of a portion of a droplet actuator showing another example of using a flexible PCB for monolithic integration of a CMOS detector and digital fluidics; and
Figure 54 illustrates a functional block diagram of an example of a microfluidics system that includes a droplet actuator.

### 4 Description

Embodiments of the invention provide techniques for making use of a hydrophilic region in a droplet actuator for conducting surface-based chemistry. The hydrophilic region can be on a substrate, in a well, on a bead, in a gel etc. The hydrophilic region can have a variegated-hydrophilic surface. For example, one or more hydrophilic features (e.g. nanowells) of a surface can be flanked by hydrophobic (or superhydrophobic) interstitial regions on the surface of the substrate such that the surface has an overall variegated-hydrophilic character.

For example, a moiety may be captured on or coupled to a hydrophilic surface, and reagents may be contacted with the same surface to conduct chemistry, such as chemistry aimed at identifying the captured moiety, or chemistry aimed at building on the captured moiety to synthesize a new moiety.
In another example, a nucleic acid may be attached to a hydrophilic surface in a droplet actuator for conducting surface-based sequencing chemistry.
In particular embodiments, a nucleic acid may be attached to a hydrophilic surface in a droplet actuator for conducting surface-based sequencing chemistry. Attachment of a nucleic acid to a hydrophilic surface can occur via covalent or non-covalent linkage(s). Exemplary linkages are set forth in Pieken et al., U.S. Patent No. 6,737,236, entitled "Bioconjugation of Macromolecules," issued on May 18, 2004; Kozlov et al., U.S. Patent No. 7,259,258, entitled "Methods of Attaching Biological Compounds to Solid Supports Using Triazine," issued on August 21, 2007; Sharpless et al., U.S. Patent No. 7,375,234, entitled "Copper-catalysed Ligation of Azides and Acetylenes," issued on May 20, 2008; Pieken et al., U.S. Patent No. 7,427,678, entitled "Method for Immobilizing Oligonucleotides Employing the Cycloaddition Bioconjugation Method," issued on September 23, 2008; and Smith et al., U.S. Patent Pub. No. 2011/0059865 A1, entitled "Modified Molecular Arrays," published on March 10, 2011. In some embodiments, a nucleic acid or other reaction component can be attached to a gel or other semisolid support that is in turn attached or adhered to a hydrophilic surface or other solid support. Other reagents that can be particularly useful when attached to a hydrophilic surface include, but are not limited to, enzymes, receptors, ligands, proteins, biologically active compounds, or other reagents set forth herein, for example, in the context of the contents of a droplet.
A hydrophilic surface can occur on a variety of materials. Examples include glass, or other silicon materials (e.g., silicon wafer materials), and metal (e.g., gold). A hydrophilic surface can further be coated (partially or fully) with a gel as described for example in Shen et al., U.S. Patent Pub. No. 2013/0116128 A1, entitled "Integrated Sequencing Apparatuses and Methods of Use," published on May 9, 2013. Further examples of gels that are useful include, but are not limited to, those having a colloidal structure, such as agarose; polymer mesh structure, such as gelatin; or cross-linked polymer structure, such as polyacrylamide. Hydrogels are particularly useful such as those set forth in Smith et al., U.S. Patent Pub. No. 2011/0059865 A1, entitled "Modified Molecular Arrays," published on March 10, 2011; and U.S. Patent App. No. 13/784,368, published as US 2014/0079923 A1, the entire disclosures of which are incorporated herein by reference.

Additionally, the present disclosure provides techniques for making use of a variegated-hydrophilic region in a droplet actuator for conducting surface-based chemistry, wherein the variegated-hydrophilic region comprises an arrangement of hydrophilic features (e.g. nanowells) that are flanked or surrounded by hydrophobic interstitial regions of the surface. Similarly, a variegated-hydrophilic region can comprise an arrangement of hydrophobic features (e.g. nanospots) that are flanked or surrounded by hydrophilic interstitial regions of the surface. In some embodiments, DNA can be present at the hydrophilic regions (e.g. grafted into the hydrophilic nanowells).

For example, a moiety may be captured on or coupled to a variegated-hydrophilic surface, and reagents may be contacted with the same surface to conduct chemistry, such as chemistry aimed at detecting or identifying the captured moiety, or chemistry aimed at building on the captured moiety to synthesize a new moiety.

In another example, a nucleic acid may be attached to a variegated-hydrophilic surface in a droplet actuator for conducting surface-based sequencing chemistry.

Further, the present disclosure provides techniques for making use of a superhydrophobic region in a droplet actuator for conducting surface-based chemistry, wherein the superhydrophobic region is formed, for example, by surface roughness on one or more portions of a variegated-hydrophilic surface. A superhydrophobic surface can form part of a variegated-hydrophilic surface, thereby constituting a variegated-hydrophilic-superhydrophobic surface. For example, hydrophilic nanowells or other features of a surface can be separated by interstitial surface regions that are superhydrophobic.

Additionally, the present disclosure provides droplet actuators that use flexible printed circuit boards (PCBs) for monolithic integration of CMOS detectors and digital fluidics.

### 4.1 Hydrophilic Surfaces and Digital Fluidics

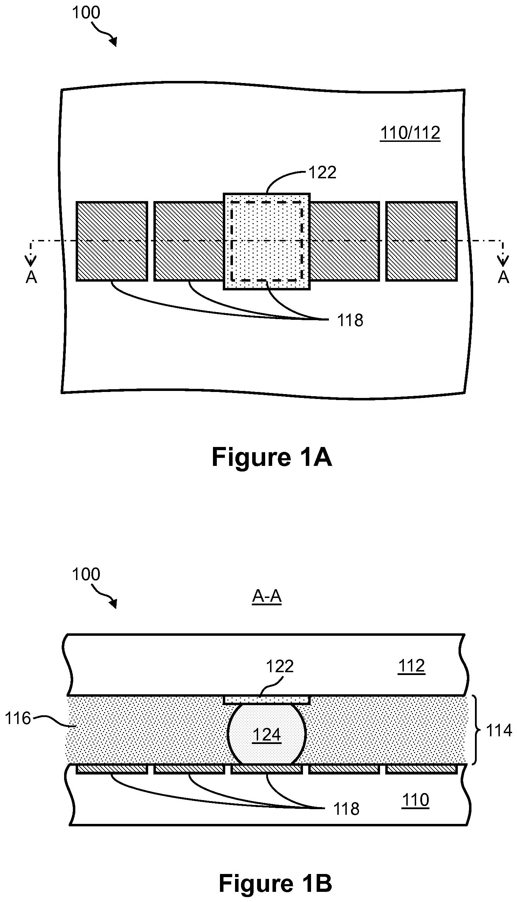

**Figure 1A** illustrates a plan view of a region of a droplet actuator 100 that has a hydrophilic region on the top substrate thereof. **Figure 1B** illustrates a cross-sectional view of droplet actuator 100 taken along line A-A of Figure 1A. Droplet actuator 100 includes a bottom substrate 110 and a top substrate 112 that are separated by a droplet operations gap 114. Droplet operations gap 114 contains filler fluid 116. The filler fluid 116 is, for example, low-viscosity oil, such as silicone oil or hexadecane filler fluid. Bottom substrate 110 may include an arrangement of droplet operations electrodes 118 (e.g., electrowetting electrodes). Top substrate 112 may include a ground reference plane or electrode (not shown). Droplet operations are conducted atop droplet operations electrodes 118 on a droplet operations surface.

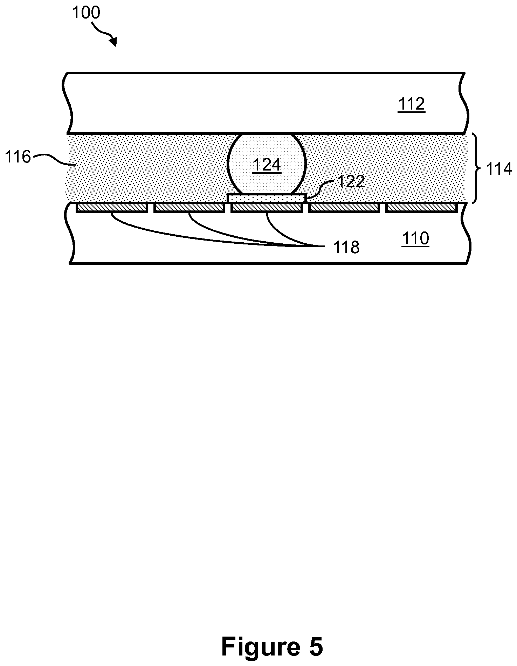

A hydrophilic region 122 is provided on top substrate 112. In this example, hydrophilic region 122 is substantially aligned with one of the droplet operations electrodes 118. A droplet 124 is shown at hydrophilic region 122 and atop one of the droplet operations electrodes 118. Hydrophilic region 122 may in certain embodiments have the same or similar footprint (e.g., square or rectangular) as its corresponding droplet operations electrode 118 or a different footprint (e.g., circular or ovular). Further, hydrophilic region 122 can be about the same size as or larger than its corresponding droplet operations electrode 118. Hydrophilic region 122 can be smaller than its corresponding droplet operations electrode 118. Alternatively or additionally, hydrophilic region 122 can be provided on bottom substrate 110 instead of top substrate 112; an example of which is shown in Figure 5.

Hydrophilic region 122 need not align with its corresponding droplet operations electrode 118 as illustrated. For example, it may overlap two or more droplet operations electrodes. Various other embodiments are illustrated and discussed elsewhere in this specification, and still other arrangements will be apparent to the skilled artisan in view of this specification.

In one example, hydrophilic region 122 is formed of glass. The glass can be, for example, a glass slide or microscope coverslip. The glass can be adhered (e.g., using an adhesive) to the surface of top substrate 112 facing the droplet operations gap 114.

In another example, hydrophilic region 122 is formed of any other silicon material (e.g., silicon wafer material), wherein the silicon material is adhered to or deposited on the surface of top substrate 112.

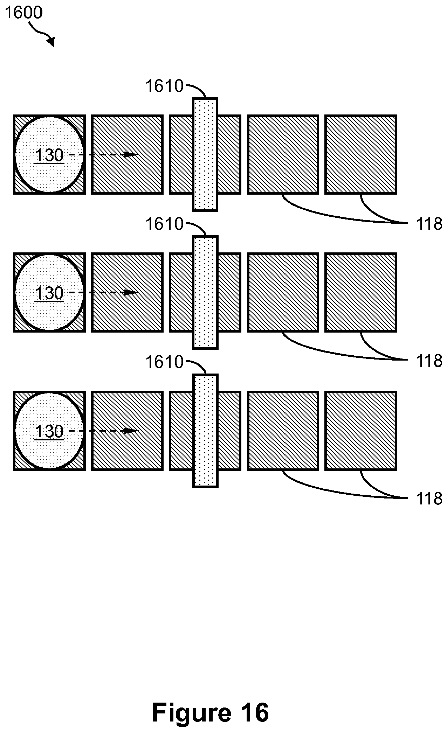

In yet another example, hydrophilic region 122 is formed of metal (e.g., gold, see Figures 16A and 16B), wherein the metal is deposited on the surface of top substrate 112.

In yet another example, hydrophilic region 122 is a window in a hydrophobic coating on a hydrophilic substrate. In particular embodiments, the window leaves an uncoated hydrophilic region partially or completely surrounded by a coated hydrophobic region.

Hydrophilic region 122 provides a hydrophilic surface on the top substrate 112 and in the droplet operations gap 114 which can be used for conducting surface-based chemistry in droplet actuator 100.

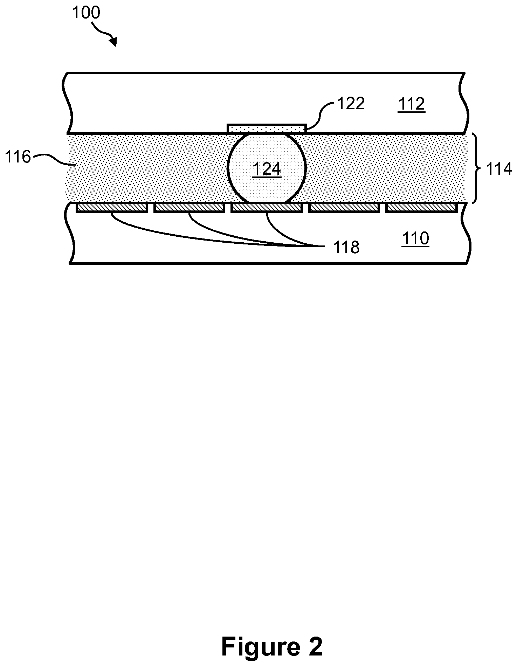

**Figures 2****,** **3****,** **4****,** **5****,** **6A, and 6B** show other examples of configuring hydrophilic region 122 in the droplet actuator 100 of Figures 1A and 1B.

Figure 2 shows hydrophilic region 122 arranged substantially flush with the surface of the top substrate 112.

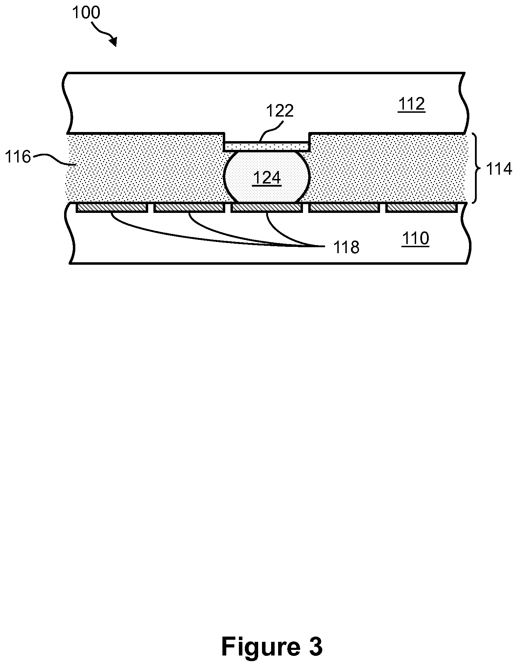

Figure 3 shows hydrophilic region 122 arranged protruding from the surface of the top substrate 112 and extending into the droplet operations gap 114.

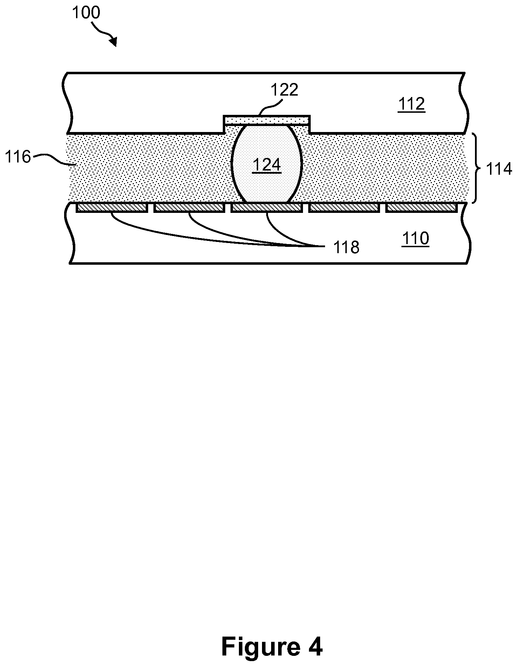

Figure 4 shows hydrophilic region 122 inset in a recessed region in the surface of the top substrate 112, away from the droplet operations gap 114.

Figure 5 shows hydrophilic region 122 arranged on the bottom substrate 110 of droplet actuator 100.

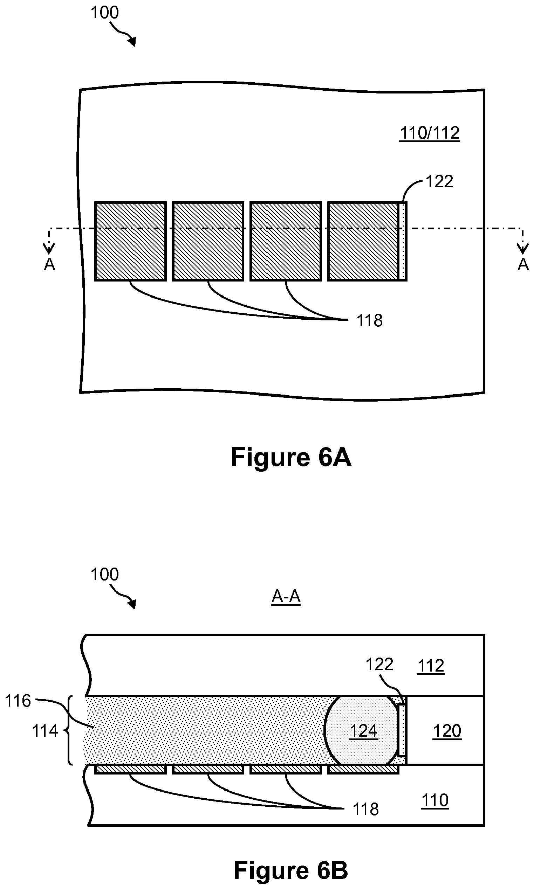

Figures 6A (plan view) and 6B (side view) show hydrophilic region 122 arranged alongside a droplet, such as droplet 124. For example, hydrophilic region 122 is provided on a spacer 120 or other insert in the droplet operations gap 114. Spacer 120 is illustrated here at the edge of the droplet actuator 100; however, it will be appreciated that the hydrophilic region may be provided via a spacer or insert situated at any locus within the droplet operations gap 114.

It will be appreciated that while the figures illustrate single instances of hydrophilic regions 122, a plurality of the hydrophilic regions may be provided in paths, intersecting paths, and/or arrays.

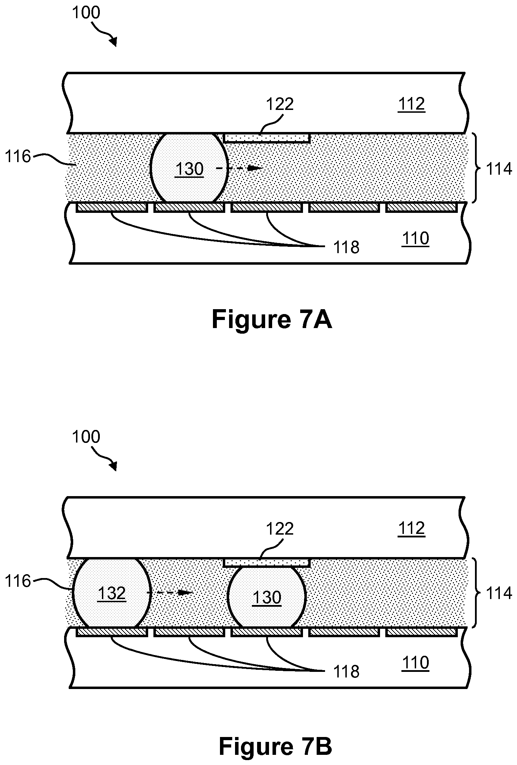

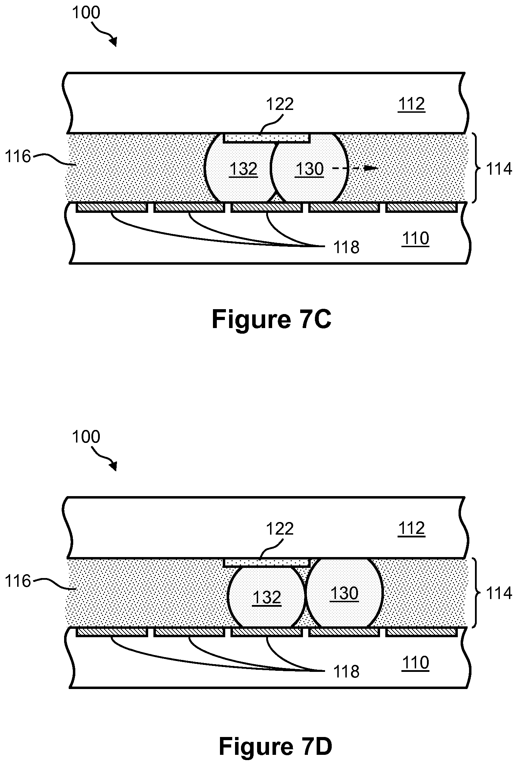

**Figures 7A, 7B****,** **7C, and 7D** illustrate side views of the droplet actuator 100 of Figures 1A and 1B and a process of using the droplet actuator 100 to expose an aqueous droplet 130 or bring aqueous droplet 130 into contact with to hydrophilic region 122, and importantly, to permit aqueous droplet 130 to be transported away from hydrophilic region 122.

For example, Figure 7A shows aqueous droplet 130 being transported via droplet operations along droplet operations electrodes 118 and toward hydrophilic region 122. Aqueous droplet 130 may, for example, include sample and/or reagents for conducting an assay or assay step at the surface of hydrophilic region 122.

Aqueous droplet 130 may, for example, include sample and/or reagents for conducting a DNA sequencing reaction at the surface of hydrophilic region 122. Aqueous droplet 130 may, for example, include sample and/or reagents for conducting an immunoassay reaction at the surface of hydrophilic region 122. Aqueous droplet 130 may, for example, include a wash buffer for washing hydrophilic region 122.

Figure 7B shows aqueous droplet 130 in contact with hydrophilic region 122. Once aqueous droplet 130 is in contact with hydrophilic region 122, aqueous droplet 130 becomes trapped or pinned at the location of hydrophilic region 122. In at least some circumstances, the attraction of aqueous droplet 130 to hydrophilic region 122 is sufficiently strong that that aqueous droplet 130 cannot be completely moved away from hydrophilic region 122 using droplet operations. For example, electrowetting forces may not be sufficient to overcome the attraction of aqueous droplet 130 to hydrophilic region 122. As another example, dielectric forces in at least some circumstances are not sufficient to overcome the attraction of aqueous droplet 130 to hydrophilic region 122. Various other droplet operations forces may not be sufficient to overcome the attraction of aqueous droplet 130 to hydrophilic region 122.

Figure 7B also shows a displacement droplet 132 being transported using droplet operations along droplet operations electrodes 118 and toward aqueous droplet 130, which is immobilized at hydrophilic region 122. Displacement droplet 132 is substantially immiscible in both the filler fluid 116 and aqueous droplet 130. Displacement droplet 132 can be, for example, a volume of an organic compound that is substantially immiscible with the oil, such as another oil. Displacement droplet 132 can be an emulsion. Immersion oils known in the art for use in microscopy are particularly suitable. Such immersion oils are often mixtures including ingredients such as: alkanes, diarylalkanes, naphthalenes, diphenyl compounds, benzylbutylphthalate, chlorinated paraffins, tricyclodecane derivatives, tricyclodecanes, liquid polybutenes, aromatic compounds, aromatic compounds having ether bonds, liquid polyolefins, hydrogenated products of a monomer to a tetrameter of norbornenes, liquid diene copolymers compounded with phthalate and paraffins, liquid diene copolymers compounded with α-olefm, liquid olefin polymers, liquid diene polymers, diaryl alkanes, and alkyl benzenes and various combinations of the foregoing. A specific example is the immersion liquid 1160 from Cargille Laboratories (Cedar Grove, NJ).

In some cases, displacement droplet 132 can be an oil, oil mixture, or organic mixture, such as those used in immersion microscopy. For example, displacement droplet 132 includes an immersion oil, such as those available from Cargille Laboratories (Cedar Grove, NJ). Other examples of immersion oils are described in Fukunaga et al., U.S. Patent No. 8,502,002, entitled "Microscope Immersion Oil," issued on August 6, 2013; Motoyama, U.S. Patent No. 6,221,281, entitled "Liquid Immersion Oil," issued on April 24, 2001; Weippert, U.S. Patent No. 5,817,256, entitled "Immersion Oil," issued on October 6, 1998; Tanaka, U.S. Patent No. 4,832,855, entitled "Immersion Oil for Microscopy," issued on May 23, 1989; Tanaka, U.S. Patent No. 4,789,490, entitled "Immersion Oil Composition Having Low Fluorescence Emissions for Microscope," issued on December 6, 1988; Liva, U.S. Patent No. 4,587,042, entitled "Immersion Oil System," issued on May 6, 1986; Hirth et al., U.S. Patent No. 4,559,147, entitled "Optical Immersion Oil," issued on December 17, 1985; Sacher et al., U.S. Patent No. 4,491,533, entitled "Immersion Oil for Fluorescence Microscopy," issued on January 1, 1985; Sacher, U.S. Patent No. 4,465,621, entitled "Immersion Oil for Microscopy and Related Applications," issued on August 14, 1984; and Ushioda et al., U.S. Patent No. 3,979,301, entitled "Immersion Oil for Microscopy," issued on September 7, 1976.

In particular embodiments, such as those where aqueous droplet 130 cannot be transported away from hydrophilic region 122 using electrowetting droplet operations, displacement droplet 132 can be used to push (using droplet operations mediated by droplet operations electrodes 118) aqueous droplet 130 away from hydrophilic region 122. For example, Figures 7C and 7D show aqueous droplet 130 being displaced at hydrophilic region 122 by displacement droplet 132. In this way, aqueous droplet 130 is displaced from hydrophilic region 122 by displacement droplet 132. Aqueous droplet 130 may then be subjected to electrowetting droplet operations mediated by droplet operations electrodes 118. Subsequently, aqueous droplet 130 can be transported away from hydrophilic region 122 using electrowetting mediated droplet operations or other electrode-mediated droplet operations or other droplet operations.
Additionally, instead of using displacement droplet 132, which is a volume of fluid, other materials can be used for pushing aqueous droplet 130 away from hydrophilic region 122. For example, an air bubble can be used in a similar manner for displacing aqueous droplet 130 from hydrophilic region 122.

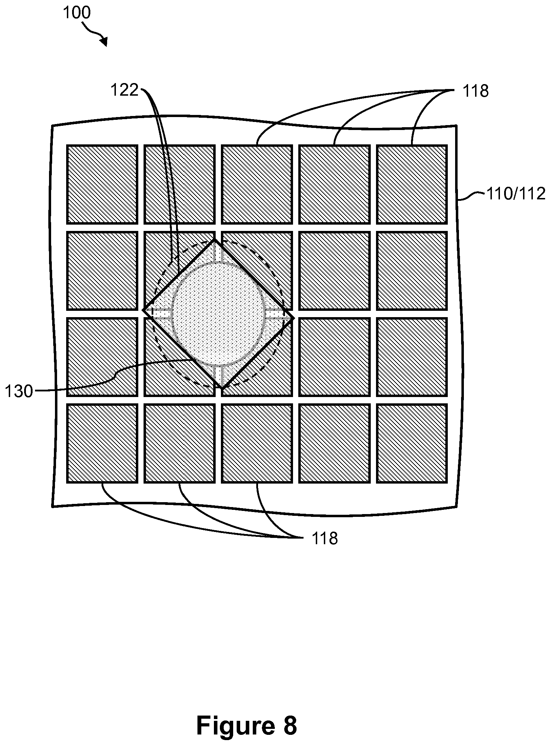

**Figures 8****,** **9****, and** **10** illustrate plan views of yet other configurations of hydrophilic region 122 on the top substrate 112 of the droplet actuator 100.

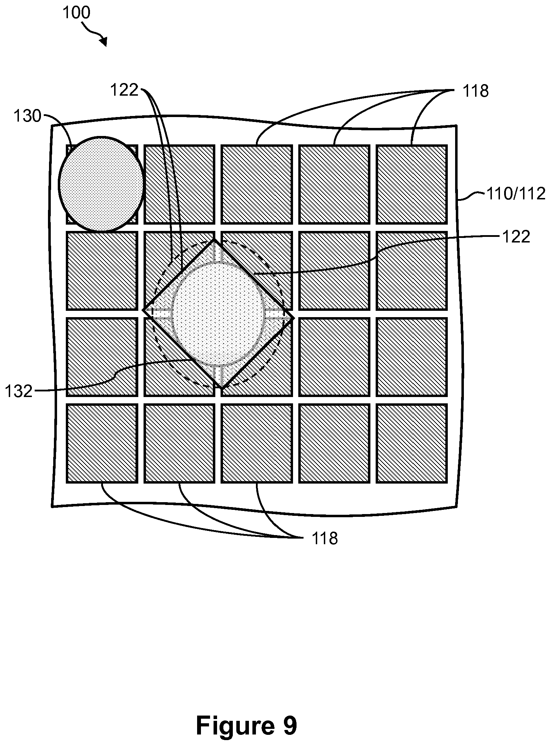

Figure 8 shows a grid or array of droplet operations electrodes 118 in droplet actuator 100. In this example, hydrophilic region 122 is sized and shaped to overlap a portion of multiple (e.g., four) droplet operations electrodes 118. Hydrophilic region 122 is not limited to being square-shaped. In another example, hydrophilic region 122 can be circular or disk-shaped. This configuration allows for transporting droplets around the grid or array of droplet operations electrodes 118 (using droplet operations) without losing contact with hydrophilic region 122 and without completely displacing displacement droplet 132 from hydrophilic region 122. An example of using this configuration of hydrophilic region 122 and droplet operations electrodes 118 is shown herein below with reference to Figure 9.

Figure 9 shows the grid or array of droplet operations electrodes 118 and hydrophilic region 122 of Figure 8, wherein displacement droplet 132 is "parked" at hydrophilic region 122 and aqueous droplet 130 is not in contact with hydrophilic region 122.

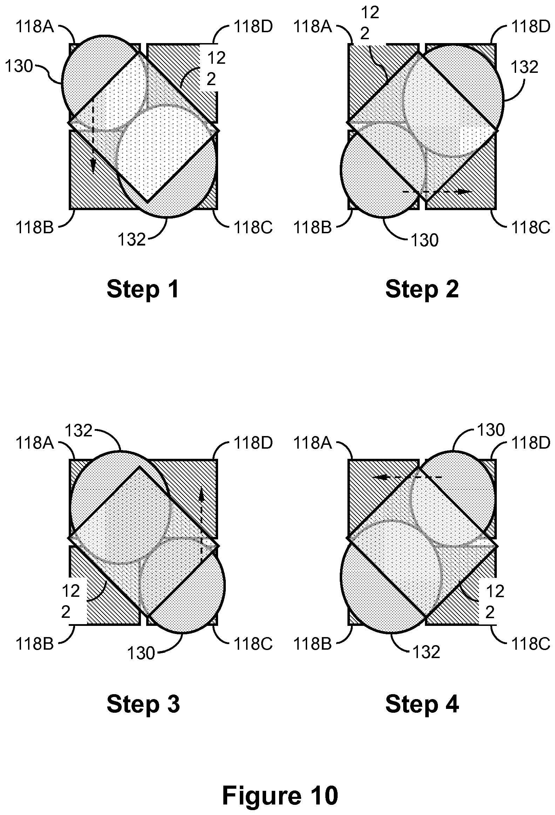

Figure 10 shows a process of aqueous droplet 130 interacting with substantially the entirety of hydrophilic region 122 without completely displacing displacement droplet 132 and without becoming immobilized at hydrophilic region 122. Namely, Figure 10 shows droplet operations electrodes 118A, 118B, 118C, and 118D, which are the four droplet operations electrodes 118 in proximity to hydrophilic region 122.

In a first step, aqueous droplet 130 is transported using droplet operations to droplet operations electrode 118A, which partially displaces displacement droplet 132. In this step, aqueous droplet 130 is in contact with the portion of hydrophilic region 122 corresponding to droplet operations electrode 118A.

In a second step, aqueous droplet 130 is transported using droplet operations from droplet operations electrode 118A to droplet operations electrode 118B, which partially displaces displacement droplet 132. In this step, aqueous droplet 130 is in contact with the portion of hydrophilic region 122 corresponding to droplet operations electrode 118B.

In a third step, aqueous droplet 130 is transported using droplet operations from droplet operations electrode 118B to droplet operations electrode 118C, which partially displaces displacement droplet 132. In this step, aqueous droplet 130 is in contact with the portion of hydrophilic region 122 corresponding to droplet operations electrode 118C.

In a fourth step, aqueous droplet 130 is transported using droplet operations from droplet operations electrode 118C to droplet operations electrode 118D, which partially displaces displacement droplet 132. In this step, aqueous droplet 130 is in contact with the portion of hydrophilic region 122 corresponding to droplet operations electrode 118D.

At the completion of these four steps, aqueous droplet 130 has come into contact with and interacted with substantially the entire surface of hydrophilic region 122 without becoming immobilized at hydrophilic region 122. Thus, aqueous droplet 130 can be transported away hydrophilic region 122 using droplet operations mediated by the electrodes 118.

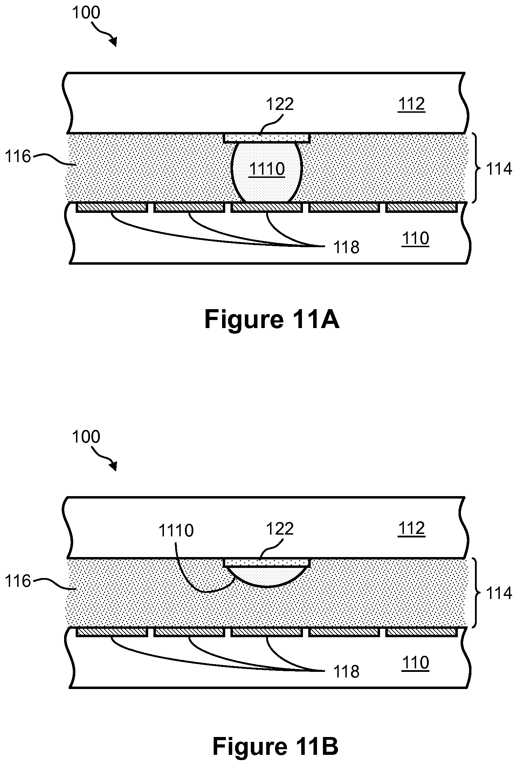

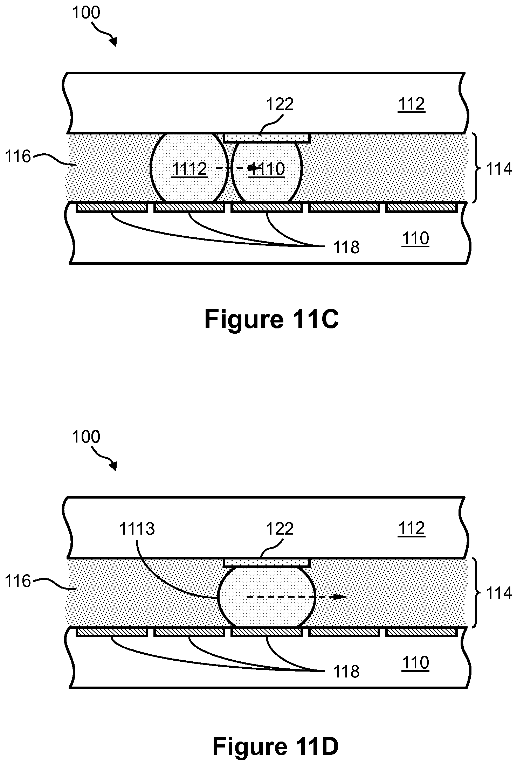

**Figures 11A, 11B****,** **11C, and 11D** illustrate side views of the droplet actuator 100 of Figures 1A and 1B and a process of using the droplet actuator 100 to exchange fluid at hydrophilic region 122. It may not always be possible to transport or otherwise move the entirety of an aqueous droplet away from hydrophilic region 122. Consequently, there may be a trapped droplet left behind at hydrophilic region 122. In one example, Figure 11A shows a column of aqueous liquid 1110 trapped between hydrophilic region 122 and its corresponding droplet operations electrode 118. In another example, Figure 11B shows a small volume of aqueous liquid 1110 trapped on the surface of hydrophilic region 122 only.

In a process of exchanging fluid at hydrophilic region 122, Figure 11C shows a wash droplet 1112 being transported using droplet operations into contact with the trapped column (or droplet) of aqueous liquid 1110 and thereby forming a larger combined droplet 1113. Next and referring now to Figure 11D, the wash combined droplet 1113, is transported away from hydrophilic region 122, leaving behind a new trapped column or droplet of aqueous liquid 1110a. Droplet 1110a will be diluted relative to droplet 1110. Thus, the droplet operation has washed region 122 of analytes or reaction components that were present in droplet 1110. The steps described with reference to Figures 11C and 11D can be repeated to further wash hydrophilic region 122 or to apply reagent to hydrophilic region 122.

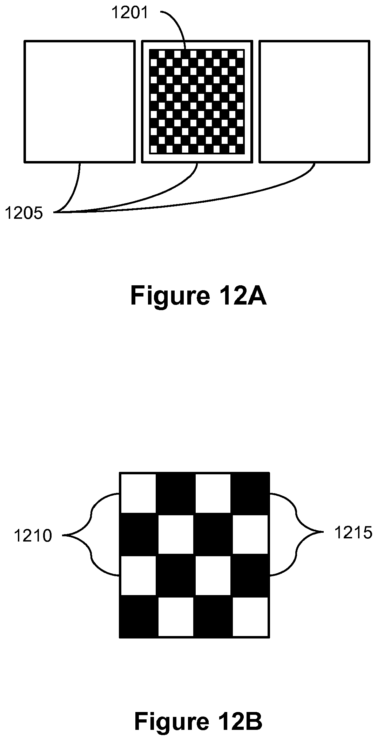

**Figures 12A and 12B** illustrate a hydrophilic surface 1201 for use with the methods and apparatus set forth herein where the surface has alternating hydrophobic/hydrophilic regions. As with other embodiments illustrated herein, hydrophilic surface 1201 may be situated on a gap-facing surface of the top or bottom substrate of a droplet actuator. Hydrophilic surface 1201 is shown here within a path of droplet operations electrodes 1205. Figure 12B illustrates a portion of hydrophobic surface 1201 magnified to show that hydrophobic surface 1201 is patterned to include hydrophilic regions 1210 and hydrophobic regions 1215.

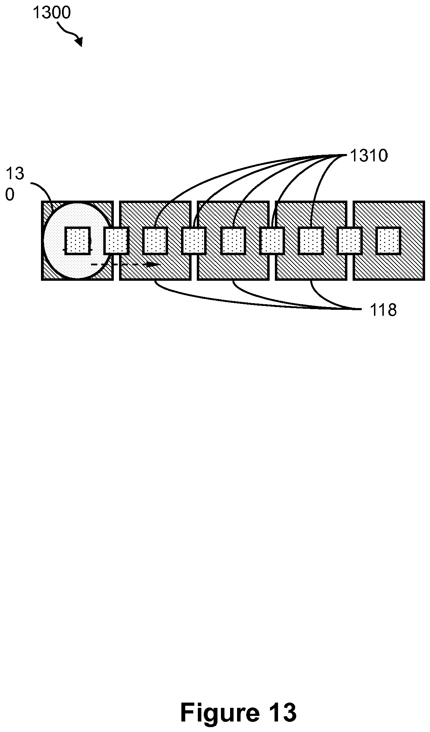

**Figure 13** illustrates a top view of an example of an electrode arrangement 1300 in which a series of small hydrophilic regions 1310 are provided in relation to a line of larger droplet operations electrodes 118. In one example, hydrophilic regions 1310 are provided on the top substrate of the droplet actuator and the droplet operations electrodes 118 are provided on the bottom substrate of the droplet actuator. In this example, aqueous droplet 130 can be transported using droplet operations along the line of larger droplet operations electrodes 118 without being immobilized. Namely, in this example, because of the small area of hydrophilic regions 1310 with respect to the droplet operations electrodes 118, electrowetting forces are able to overcome the attraction of aqueous droplet 130 to hydrophilic regions 1310.

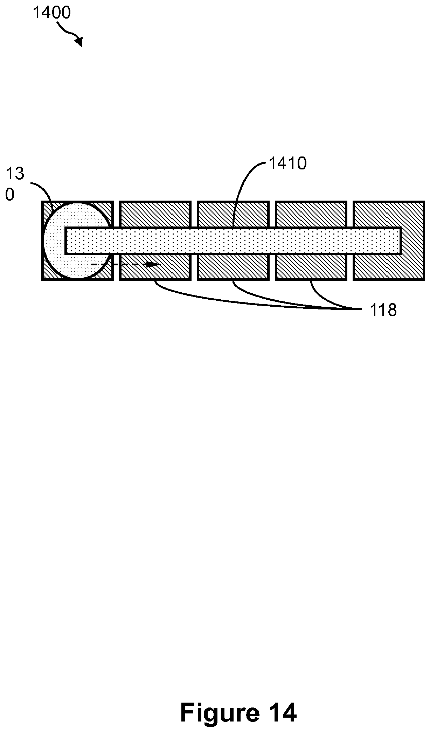

**Figure 14** illustrates a top view of an example of an electrode arrangement 1400 in which a narrow elongated hydrophilic region 1410 is provided in relation to a line of larger droplet operations electrodes 118. In one example, the narrow elongated hydrophilic region 1410 is provided on the top substrate of the droplet actuator and the droplet operations electrodes 118 are provided on the bottom substrate of the droplet actuator. In this example, aqueous droplet 130 can be transported using droplet operations along the line of larger droplet operations electrodes 118 and along the length of the narrow elongated hydrophilic region 1410 without being immobilized. Namely, in this example, because of the small area of hydrophilic region 1410 with respect to the droplet operations electrodes 118, electrowetting forces are able to overcome the attraction of aqueous droplet 130 to hydrophilic region 1410.

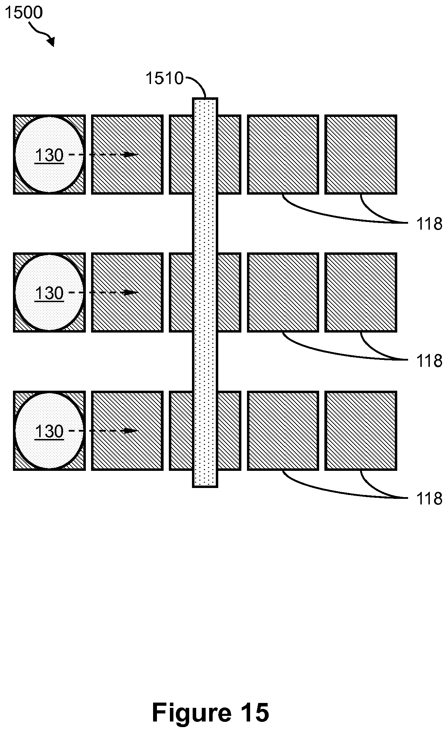

**Figure 15** illustrates a top view of an example of an electrode arrangement 1500 in which a single narrow elongated hydrophilic region 1510 traverses multiple lines of larger droplet operations electrodes 118. By way of example, Figure 15 shows hydrophilic region 1510 traversing three lines or lanes of droplet operations electrodes 118. In one example, hydrophilic region 1510 is provided on the top substrate of the droplet actuator and the droplet operations electrodes 118 are provided on the bottom substrate of the droplet actuator. In this example, aqueous droplets 130 can be transported using droplet operations along the lines of larger droplet operations electrodes 118 and across the length of the narrow elongated hydrophilic region 1510 without being immobilized. In another example, **Figure 16** shows an electrode arrangement 1600 that is substantially the same as electrode arrangement 1500 of Figure 15 except that the single narrow elongated hydrophilic region 1510 is segmented into multiple narrow hydrophilic regions 1610.

The electrode arrangements shown in Figures 13, 14, 15, and 16 may allow (1) more efficient volume utilization of reagents and/or wash buffers, (2) sample multiplexing, and (3) electrowetting forces to overcome the attraction of aqueous droplets to hydrophilic regions.

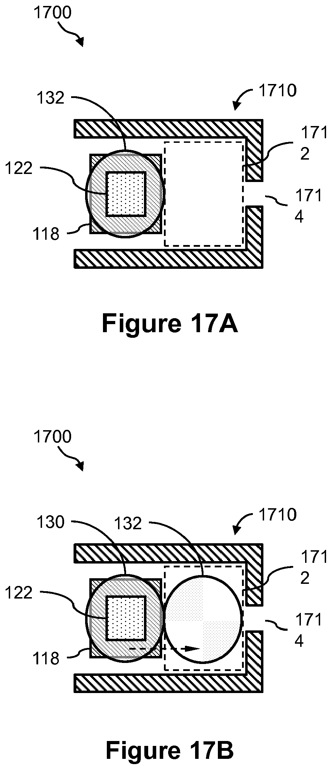

**Figures 17A, 17B****,** **18A, 18B****,** **19A, 19B****,** **20A, and 20B** show examples of mechanisms for retaining displacement droplet 132 in proximity to hydrophilic region 122 when displaced therefrom.

Figures 17A and 17B show a plan view of an electrode arrangement 1700 that includes a small hydrophilic region 122 in relation to a larger droplet operations electrode 118. The small hydrophilic region 122 and the larger droplet operations electrode 118 can be on the same or on different substrates. Further, the droplet operations electrode 118 of electrode arrangement 1700 may be at the end of a line or lane of other droplet operations electrodes 118 (not shown). A barrier 1710 is provided in relation to the droplet operations electrode 118 and hydrophilic region 122. Barrier 1710 is used to retain, for example, displacement droplet 132 when it is displaced from the droplet operations electrode 118. For example, Figure 17A shows displacement droplet 132 parked at hydrophilic region 122. Figure 17B shows aqueous droplet 130 that has been transported using droplet operations to the droplet operations electrode 118 and hydrophilic region 122, thereby displacing displacement droplet 132 away from the droplet operations electrode 118 and into a retention zone 1712 of barrier 1710. When aqueous droplet 130 is transported away from hydrophilic region 122, displacement droplet 132 will return to the droplet operations electrode 118. An opening 1714 may be provided in barrier 1710 that allows filler fluid to flow in and out of retention zone 1712.

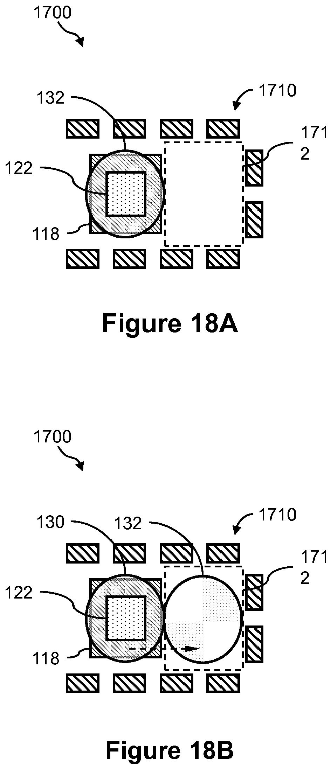

Figures 18A and 18B show another example of electrode arrangement 1700, wherein instead of barrier 1710 being solid and having one opening 1714, barrier 1710 is porous (i.e., has multiple openings).

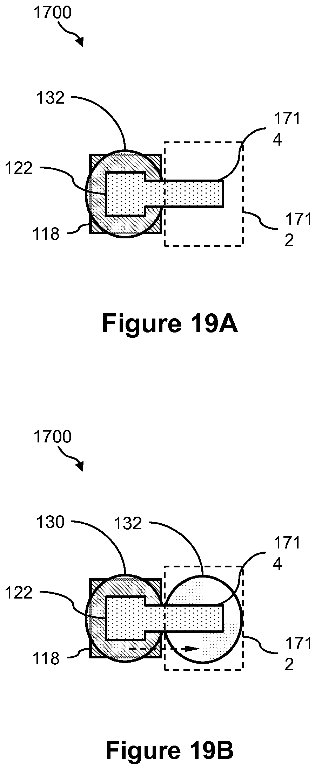

Figures 19A and 19B show yet another example of electrode arrangement 1700, wherein instead using barrier 1710 to retain displacement droplet 132 when displaced from the droplet operations electrode 118, a hydrophilic protrusion 1714 is provided. Namely, hydrophilic protrusion 1714 extents from one side of displacement droplet 132 and into retention zone 1712.

Again, Figure 19A shows displacement droplet 132 parked at hydrophilic region 122. Figure 19B shows aqueous droplet 130 that has been transported using droplet operations to the droplet operations electrode 118 and hydrophilic region 122, thereby displacing displacement droplet 132 away from the droplet operations electrode 118, along hydrophilic protrusion 1714, and into retention zone 1712. Hydrophilic protrusion 1714 is designed to retain displacement droplet 132 in retention zone 1712 by preventing displacement droplet 132 from drifting away from the droplet operations electrode 118.

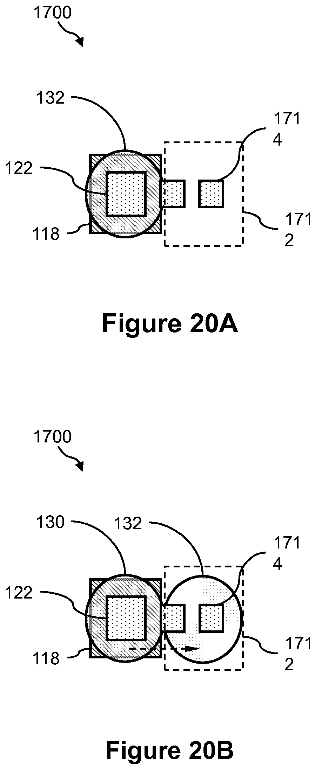

Figures 20A and 20B show still another example of electrode arrangement 1700. In this example, electrode arrangement 1700 is substantially the same as electrode arrangement 1700 shown in Figures 19A and 19B, except that hydrophilic protrusion 1714 is segmented instead of being continuous. The gaps between the segments of hydrophilic protrusion 1714 are designed to prevent aqueous droplet 130 from drifting out onto hydrophilic protrusion 1714 along with displacement droplet 132.

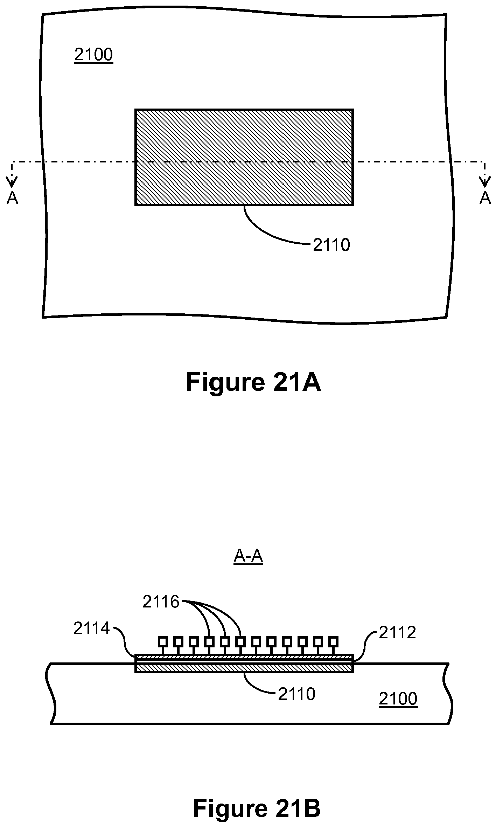

**Figure 21A** illustrates a plan view of an example of a hydrophilic region formed of metal. For example, Figure 21A shows a bottom substrate 2100 of a droplet actuator (not shown) that includes a metal hydrophilic region 2110. **Figure 21B** illustrates a cross-sectional view of the bottom substrate 2100 taken along line A-A of Figure 21A. In one example, the metal hydrophilic region 2110 is a gold pad formed on the bottom substrate 2100, which is a printed circuit board (PCB). Accordingly, the metal hydrophilic region 2110 can be formed using standard PCB fabrication processes. Electrically, the metal hydrophilic region 2110 may be left open or floating, meaning that it is not electrically connected to ground or to a voltage.

Once the PCB is fabricated, any coatings present on the gold pad that forms the metal hydrophilic region 2110 can be stripped away to expose the bare surface of the gold pad. Then, the surface of the metal hydrophilic region 2110 is prepared for surface chemistry for sequencing. For example and referring now to Figure 21B, the surface of the metal hydrophilic region 2110 facing the droplet operations gap is silanized to form a silanized layer 2112. Atop the silanized layer 2112 is a hydrogel layer 2114 that includes certain graft primers 2116. In this way, a sequencing surface can be formed easily on a PCB.

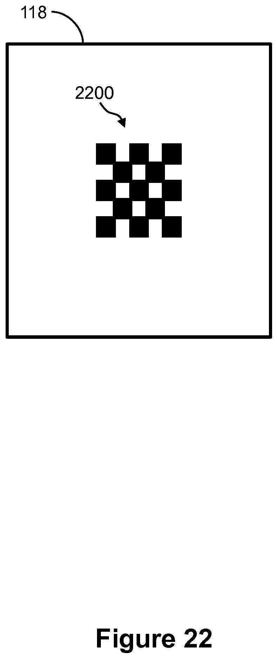

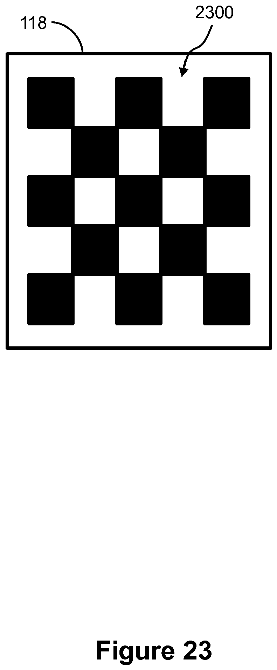

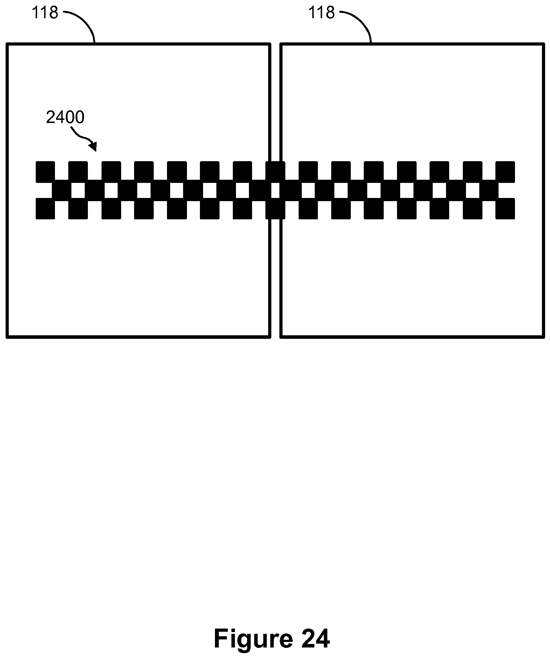

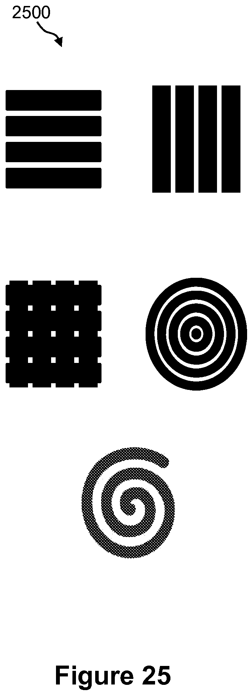

**Figures 22****,** **23****,** **24** **and** **25** illustrate plan views of examples of patterned hydrophobic regions in relation to the footprint of the droplet operations electrodes 118. The patterned hydrophobic regions can be on the top substrate, the bottom substrate, or both the top and bottom substrates of a droplet actuator. For example, Figure 22 shows a patterned hydrophobic region 2200 in relation to one droplet operations electrode 118. The patterned hydrophobic region 2200 is a checkerboard pattern that is substantially smaller than the footprint of the droplet operations electrode 118. By contrast, Figure 23 shows a patterned hydrophobic region 2300, which is also a checkerboard pattern, that is substantially coextensive with the footprint of the droplet operations electrode 118. Figure 24 shows a patterned hydrophobic region 2400, which is an example of a checkerboard pattern that spans two droplet operations electrodes 118. Further, the patterned hydrophobic regions are not limited to checkerboard patterns. The patterned hydrophobic regions can take on a variety of shapes, such as those shown in Figure 25. For example, Figure 25 shows five different patterns 2500-a pattern of horizontal bars, a pattern of vertical bars, a crisscross or hatched pattern, a pattern of concentric circles, and a spiral pattern.

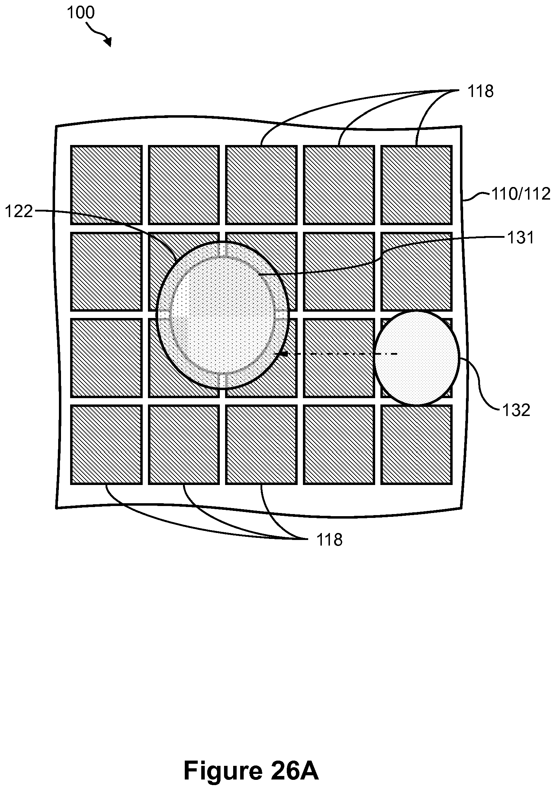

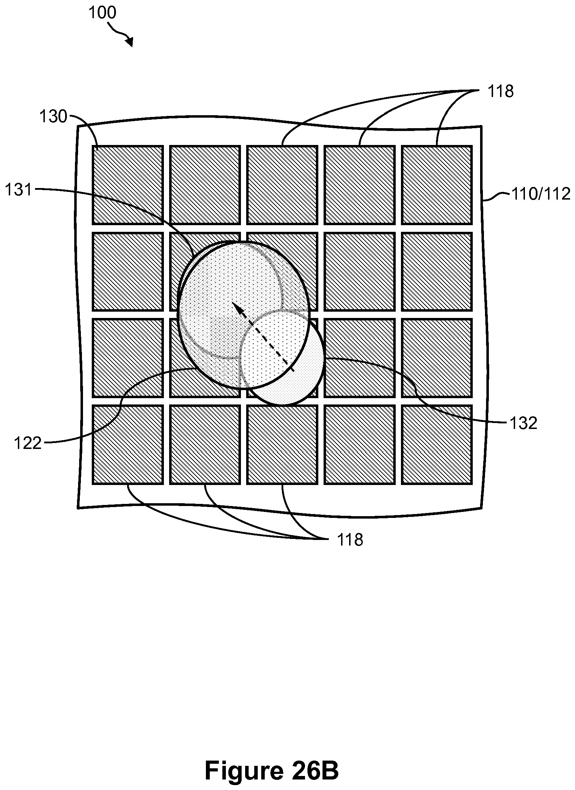

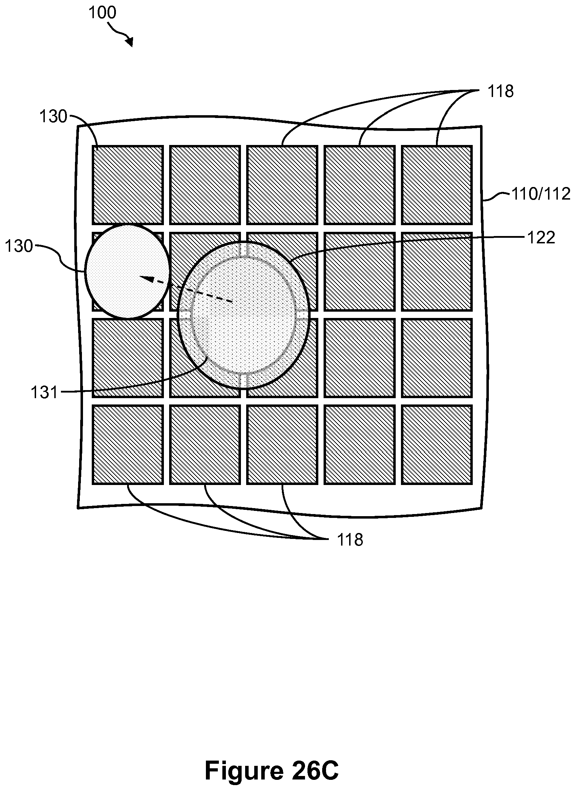

**Figures 26A****,** **26B****, and** **26C** show a grid or array of droplet operations electrodes 118 in droplet actuator 100 and a process of displacing an aqueous liquid 131 away from hydrophilic region 122. In this example, hydrophilic region 122 is circular or disk-shaped and is sized to overlap a portion of multiple (e.g., four) droplet operations electrodes 118. A volume or column of aqueous liquid 131 may be trapped at hydrophilic region 122 because of the attraction of aqueous liquid 131 to the hydrophilic region 122. Aqueous liquid 131 can be, for example, sample liquid, reagent, and/or wash buffer solution. One method of moving aqueous liquid 131 away from hydrophilic region 122 is by displacement.

For example, Figure 26A shows a displacement droplet 132, which is, for example, an aqueous droplet of the same or different liquid as aqueous liquid 131, being transported toward one side of hydrophilic region 122 using droplet operations. Figure 26B shows displacement droplet 132 coming into contact and merging with aqueous liquid 131 at hydrophilic region 122. In so doing, an aqueous droplet 130 is pulled via droplet operations from the opposite side of hydrophilic region 122, as shown in Figure 26C, and carried away using droplet operations. The original volume of the displacement droplet 132 is now retained at hydrophilic region 122 and becomes aqueous liquid 131, replacing the original aqueous liquid 131.

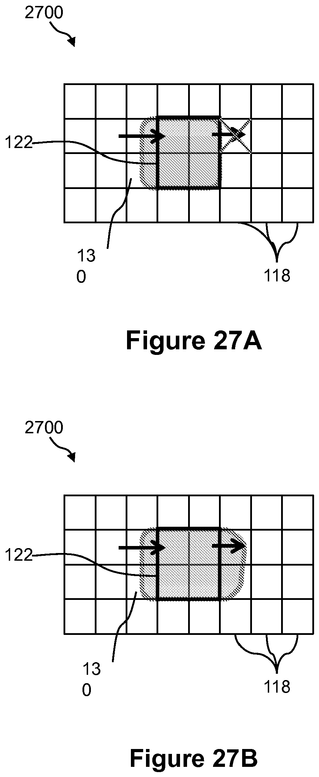

**Figures 27A and 27B** illustrate plan views of an electrode arrangement 2700, which is a grid of droplet operations electrodes 118. Figures 27A and 27B also shows hydrophilic region 122 in relation to droplet operations electrodes 118. In this example, hydrophilic region 122 can be on top substrate 112 (not shown) and droplet operations electrodes 118 are on bottom substrate 110 (not shown). Hydrophilic region 122 is sized, for example, to span four droplet operations electrodes 118. For example, hydrophilic region 122 spans a 2 x 2 arrangement of droplet operations electrodes 118 within the larger grid of droplet operations electrodes 118.

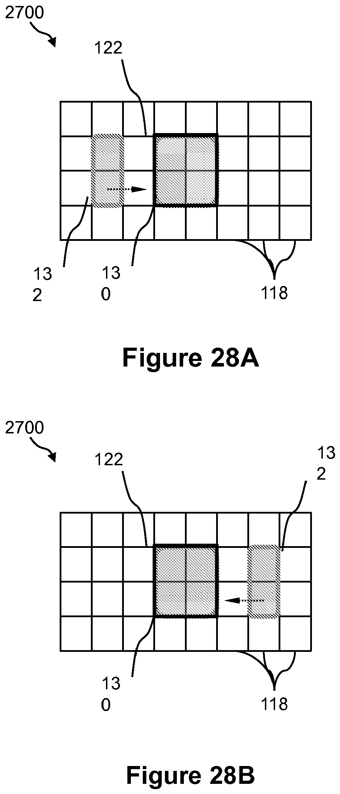

Figure 27A shows aqueous droplet 130 having a certain volume, wherein this volume is sufficient to fill the area underneath hydrophilic region 122 without substantially flooding into surrounding regions. In this example, it may be difficult to transport aqueous droplet 130 away from hydrophilic region 122 using droplet operations. However, if the volume of aqueous droplet 130 is sufficient to both fill the area underneath hydrophilic region 122 and flood into surrounding regions, it becomes possible to transport aqueous droplet 130 away from hydrophilic region 122 using droplet operations. This is shown in Figure 27B. Thus, in one embodiment, a method of transporting aqueous droplet 130 away from hydrophilic region 122 comprises providing the droplet with sufficient volume to cause it to overflow into electrowetting regions adjacent to hydrophilic region 122. In one example, this can be accomplished by providing a sufficiently large starting volume. In another example, this can be accomplished by adding volume to aqueous droplet 130 to aid in removing it from hydrophilic region 122, an example of which is shown herein below in Figures 28A and 28B.

For example, **Figures 28A and 28B** show how additional liquid (e.g., liquid 132) can be added to aqueous droplet 130 in order to enable it to be transported away from hydrophilic region 122. Namely, liquid 132 can be transported into contact with aqueous droplet 130, which is at hydrophilic region 122, from any direction along the grid of droplet operations electrodes 118.

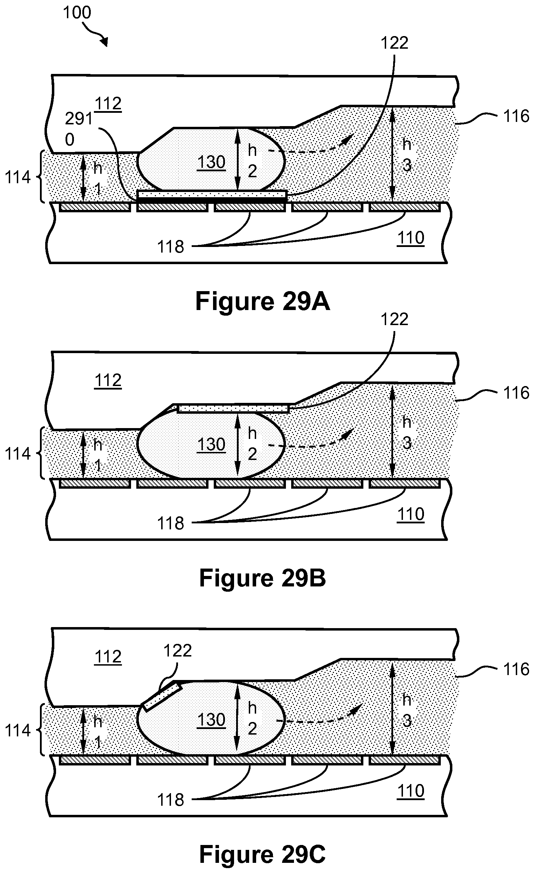

**Figures 29A, 29B, and 29C** illustrate a side view of a portion of droplet actuator 100 that includes varying gap heights to create a pumping effect for removing an aqueous liquid from hydrophilic region 122. Referring now to Figure 29A, hydrophilic region 122 is atop bottom substrate 110; for example, atop two droplet operations electrodes 118. A dielectric layer 2910 is provided between the two droplet operations electrodes 118 and hydrophilic region 122 to ensure electrical isolation therebetween. On the side of top substrate 112 facing the droplet operations gap 114, the topology or contour of top substrate 112 transitions from a gap height h1, to a gap height h2, and then to a gap height h3. The gap height h1 is the smallest gap height. Namely, the gap height h2 is greater than the gap height h1. The gap height h3 is yet greater than the gap height h2. The surface of top substrate 112 has a first slope at the transition of gap height h1 to gap height h2 and a second slope at the transition of gap height h2 to gap height h3, as shown. The portion of droplet actuator 100 having the gap height h3 can be, for example, a waste reservoir.

Hydrophilic region 122 is located at the portion of droplet actuator 100 that has the gap height h2. In this example, the two changes in gap height are used to create a pumping effect to assist in pulling aqueous droplet 130 off of hydrophilic region 122 and into, for example, the waste reservoir. For example, the first change in gap height (i.e., the portion of droplet actuator 100 that transitions from gap height h1 to gap height h2) is used to induce a pumping effect at the surface of hydrophilic region 122 rather than for removing it off of hydrophilic region 122. The second change in gap height (i.e., the portion of droplet actuator 100 that transitions from gap height h2 to gap height h3) is used to induce the pumping effect for pulling aqueous droplet 130 off of hydrophilic region 122 and into, for example, the waste reservoir, which has the gap height h3.

In other embodiments and referring now to Figure 29B, hydrophilic region 122 can be on the top substrate 122 at the portion of droplet actuator 100 having the gap height h2. In yet other embodiments and referring now to Figure 29C, hydrophilic region 122 can be on the top substrate 122 at the sloped region that transitions from gap height h1 to gap height h2. In still other embodiments, hydrophilic region 122 can be in both the locations shown in Figure 29B and Figure 29C.

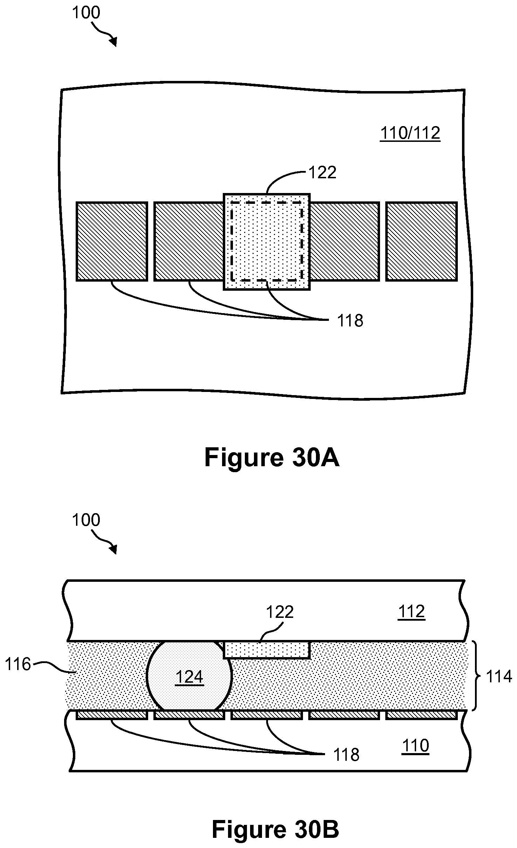

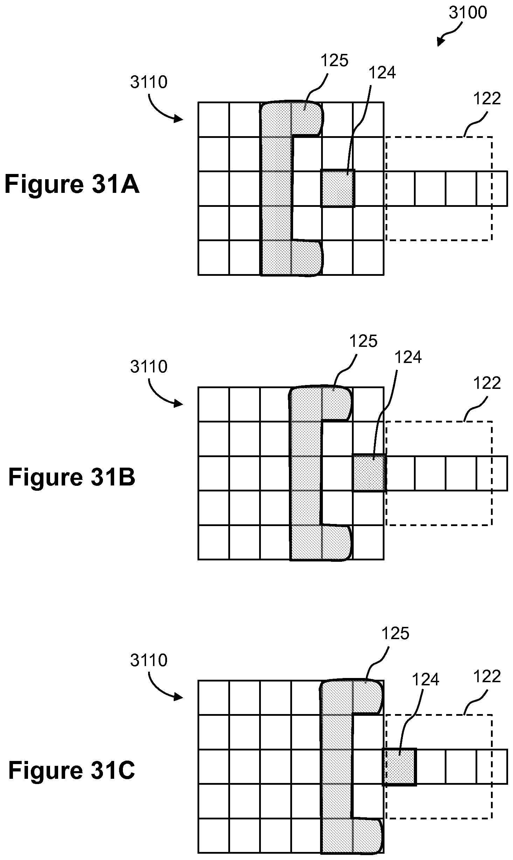

**Figures 30A and 30B** illustrate a plan view and a side view, respectively, of a region of droplet actuator 100 that includes hydrophilic region 122 on top substrate 112. In one example, hydrophilic region 122 is formed of glass. The glass can be, for example, a glass slide or microscope coverslip. While examples of solutions for removing a droplet from hydrophilic region 122 have been described with reference to Figure 1A through Figure 25, Figures 30A and 30B show the difficulty of transport underneath hydrophilic region 122 and onto hydrophilic region 122. In this example, hydrophilic region 122 protrudes into droplet operations gap 114, thereby creating an obstruction in droplet operations gap 114. For example, Figure 30B shows droplet 124 butted against and possibly trapped against the leading edge of hydrophilic region 122. Consequently, it may be difficult to transport droplet 124 underneath hydrophilic region 122 and onto hydrophilic region 122 using droplet operations. Accordingly, methods or apparatuses are described herein below in Figures 31A through 36 for moving a droplet onto hydrophilic region 122.

**Figures 31A, 31B, and 31C** illustrate top views of an electrode arrangement 3100 and a process of using a large-volume droplet to move a small-volume droplet without applying droplet operations to the small-volume droplet. For example, electrode arrangement 3100 includes a set of reservoir electrodes 3110. Reservoir electrodes 3110 are, for example, multiple individually controlled electrodes that are arranged in a grid pattern. Reservoir electrodes 3110 may be associated with, for example, an on-actuator reservoir (not shown). Leading away from one side of reservoir electrodes 3110 is an arrangement of droplet operations electrodes 118 onto which droplets 124 can be dispensed. Further, hydrophilic region 122 is provided at droplet operations electrodes 118. Namely, the edge of hydrophilic region 122 abuts the edge of reservoir electrodes 3110, thereby creating a hydrophobic-hydrophilic boundary that droplets 124 must cross over.

Using droplet operations, within the on-actuator reservoir (not shown), droplet 124 is split off from a larger volume of liquid 125 that is atop reservoir electrodes 3110. However, once droplet 124 is split off from the larger volume of liquid 125, droplet 124 is then moved along reservoir electrodes 3110, across the hydrophobic-hydrophilic boundary, and onto droplet operations electrodes 118 using a pumping action, not by using droplet operations. For example, using droplet operations, the larger volume liquid 125 is spread out across reservoir electrodes 3110, as shown, and then transported toward hydrophilic region 122 in step-by-step fashion, as shown in Figures 31A, 31B, and 31C. Because there is filler fluid (not shown) between liquid 125 and droplet 124, the motion of the large-volume liquid 125 moves the filler fluid, which then moves the droplet 124. That is, a pumping effect can be created in the filler fluid using the large-volume liquid 125.

Using this method, droplet 124 can be transported onto hydrophilic region 122 without applying droplet operations directly to droplet 124. Instead, droplet operations are being applied to the nearby liquid 125 in a manner to cause movement in the filler fluid. The movement in the filler fluid is used to nudge the droplet 124 across the hydrophobic-hydrophilic boundary and into hydrophilic region 122. Once atop droplet operations electrodes 118, droplet 124 can be manipulated using droplet operations.

In other embodiments, the pumping effect can be accomplished mechanically. For example, the large-volume liquid 125 can be replaced with a mechanical component that nudges droplet 124 along.

In yet other embodiments, for small hydrophilic patches, the pumping effect can be used to nudge a droplet onto the hydrophilic patch and then to nudge the droplet off of the hydrophilic patch.

In yet other embodiments, the pumping effect is used to serially nudge several droplets onto the hydrophilic patch, thereby accumulating droplets on the hydrophilic patch.

In still other embodiments, an immersion oil droplet can be used push the aqueous droplet onto the hydrophilic surface. Thus, the immersion oil droplet can be used to push the droplet onto and/or off of the hydrophilic surface.

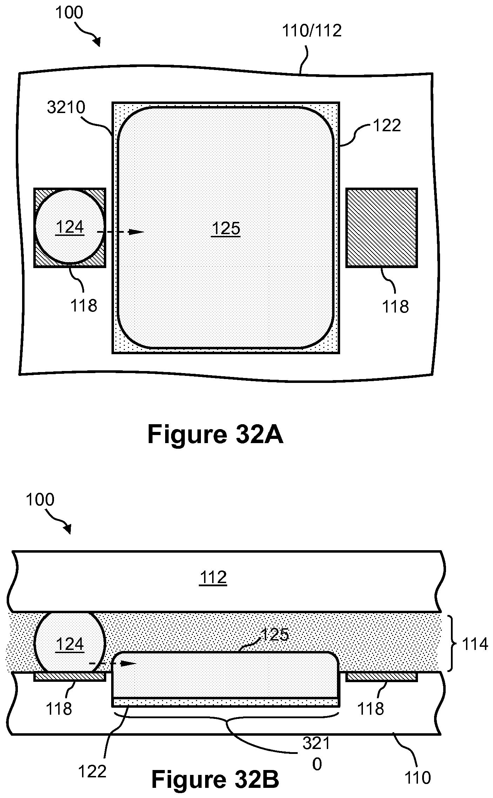

**Figures 32A and 32B** illustrate a top view and side view, respectively, of droplet actuator 100 that includes hydrophilic region 122 installed in a recessed region for assisting droplets onto hydrophilic region 122. Whereas Figure 4 shows a recessed region in top substrate 112, in this example, a recessed region 3210 is formed in bottom substrate 110. Hydrophilic region 122 is installed in recessed region 3210. Recessed region 3210 and hydrophilic region 122 are sized to hold a volume of liquid 125 inside of recessed region 3210. Namely, a plurality of droplets 124 can be transported in succession into recessed region 3210 using droplet operations to accumulate a larger volume of liquid 125 atop hydrophilic region 122.

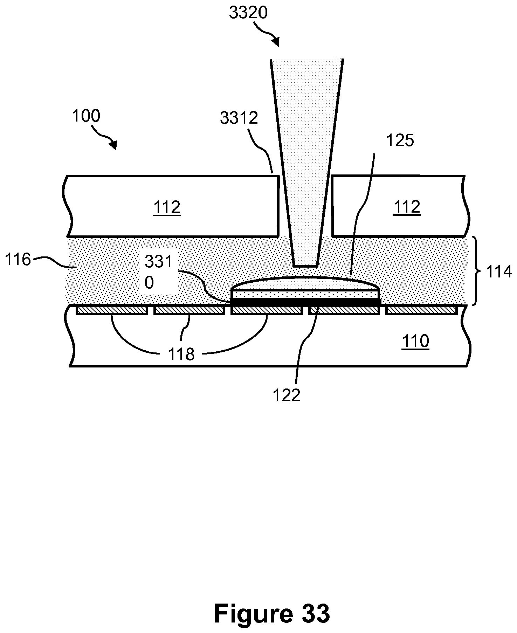

**Figure 33** illustrates a side view of droplet actuator 100 and an example of pre-filling the surface of hydrophilic region 122 with liquid in order to make it easier to transport a droplet onto the hydrophilic surface. In this example, hydrophilic region 122 is atop bottom substrate 110; for example, atop two droplet operations electrodes 118. A dielectric layer 3310 is provided between the two droplet operations electrodes 118 and hydrophilic region 122 to ensure electrical isolation therebetween. Further, an opening 3312 is provided in top substrate 112. Opening 3312 is substantially aligned with hydrophilic region 122. Opening 3312 is used to allow an external source of liquid to pre-fill or pre-wet the surface of hydrophilic region 122 in order to make it easier to transport a droplet onto the hydrophilic surface. In one example, a pipette, such as a pipette 3320, can be used to pre-wet the surface of hydrophilic region 122 with liquid 125. In another example, a fluid reservoir in top substrate 112 can be used to continually or periodically wet the surface of hydrophilic region 122.

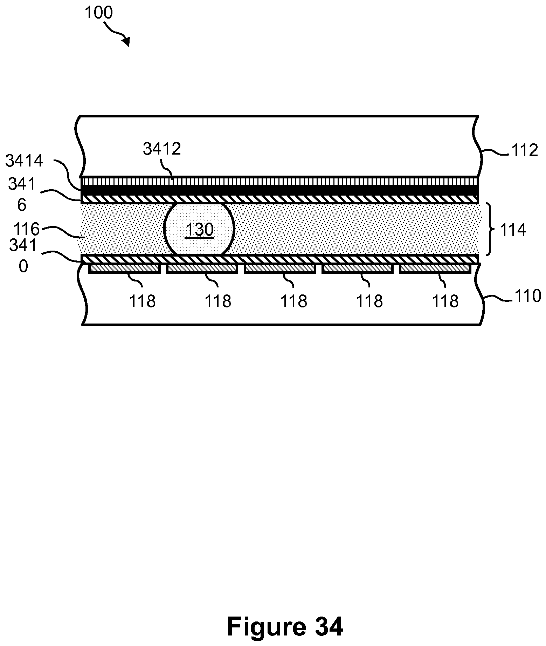

**Figure 34** illustrates a side view of an embodiment of droplet actuator 100 that is designed to create a droplet operations effect (or electrowetting effect) on top substrate 112 using electrodes on bottom substrate 110. For example, to create an electrowetting effect on top substrate 112 using droplet operations electrodes 118 on bottom substrate 110, a dielectric layer is present on top substrate 112. Accordingly, Figure 34 shows droplet operations electrodes 118 on bottom substrate 110, wherein droplet operations electrodes 118 are coated with a hydrophobic layer 3410. Top substrate 112 includes a ground reference plane or electrode 3412, then a dielectric layer 3414, which is coated with a hydrophobic layer 3416. Whereas typically a droplet actuator includes a dielectric layer atop the droplet operations electrodes on the bottom substrate, in this embodiment there is no dielectric layer on the droplet operations electrodes on the bottom substrate. Instead, the dielectric layer is on the top substrate.

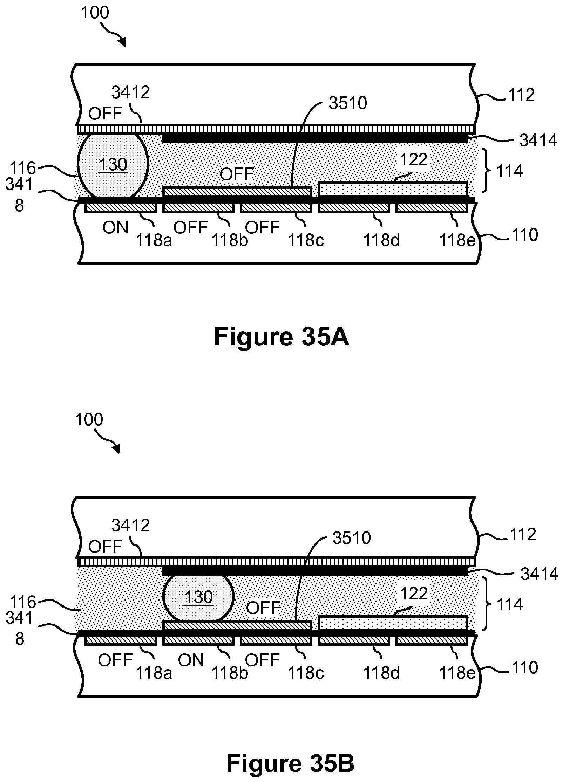

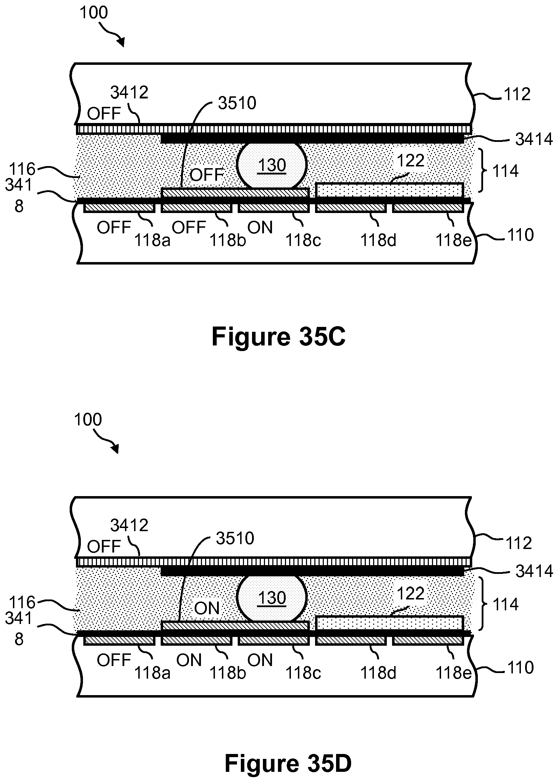

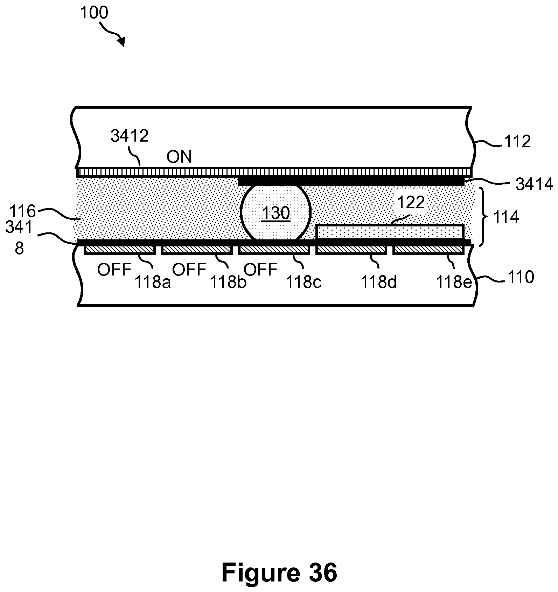

In a droplet actuator that includes a hydrophilic surface, patch, or region, such as hydrophilic region 122, the capability to impart an electrowetting effect on the top substrate using electrodes on the bottom substrate may be useful to assist in transporting the droplet onto the hydrophilic surface. Namely, if both substrates are behaving in a hydrophilic manner, the droplet may be more likely to flow between them. Examples of droplet actuator 100 that includes hydrophilic region 122 and that is configured to impart an electrowetting effect on top substrate 112 using droplet operations electrodes 118 on bottom substrate 110 are described herein below with reference to Figures 35A, 35B, 35C, 35D, and 36.

**Figures 35A, 35B****,** **35C, and 35D** illustrate side views of droplet actuator 100 that includes dielectric layer 3414 on top substrate 112 to impart an electrowetting effect on top substrate 112 using electrodes on bottom substrate 110 to assist in transporting droplets atop hydrophilic region 122.

In this example, five droplet operations electrodes 118 are shown on bottom substrate 110; namely, droplet operations electrodes 118a, 118b, 118c, 118d, and 118e. Further, a dielectric layer 3418 is provided atop droplet operations electrodes 118. Hydrophilic region 122 is provided atop dielectric layer 3418 on bottom substrate 110. Hydrophilic region 122 spans, for example, droplet operations electrodes 118d and 118e. Additionally, a droplet operations electrode 3510 is provided near the edge of hydrophilic region 122; namely, atop droplet operations electrodes 118b and 118c, as shown. Dielectric layer 3410 ensures electrical isolation between droplet operations electrodes 118 and hydrophilic region 122 and between droplet operations electrodes 118 and droplet operations electrode 3510. Droplet operations electrodes 118 and droplet operations electrode 3510 of bottom substrate 110 may be coated with a hydrophobic layer, such as hydrophobic layer 3410 of Figure 34, which is not shown.

Top substrate 112 includes ground reference plane or electrode 3412 and dielectric layer 3414. Dielectric layer 3414 of top substrate 112 may be coated with a hydrophobic layer, such as hydrophobic layer 3416 of Figure 34, which is not shown. In this example, dielectric layer 3414 is provided only in the vicinity of droplet operations electrode 3510 and hydrophilic region 122. Namely, dielectric layer 3414 spans droplet operations electrode 3510 and hydrophilic region 122, as shown.

In Figures 35A, 35B, 35C, and 35D, "OFF" means the electrode is set to the reference ground voltage. "ON" means the electrode is at any voltage that is different from the ground reference voltage, which leads to voltage potential between two electrodes. Throughout the process shown and describes in Figures 35A, 35B, 35C, and 35D, the ground reference plane or electrode 3412 is OFF.

Figures 35A, 35B, 35C, and 35D show an electrode sequence to assist in transporting droplets, such as aqueous droplet 130, atop hydrophilic region 122. For example and referring now to Figure 35A, droplet operations electrode 118a is ON, droplet operations electrodes 118b, 118c, 118d, and 118e are OFF, and droplet operations electrode 3510 is OFF. As a result, aqueous droplet 130 sits atop droplet operations electrode 118a.

Next, and referring now to Figure 35B, with droplet operations electrode 3510 remaining OFF, droplet operations electrode 118b is ON and droplet operations electrodes 118a, 118c, 118d, and 118e are OFF. As a result, aqueous droplet 130 moves to droplet operations electrode 118b.

Next, and referring now to Figure 35C, with droplet operations electrode 3510 remaining OFF, droplet operations electrode 118c is ON and droplet operations electrodes 118a, 118b, 118d, and 118e are OFF. As a result, aqueous droplet 130 moves to droplet operations electrode 118c, which is near the edge of hydrophilic region 122.

Next, and referring now to Figure 35D, droplet operations electrode 3510 is now ON. Further, both droplet operations electrodes 118b and 118c beneath droplet operations electrode 3510 are ON. In so doing, an electrowetting effect is imparted on top substrate 112 that may be useful to assist in transporting aqueous droplet 130 onto the surface of hydrophilic region 122.
In other embodiments of the droplet actuator 100 shown in Figures 35A, 35B, 35C, and 35D, which includes dielectric layer 3414 on top substrate 112, whereby an electrowetting effect can be imparted to top substrate 112 using electrodes on bottom substrate 110, there is not a continuous ground reference plane or electrode 3412. Instead, the droplet is in contact with a ground before and/or after transport only. Namely, the droplet is in contact with ground between droplet operations electrodes 118, but not when atop droplet operations electrodes 118.
In other embodiments, ground reference plane or electrode 3412 on top substrate 112 is provided on the droplet operations gap 114-side of dielectric layer 3414. In yet other embodiments, the ground is provided on bottom substrate 110. For example, a grid of ground wires is provided on bottom substrate 110 between or overlapping the droplet operations electrodes 118. In yet other embodiments, the ground is situated between the top and bottom substrates; namely, the ground is provided in the droplet operations gap 114.
In still other embodiments of the droplet actuator 100 shown in Figures 35A, 35B, 35C, and 35D, droplet operations electrode 3510 is omitted, as shown in **Figure 36**. In this embodiment, in order to allow electrowetting on top substrate 112, the ground reference plane or electrode 3412 is ON.
Referring again to Figure 1A through Figure 36, certain detector configurations can be used in conjunction with the presently disclosed hydrophilic regions according, for example, to Shen et al, U.S. Patent Pub. No. 20130116128, entitled "Integrated sequencing apparatuses and methods of use," published on May 9, 2013.

A particularly useful application of the apparatus and methods set forth herein is nucleic acid sequencing, such as a sequencing-by-synthesis (SBS) technique. Briefly, SBS can be initiated by contacting a target nucleic acid with one or more labeled nucleotides, DNA polymerase, etc. One or more different species of target nucleic acids can be attached to a hydrophilic surface or other solid phase substrate set forth herein and reagents can be delivered to the one or more target nucleic acids using the droplet manipulation steps set forth herein. For example, different species of target nucleic acids can be attached at different features on the surface or substrate. Those features where a primer is extended using the target nucleic acid as template will incorporate a labeled nucleotide that can be detected. Optionally, the labeled nucleotides can further include a reversible termination property that terminates further primer extension once a nucleotide has been added to a primer. For example, a nucleotide analog having a reversible terminator moiety can be added to a primer such that subsequent extension cannot occur until a deblocking agent is delivered to remove the moiety. Thus, for embodiments that use reversible termination, a deblocking reagent can be delivered to the features where extended primer is located (before or after detection occurs). Wash droplets can be delivered to the features between the various delivery steps. The cycle can then be repeated n times to extend the primer by n nucleotides, thereby detecting a sequence of length n. Exemplary SBS procedures, detection platforms, detectors and reagents that can be readily adapted for use with an apparatus or method of the present disclosure are described, for example, in Bentley et al., Nature 456:53-59 (2008), Gormley et al., International Patent Pub. No. WO/2013/131962, entitled, "Improved Methods of Nucleic Acid Sequencing," published on September 12, 2013; Kozlov et al., International Patent Pub. No. WO/2008/042067, entitled, "Compositions and Methods for Nucleotide Sequencing," published on April 10, 2008; Rigatti et al., International Patent Pub. No. WO/2013/117595, entitled, "Targeted Enrichment and Amplification of Nucleic Acids on a Support," published on August 15, 2013; Barnes et al., U.S. Patent No. 7,057,026, entitled "Labelled Nucleotides," issued on June 6, 2006; Hardin et al., U.S. Patent No. 7,329,492, entitled "Methods for Real-Time Single Molecule Sequence Determination," issued on February 12, 2008; Hardin et al., U.S. Patent No. 7,211,414, entitled "Enzymatic Nucleic Acid Synthesis: Compositions and Methods for Altering Monomer Incorporation Fidelity," issued on May 1, 2007; Turner et al., U.S. Patent No. 7,315,019, entitled "Arrays of Optical Confinements and Uses Thereof," issued on January 1, 2008; Xu et al., U.S. Patent No. 7,405,281, entitled "Fluorescent Nucleotide Analogs and Uses Therefor," issued on July 29, 2008; and Ranket al., U.S. Patent Pub. No. 20080108082, entitled "Polymerase Enzymes and Reagents for Enhanced Nucleic Acid Sequencing," published on May 8, 2008.

Other sequencing procedures that use cyclic reactions can be used, such as pyrosequencing. Pyrosequencing detects the release of inorganic pyrophosphate (PPi) as particular nucleotides are incorporated into a nascent nucleic acid strand (Ronaghi, et al., Analytical Biochemistry 242(1), 84-9 (1996); Ronaghi, Genome Res. 11(1), 3-11 (2001); Ronaghi et al. Science 281(5375), 363 (1998); Nyren et al., U.S. Patent No. 6,210,891, entitled "Method of Sequencing DNA," issued on April 3, 2001; Nyren, U.S. Patent No. 6,258,568, entitled "Method of Sequencing DNA Based on the Detection of the Release of Pyrophosphate and Enzymatic Nucleotide Degradation," issued on July 10, 2001; and Rothberg et al., U.S. Patent No. 6,274,320, entitled "Method of Sequencing a Nucleic Acid," issued on August 14, 2001. In pyrosequencing, released PPi can be detected by being converted to adenosine triphosphate (ATP) by ATP sulfurylase, and the resulting ATP can be detected via luciferase-produced photons. Thus, the sequencing reaction can be monitored via a luminescence detection system. Excitation radiation sources used for fluorescence based detection systems are not necessary for pyrosequencing procedures. Useful detectors and procedures that can be used for application of pyrosequencing to arrays of the present disclosure are described, for example, in Eltoukhy et al., International Patent Pub. No. WO/2012/058096, entitled "Microdevices and Biosensor Cartridges for Biological or Chemical Analysis and Systems and Methods for the Same," published on March 5, 2012; Chee et al., U.S. Patent Pub. No. 20050191698, entitled "Nucleic Acid Sequencing Using Microsphere Arrays," published on September 1, 2005; El Gamal et al., U.S. Patent No. 7,595,883, entitled "Biological Analysis Arrangement and Approach Therefor," issued on September 29, 2009; and Rothberg et al., U.S. Patent No. 7,244,559, entitled "Method of Sequencing a Nucleic Acid," issued on July 17, 2007.

Sequencing-by-ligation reactions are also useful including, for example, those described in Shendure et al. Science 309:1728-1732 (2005); Brenner, U.S. Patent No. 5,599,675, entitled "DNA sequencing by stepwise ligation and cleavage," issued on February 4, 1997; and Macevicz, U.S. Patent No. 5,750,341, entitled "DNA sequencing by parallel oligonucleotide extensions," issued on May 12, 1998. Some embodiments can include sequencing-by-hybridization procedures as described, for example, in Bains et al., Journal of Theoretical Biology 135(3), 303-7 (1988); Drmanac et al., Nature Biotechnology 16, 54-58 (1998); Fodor et al., Science 251(4995), 767-773 (1995); and Shengrong et al., International Patent Pub. No. WO2012170936, entitled "Patterned flow-cells useful for nucleic acid analysis," published on December 13, 2012. In both sequencing-by-ligation and sequencing-by-hybridization procedures, nucleic acids that are present on a solid support or hydrophilic surface are subjected to repeated cycles of oligonucleotide delivery and detection. Typically, the oligonucleotides are fluorescently labeled and can be detected using fluorescence detectors similar to those described with regard to SBS procedures herein or in references cited herein.

Some embodiments can utilize methods involving the real-time monitoring of DNA polymerase activity. For example, nucleotide incorporations can be detected through fluorescence resonance energy transfer (FRET) interactions between a fluorophore-bearing polymerase and γ-phosphate-labeled nucleotides, or with zeromode waveguides. Techniques and reagents for FRET-based sequencing are described, for example, in Levene et al. Science 299, 682-686 (2003); Lundquist et al. Opt. Lett. 33, 1026-1028 (2008); Korlach et al. Proc. Natl. Acad. Sci. USA 105, 1176-1181 (2008).

Some SBS embodiments include detection of a proton released upon incorporation of a nucleotide into an extension product. For example, sequencing based on detection of released protons can use an electrical detector and associated techniques that are commercially available from Ion Torrent (Guilford, CT, a Life Technologies subsidiary) or sequencing methods and systems described in Rothberg et al., U.S. Patent Pub. No. 20090026082, entitled "Methods and apparatus for measuring analytes using large scale FET arrays," published on January 29, 2009; Rothberg et al., U.S. Patent Pub. No. 20090127589, entitled "Methods and apparatus for measuring analytes using large scale FET arrays," published on May 21, 2009; Rothberg et al., U.S. Patent Pub. No. 20100137143, entitled "Methods and Apparatus for Measuring Analytes," published on June 3, 2010; and Rothberg et al., U.S. Patent Pub. No. 20100282617, entitled "Methods and Apparatus for Detecting Molecular Interactions Using FET Arrays," published on November 11, 2010.

Another useful application for an array of the present disclosure is gene expression analysis. Gene expression can be detected or quantified using RNA sequencing techniques, such as those, referred to as digital RNA sequencing. RNA sequencing techniques can be carried out using sequencing methodologies known in the art such as those set forth above. Gene expression can also be detected or quantified using hybridization techniques carried out by direct hybridization to an array or using a multiplex assay, the products of which are detected on an array. Such an array can be present at a hydrophilic surface or other solid support set forth herein. An array can also be used to determine genotypes for a genomic DNA sample from one or more individual. Exemplary methods for array-based expression and genotyping analysis that can be carried out using a method or apparatus of the present disclosure are described in Oliphant et al., U.S. Patent No. 7,582,420, entitled "Multiplex Nucleic Acid Reactions," issued on September 1, 2009; Fan et al., U.S. Patent No. 6,890,741, entitled "Multiplexed Detection of Analytes," issued on May 10, 2005; Stuelpnagel et al., U.S. Patent No. 6,913,884, entitled "Compositions and Methods for Repetitive Use of Genomic DNA," issued on July 5, 2005; Chee et al., U.S. Patent No. 6,355,431, entitled "Detection of Nucleic Acid Amplification Reactions Using Bead Arrays," issued on March 12, 2002; Gunderson et al., U.S. Patent Pub. No. 20050053980, entitled "Methods and Compositions for Whole Genome Amplification and Genotyping," published on March 10, 2005; Gunderson et al., U.S. Patent Pub. No. 2009/0186349 A1, entitled "Detection of Nucleic Acid Reactions on Bead Arrays," published on July 23, 2009; and Chee et al., U.S. Patent Pub. No. 2005/0181440 A1, entitled "Nucleic Acid Sequencing Using Microsphere Arrays," published on August 18, 2005.

Nucleic acids can be attached to a hydrophilic surface (or hydrophilic region of a surface) and amplified to form a colonies or clusters. A colony or cluster is a type of array feature. Clusters can be created by solid-phase amplification methods. For example, a nucleic acid having one or more template sequences to be detected can be attached to a surface and amplified using bridge amplification. Useful bridge amplification methods are described, for example, in Adessi et al., U.S. Patent No. 7,115,400, entitled "Methods of Nucleic Acid Amplification and Sequencing," issued on October 3, 2006; Adams et al., U.S. Patent No. 5,641,658, entitled "Method for Performing Amplification of Nucleic Acid with Two Primers Bound to a Single Solid Support," issued on June 24, 1997; Kawashima et al., U.S. Patent Pub. No. 2002/0055100 A1, entitled "Method of Nucleic Acid Sequencing," published on May 9, 2002; Mayer et al., U.S. Patent Pub. No. 2004/0096853 A1, entitled "Isothermal Amplification of Nucleic Acids on a Solid Support," published on May 20, 2004; Mayer et al., U.S. Patent Pub. No. 2004/0002090 A1, entitled "Methods for Detecting Genome-wide Sequence Variations Associated with a Phenotype," published on January 1, 2004; Gormley et al., U.S. Patent Pub. No. 20070128624, entitled "Method of Preparing Libraries of Template Polynucleotides," published on June 7, 2007; Schroth et al., U.S. Patent Pub. No. 2008/0009420 A1, entitled "Isothermal Methods for Creating Clonal Single Molecule Arrays," published on January 10, 2008. Another useful method for amplifying nucleic acids on a surface is rolling circle amplification (RCA), for example, as described in Lizardi et al., Nat. Genet. 19:225-232 (1998) and Drmanac et al., U.S. Patent Pub. No. 2007/0099208 A1, entitled "Single Molecule Arrays for Genetic and Chemical Analysis," published on May 3, 2007. Another type of array that is useful is an array of particles produced from an emulsion PCR amplification technique. Examples are described in Dressman et al., Proc. Natl. Acad. Sci. USA 100:8817-8822 (2003); Jian-Bing et al., International Patent Pub. No. WO2012/116331, entitled "Methods and Systems for Haplotype Determination," published on August 30, 2012; Leamonet al., U.S. Patent Pub. No. 2005/0130173 A1, entitled "Methods of Amplifying and Sequencing Nucleic Acids," published on June 16, 2005; and Holliger et al., U.S. Patent Pub. No. 2005/0064460 A1, entitled "Emulsion Compositions," published on March 24, 2005.

Several applications for arrays have been exemplified above in the context of ensemble detection, wherein multiple copies of a target nucleic acid are present at each feature and are detected together. In alternative embodiments, a single nucleic acid, whether a target nucleic acid or amplicon thereof, can be detected at each feature. For example, a feature on a hydrophilic surface can be configured to contain a single nucleic acid molecule having a target nucleotide sequence that is to be detected. Any of a variety of single molecule detection techniques can be used including, for example, modifications of the ensemble detection techniques set forth above to detect the sites at increased resolution or using more sensitive labels. Other examples of single molecule detection methods that can be used are set forth in He et al., U.S. Patent Pub. No. 2011/0312529 A1, entitled "Conformational Probes and Methods for Sequencing Nucleic Acids," published on December 22, 2011; Previte et al., U.S. Patent App. No. 61/578,684, entitled "Apparatus and Methods for Kinetic Analysis and Determination of Nucleic Acid Sequences," filed on December 21, 2011; and Wouter Meuleman, U.S. Patent App. No. 61/540,714, entitled "Continuous Extension and Deblocking in Reactions for Nucleic Acid Synthesis and Sequencing," filed on September 29, 2011.

### 4.2 Variegated-Hydrophilic Surfaces and Digital Fluidics

As described above in Figures 1A through 36, hydrophilic regions, such as hydrophilic region 122, are provided in droplet actuators, such as in droplet actuator 100, for conducting surface-based chemistry. Further, because of the hydrophilic nature of the hydrophilic regions, certain methods and techniques have been described for assisting droplets onto and/or off of the hydrophilic region. However, the present disclosure provides another type of surface that can replace the hydrophilic regions. Specifically, surface-based chemistry can be conducted in droplet actuators using a variegated-hydrophilic surface. As used herein the term "variegated-hydrophilic", when used in reference to a surface, means that portions of the surface are attractive to water and other portions of the surface are repellant to water. The scale of the surface variegation will generally occur within an area of 1 x 10⁴ µm² (i.e. there will be at least one attractive portion and at least one repellant portion within this area). The scale of the surface variegation can be finer, for example, such that there will be at least one attractive portion and at least one repellant portion within an area of at least 1 x 10³ µm², 100 µm², 10 µm², 1 µm², 0.1 µm², or smaller. The scale of the variegation is generally larger than 1 nm² and in some embodiments can be larger than 10 nm², 0.1 µm², 1 µm², or 10 µm². The variegation can form a regular pattern (i.e. having a repeat unit within one or more of the areas exemplified above) or a random pattern (i.e. no repeat unit within one or more of the areas exemplified above). The portion of the surface that is repellant can have a hydrophobic character, such that the surface is variegated-hydrophilic-hydrophobic; or the portion of the surface that is repellant can have a superhydrophobic character, such that the surface is variegated- hydrophilic-superhydrophobic.
A variegated-hydrophilic surface can occur on any of a variety of substrates including, for example, glass, silica, metal or metal oxide such as tantalum oxide. Any of a variety of substrates that are capable of being silanized and functionalized to attach a hydrogel can be used, examples of which are set forth previously herein, in US Pat. App. No. 14/316,478 or in US Pat. App. Pub. No. 2014/0079923 A1.

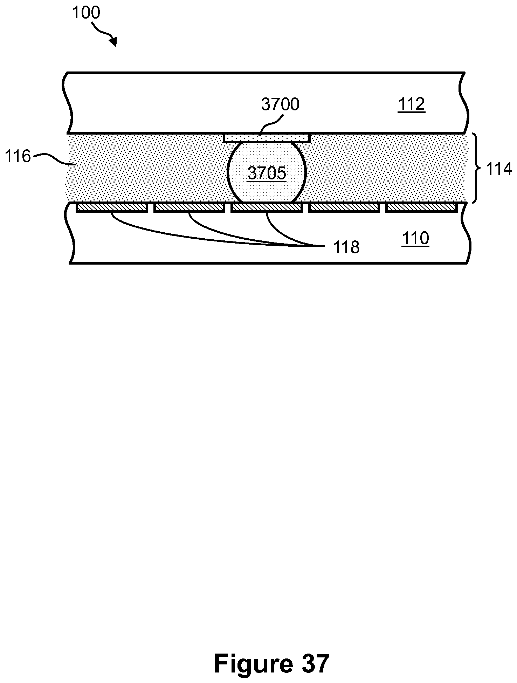

A variegated-hydrophilic surface can be used in place of the hydrophilic regions in the methods and apparatus set forth herein, for example, in regard to Figures 1A through 36. A benefit of using the variegated-hydrophilic surface as compared with the hydrophilic surface, in at least some embodiments, is that droplets can be easily transported onto and/or off of the variegated-hydrophilic surface while still providing a surface for conducting surface-based chemistry. This benefit follows when the droplet has a contact area on the surface that is larger than the scale of the variegation in the attractive and repellant portions of the variegated-hydrophilic surface. Accordingly, the variegated-hydrophilic surface for conducting surface-based chemistry can be easily "dewetted." More details of examples of variegated-hydrophilic surfaces are shown and described hereinbelow with reference to Figures 37 through 46.
**Figure 37** illustrates a cross-sectional view of a portion of droplet actuator 100 that has a variegated-hydrophilic-hydrophobic region 3700 on top substrate 112. Namely, variegated-hydrophilic-hydrophobic region 3700 provides a variegated-hydrophilic-hydrophobic surface on the top substrate 112 and in the droplet operations gap 114 which can be used for conducting surface-based chemistry in droplet actuator 100. Variegated-hydrophilic-hydrophobic region 3700 comprises an arrangement of hydrophilic nanowells that are surrounded by a hydrophobic surface, wherein DNA can be grafted into the hydrophilic nanowells.

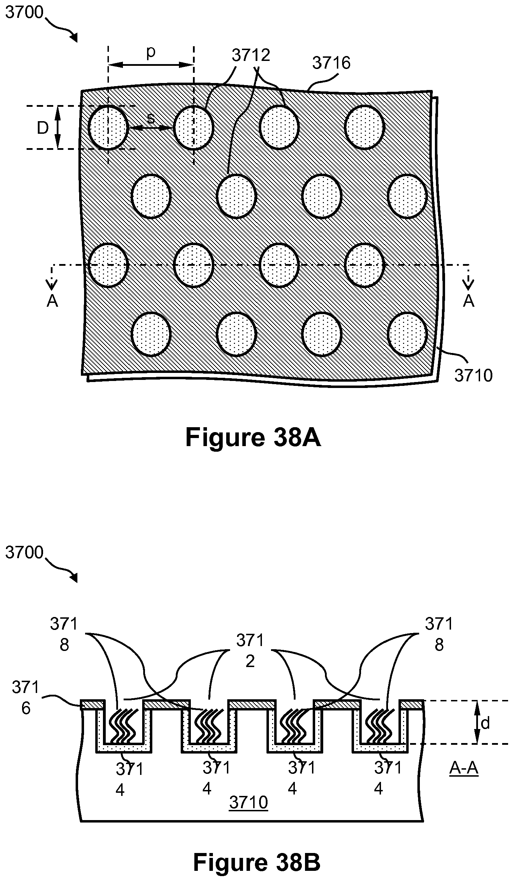

For example, a moiety may be captured on or coupled to the surface of variegated-hydrophilic-hydrophobic region 3700, and reagents may be contacted with the same surface to conduct chemistry, such as chemistry aimed at identifying the captured moiety, or chemistry aimed at building on the captured moiety to synthesize a new moiety. In another example, a nucleic acid may be attached to the surface of variegated-hydrophilic-hydrophobic region 3700 in droplet actuator 100 for conducting surface-based sequencing chemistry. In particular embodiments, the moiety or nucleic acid may be captured or attached at a hydrophilic portion (e.g. at a gel filled nanowell) of the variegated-hydrophilic-hydrophobic. More details of examples of variegated-hydrophilic-hydrophobic region 3700 are shown and described hereinbelow with reference to Figures 38A through 46.

Figure 37 also shows a droplet 3705 in the droplet operations gap 114. In one example, droplet 3705 may include sample and/or reagents for conducting a DNA sequencing reaction at the surface of variegated-hydrophilic-hydrophobic region 3700. In another example, droplet 3705 may include sample and/or reagents for conducting an immunoassay reaction at the surface of variegated-hydrophilic-hydrophobic region 3700. In yet another example, droplet 3705 may include a wash buffer for washing variegated-hydrophilic-hydrophobic region 3700.

**Figures 38A and 38B** illustrate a plan view and a cross-sectional view, respectively, of an example of a portion of variegated-hydrophilic-hydrophobic region 3700 shown in Figure 37. In this example, variegated-hydrophilic-hydrophobic region 3700 comprises a substrate 3710. Substrate 3710 can be, for example, a glass substrate or a CMOS substrate. In one example, substrate 3710 is a silicon dioxide (SiO₂) substrate. Variegated-hydrophilic-hydrophobic region 3700 further comprises a plurality of nanowells 3712 that are patterned into substrate 3710. The inside of nanowells 3712 is coated with a hydrophilic layer 3714 and thereby forming hydrophilic nanowells 3712. The interstitial regions on the surface of substrate 3710 that is outside of nanowells 3712 is coated with a hydrophobic layer 3716. Further, grafted primers 3718 are provided inside each of nanowells 3712. Grafted primers 3718 are the grafted primers that can be used to interact with target nucleic acids, for example, during one or more of capture, amplification, or sequencing of the target nucleic acids.

Hydrophilic layer 3714 inside of nanowells 3712 can be any hydrophilic material suitable for conducting surface-based chemistry in a droplet actuator. In one example, hydrophilic layer 3714 is a polyacrylamide gel coating, such as Poly(N-(5-azidoacetamidylpentyl) acrylamide-co-acrylamide), also known as PAZAM, which can optionally be attached to the well via a norbornene (or norbornylene or norcamphene) moiety. In another example, hydrophilic layer 3714 comprises Poly(N-(5-azidoacetamidylpentyl) acrylamide-co-acrylamide-co-acrylonitrile), also known as PAZAM-PAN. In some embodiments, the PAZAM and/or PAZAM-PAN can be modified to be thermally responsive, thereby forming a thermo-responsive polyacrylamide gel. More details about PAZAM can be found with reference to George et al., U.S. Patent App. No. 13/784,368, entitled "Polymer Coatings," filed on March 4, 2013. It will be understood that other hydrogels or hydrophilic materials can be used as well. Thus, examples set forth herein with regard to PAZAM can be extended to other hydrogels or hydrophilic materials.
Hydrophobic layer 3716 fills the interstitial region between nanowells 3712. Hydrophobic layer 3716 can be any hydrophobic material suitable for conducting surface-based chemistry in a droplet actuator. In one example, hydrophobic layer 3716 is fluoro-octyl-trichloro-silane (FOTS), known formally as (tridecafluoro-1,1,2,2-tetrahydrooctyl) trichlorosilane. In another example, hydrophobic layer 3716 is a fluorinated photoresist (i.e., a hydrophobic flouropolymer), such as the ALX2010 photo dielectric, available from Asahi Glass Co., Ltd. (Tokyo, Japan), aka AGC. Additional examples, of useful hydrophobic materials include, but are not limited to, fluoro-decyl-trichloro-silane (FDTS), self assembled monolayer phosphonate (SAMP), Cytop™, Teflon™, Diamond like carbon, or cyclic olefin copolymer (COC).
Each nanowell 3712 has a depth d and a diameter D. Nanowells 3712 can be arranged in staggered rows (e.g. in a hexagonal array), as shown in Figure 38A. In each row, nanowells 3712 are arranged on a pitch p, wherein there is a space of at least s between adjacent nanowells 3712. In one example, nanowells 3712 have a depth d of about 350 nm, a diameter D of about 400 nm, and a pitch p of about 700 nm. In this example, the space s is about 300 nm. This is one example of nanowells 3712 that can be formed on a glass substrate 3710. In another example, nanowells 3712 have a depth d of about 350 nm, a diameter D of about 500 nm, and a pitch p of about 2000 nm. In this example, the space s is about 1500 nm. This is one example of nanowells 3712 that can be formed on a CMOS substrate 3710. It will be understood that the nanowells can have other arrangements, for example, a square lattice or radial pattern. Any configuration that can be introduced using nanofabrication methodologies can be used.
The minimum or maximum volume of a nanowell can be selected, for example, to accommodate the throughput (e.g. multiplexity), resolution, analyte composition, or analyte reactivity expected for downstream uses of the substrate. For example, the volume can be at least 1 x 10⁻³ µm³, 1 x 10⁻² µm³, 0.1 µm³, 1 µm³, 10 µm³, 100 µm³ or more. Alternatively or additionally, the volume can be at most 1 x 10⁴ µm³, 1 x 10³ µm³, 100 µm³, 10 µm³, 1 µm³, 0.1 µm³ or less. The area occupied by each nanowell opening on a surface can be selected based upon similar criteria as those set forth above for nanowell volume. For example, the area for each nanowell opening on a surface can be at least 1 x 10⁻³ µm², 1 x 10⁻² µm², 0.1 µm², 1 µm², 10 µm², 100 µm² or more. Alternatively or additionally, the area can be at most 1 x 10³ µm², 100 µm², 10 µm², 1 µm², 0.1 µm², 1 x 10⁻² µm2, or less. The depth of each nanowell can be at least 0.01 µm, 0.1 µm, 1 µm, 10 µm, 100 µm or more. Alternatively or additionally, the depth can be at most 1 x 10³ µm, 100 µm, 10 µm, 1 µm, 0.1 µm or less.

An array of nanowells or other features can be characterized in terms of average pitch (i.e. center-to-center spacing). The pattern formed by the array can be regular (e.g. repeating) such that the coefficient of variation around the average pitch is small or the pattern can be non-regular (e.g. random) in which case the coefficient of variation can be relatively large. In either case, the average pitch can be, for example, at least 10 nm, 0.1 µm, 0.5 µm, 1 µm, 5 µm, 10 µm, 100 µm or more. Alternatively or additionally, the average pitch can be, for example, at most 100 µm, 10 µm, 5 µm, 1 µm, 0.5 µm 0.1 µm or less. Of course, the average pitch for a particular pattern of naowells can be between one of the lower values and one of the upper values selected from the ranges above.

A pattern of nanowells can also be characterized with respect to the density of nanowells (i.e. number of nanowells) in a defined area. For example, the nanowells may be present at a density of approximately 2 million per mm². In accordance with the manufacturing methods set forth herein, the density can easily be tuned to different densities including, for example, a density of at least 100 per mm², 1,000 per mm², 0.1 million per mm², 1 million per mm², 2 million per mm², 5 million per mm², 10 million per mm², 50 million per mm² or more. Alternatively or additionally, the density can be tuned to be no more than 50 million per mm², 10 million per mm², 5 million per mm², 2 million per mm², 1 million per mm², 0.1 million per mm², 1,000 per mm², 100 per mm² or less. Of course, the density of nanowells on a substrate can be between one of the lower values and one of the upper values selected from the ranges above.

These examples illustrate that the fraction of variegated-hydrophilic-hydrophobic region 3700 that is hydrophobic vs. the fraction of variegated-hydrophilic-hydrophobic region 3700 that is hydrophilic can vary. For example, the fraction of variegated-hydrophilic-hydrophobic region 3700 that is hydrophobic can be from about 1% to about 99% and the fraction of variegated-hydrophilic-hydrophobic region 3700 that is hydrophilic can be from about 99% to about 1%.

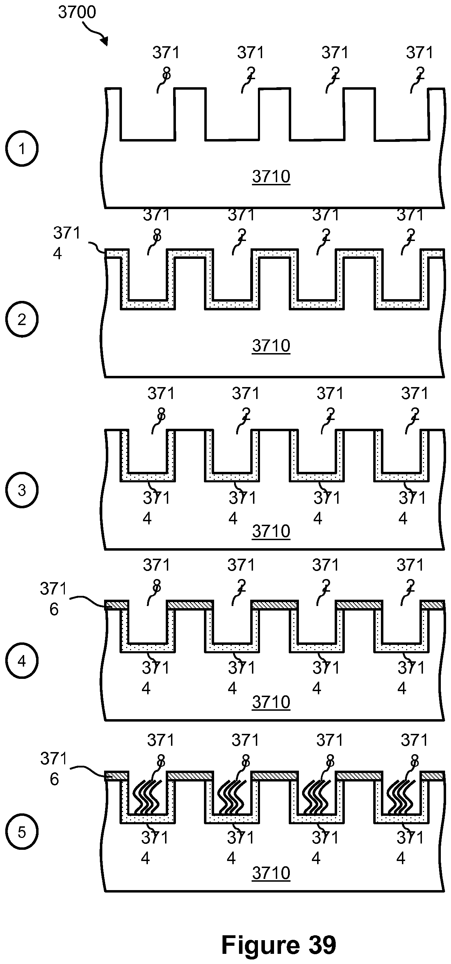

**Figure 39** illustrates an example of a process of forming variegated-hydrophilic-hydrophobic region 3700. In this example, the process of forming variegated-hydrophilic-hydrophobic region 3700 may include, but is not limited to, the following steps.

At a step 1, nanowells are patterned into the surface of substrate 3710. For example, an SiO₂ substrate 3710 is provided and then masked and etched using, for example, standard photolithography processes to form nanowells 3712.

At a step 2, hydrophilic layer 3714 is formed over the surface of substrate 3710, including inside nanowells 3712. For example, substrate 3710 is spin-coated with saline and PAZAM. In other cases, the silane can be deposited through vapor phase deposition. The thickness of the PAZAM can be, for example, from about 5 nm to about 1 x 10³ nm. In some embodiments, the thickness of the PAZAM in its dehydrated state, following incubation to allow it to bind to the silane, is approximately 5 nm following washing away any non-bound PAZAM. The thickness of the PAZAM when initially deposited can be greater than 100 nm. In some embodiments, the PAZAM when hydrated, has a thickness in the range of 100 - 500 nm.

At a step 3, hydrophilic layer 3714 on the surface of substrate 3710 that is outside of nanowells 3712 is removed, leaving hydrophilic layer 3714 only at the nanowells 3712, thereby forming hydrophilic nanowells 3712. Depending upon the conditions of manufacture and use, the PAZAM may fill the well or it may form a slug at the bottom of the well. The PAZAM may or may not conformally coat the well. For example, the surface of substrate 3710 outside of nanowells 3712 is polished using a standard mechanical or chemical-mechanical polishing process in order to remove hydrophilic layer 3714 and expose the surface of substrate 3710 that is outside of nanowells 3712. A lift off process is also possible at this step, where a sacrificial resist occurs in the interstitial of the array and, following isolation of the PAZAM into the well, the resist is removed with a solvent exposing the bare substrate in the interstitial region of the array.

At a step 4, hydrophobic layer 3716 is formed on the surface of substrate 3710 that is outside of hydrophilic nanowells 3712. In one example, using a standard chemical vapor deposition (CVD) process, a layer of FOTS is deposited on the surface of substrate 3710. Another fluorosilane can be used in place of FOTs. The thickness of the FOTS can be, for example, from about 1 nm to about 100 nm. Thinner or thicker layers of fluorosilane are also possible.

The FOTS does not disrupt the functionality or hydrophilic properties of the hydrophilic nanowells 3712. Thereby saving a process step of masking hydrophilic nanowells 3712and/or removing the FOTS from hydrophilic nanowells 3712.

At a step 5, the primers are bonded and grafted to hydrophilic layer 3714 on the inside of nanowells 3712, thereby forming grafted primers 3718.

In some embodiments, steps 4 and 5 can be reversed. Namely, the grafting can be done before hydrophobic layer 3716 (e.g., FOTS) is deposited.

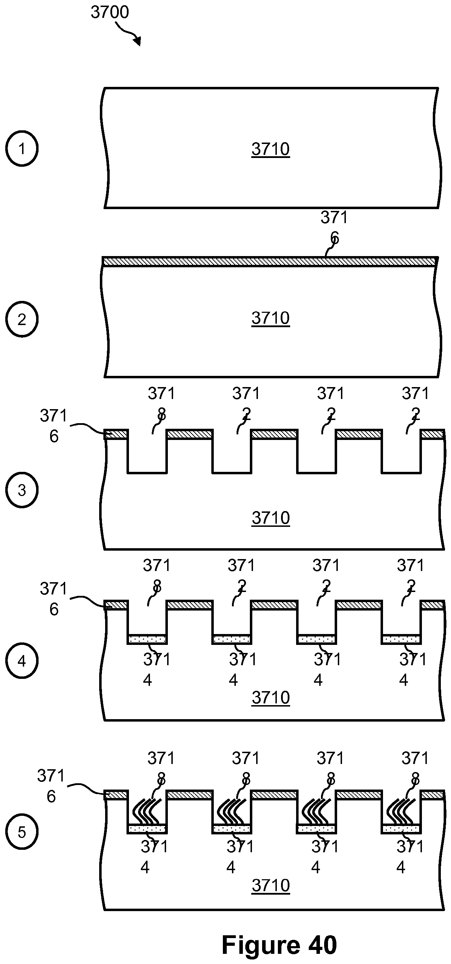

**Figure 40** illustrates another example of a process of forming variegated-hydrophilic-hydrophobic region 3700. In this example, the process of forming variegated-hydrophilic-hydrophobic region 3700 may include, but it not limited to, the following steps.

At a step 1, substrate 3710 is provided. For example, an SiO₂ substrate 3710 is provided. A metal oxide or nitride surface can also be used.

At a step 2, hydrophobic layer 3716 is formed over the surface of substrate 3710. For example, substrate 3710 is spin-coated with a fluorinated photoresist (i.e., a hydrophobic flouropolymer), such as the ALX2010 photo dielectric from AGC. The thickness of the fluorinated photoresist can be, for example, from about 5 nm to about 10 µm.

At a step 3, nanowells 3712 are patterned into the substrate 3710. For example, hydrophobic layer 3716 on substrate 3710 is masked and etched using, for example, standard photolithography processes to form nanowells 3712. At the completion of this step, hydrophobic layer 3716 is on the surface of substrate 3710 that is outside of nanowells 3712. Another option at step 3 is to pattern the hydrophobic polymer and expose the bottom substrate at the bottom of the wells. The well is then formed with sidewalls made of the hydrophobic polymer and the hydrophilic glass at the bottom of the well. This will eliminate the need to etch the wells into the substrate. As a result, the hydrophilic layer is expected to occur only at the bottom of the well.

At a step 4, hydrophilic layer 3714 is formed inside nanowells 3712, thereby forming hydrophilic nanowells 3712. For example, substrate 3710 is spin-coated with silane and PAZAM. Alternatively the silane can be vapor phase deposited prior to PAZAM spin coating. The thickness of the PAZAM can be, for example, from about 5 nm to about 1000 nm. Because PAZAM is repelled by the hydrophobic flouropolymer (i.e., hydrophobic layer 3716), the PAZAM does not deposit on top of hydrophobic layer 3716. However, even if PAZAM is loosely bound, for example, through adsorption, it can be removed by sonication or other relatively mild treatments.

At a step 5, the primers are bonded and grafted to hydrophilic layer 3714 on the inside of hydrophilic nanowells 3712, thereby forming grafted primers 3718.

In an SBS process used in a digital fluidics device, some of the reagents used may have a fairly high pH (e.g., 10.5-11). These high-pH reagents at an elevated temperature tend to etch (attack) the glass, and thus have the potential to etch away the surface upon which SBS is intended to occur (i.e. target nucleic acids are removed by the etching). However, the process described in Figure 40 overcomes this problem by using fluorinated photoresist (i.e., a hydrophobic flouropolymer), such as the ALX2010 photo dielectric from AGC, for hydrophobic layer 3716. This fluorinated photoresist material will not be substantially etched away by the high-pH reagents used during some SBS steps. Another option is to use a dielectric material, such as tantalum oxide, as the foundation which is also not etched at the high pH.

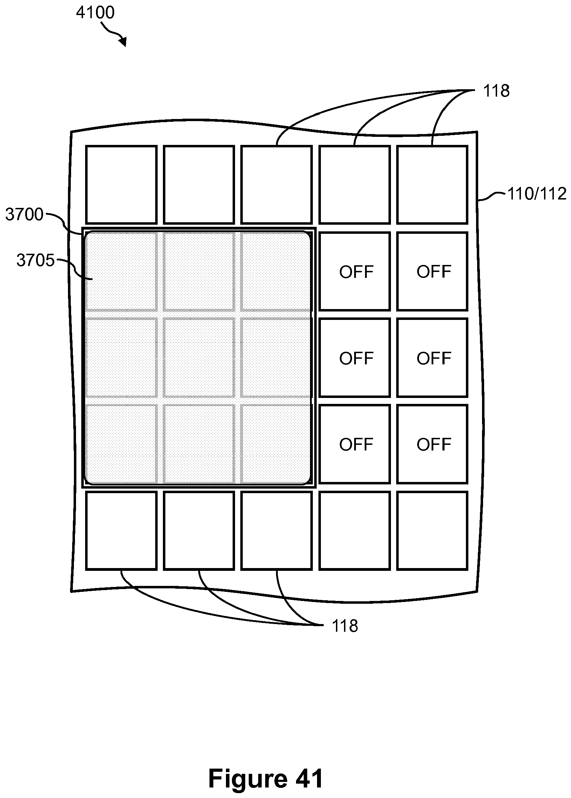

**Figures 41****,** **42****, and** **43** show techniques for dewetting variegated-hydrophilic-hydrophobic region 3700. Referring now to Figure 41 is a plan view of an electrode arrangement 4100 that includes an array of droplet operations electrodes 118 on bottom substrate 110. In this example, variegated-hydrophilic-hydrophobic region 3700 is on top substrate 112 and spans a 3x3 portion of the array of droplet operations electrodes 118. Further, droplet 3705 is present in the area of variegated-hydrophilic-hydrophobic region 3700.

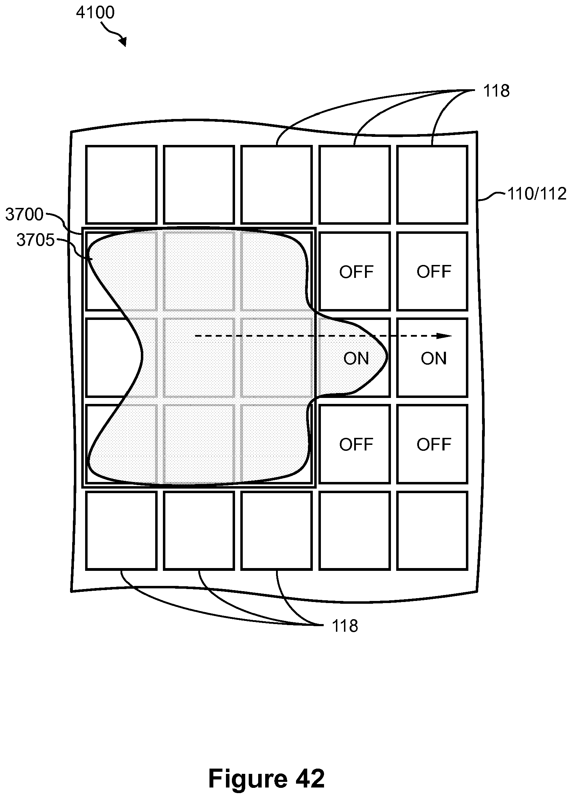

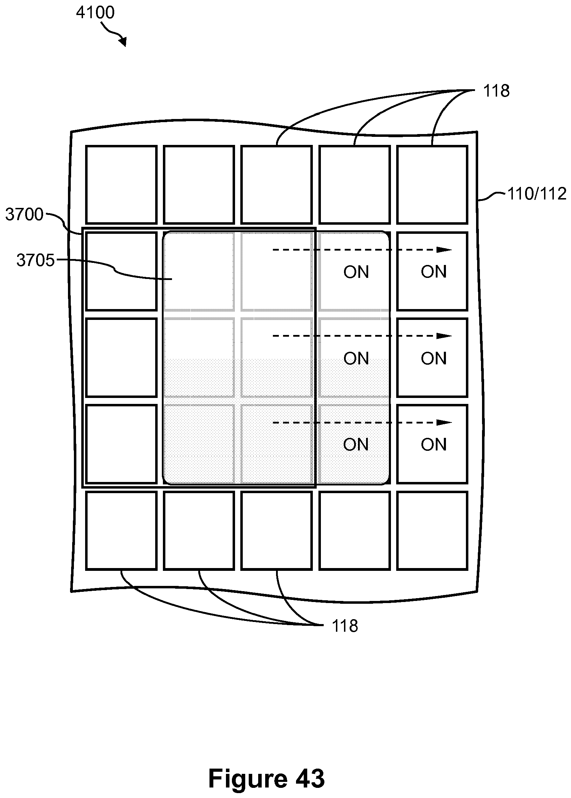

Referring now to Figure 42, with respect to variegated-hydrophilic-hydrophobic region 3700, a center line of droplet operations electrodes 118 is activated to pull droplet 3705 away from variegated-hydrophilic-hydrophobic region 3700 via droplet operations. However, due to the large volume of droplet 3705, it may be difficult to pull droplet 3705 away from variegated-hydrophilic-hydrophobic region 3700 using the single line of droplet operations electrodes 118 as shown. Referring now to Figure 43, instead of using the single line of droplet operations electrodes 118 shown in Figure 42, multiple lines of droplet operations electrodes 118 can be activated to pull droplet 3705 away from variegated-hydrophilic-hydrophobic region 3700 via droplet operations. In so doing, variegated-hydrophilic-hydrophobic region 3700 can be effectively dewetted.

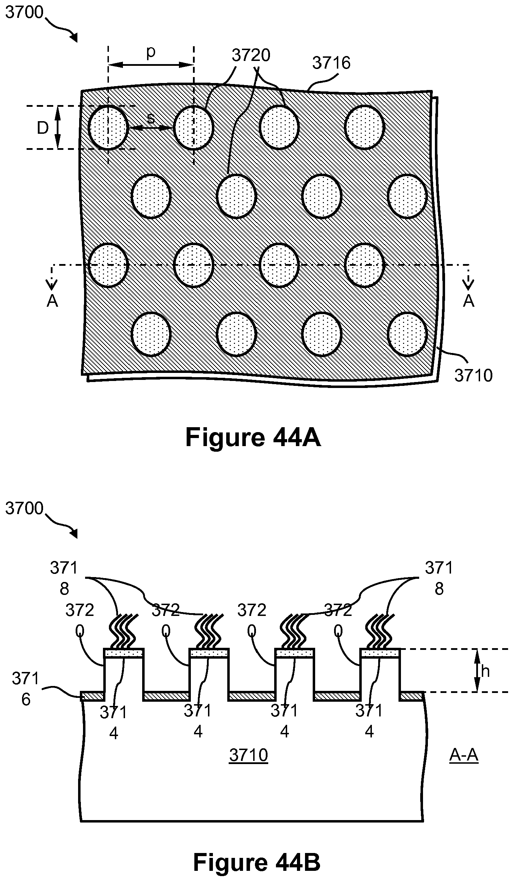

**Figures 44A and 44B** illustrate a plan view and a cross-sectional view, respectively, of a portion of another example of variegated-hydrophilic-hydrophobic region 3700 shown in Figure 37. In this example, the polarity of hydrophilic layer 3714 and hydrophobic layer 3716 is reversed from the example of Figures 38A and 38B. Namely, rather than hydrophilic layer 3714 being in a well with respect to the plane of hydrophobic layer 3716, hydrophilic layer 3714 is on a pedestal or post with respect to the plane of hydrophobic layer 3716. For example, nanowells 3712 of variegated-hydrophilic-hydrophobic region 3700 described in Figures 37 through 43 are replaced with pedestals 3720. Atop pedestals 3720 is hydrophilic layer 3714 and grafted primers 3718, thereby forming hydrophilic pedestals 3720.

Like hydrophilic nanowells 3712, each hydrophilic pedestal 3720 has a height h and a diameter D. Hydrophilic pedestals 3720 can be arranged in staggered rows (e.g. in a hexagonal grid), as shown in Figure 44A, or in a square lattice. In each row, hydrophilic pedestals 3720 are arranged on a pitch p, wherein there is a space of at least s between adjacent hydrophilic pedestals 3720. The height h, diameter D, pitch p, and space s of hydrophilic pedestals 3720 can be substantially the same as the respective depth d, diameter D, pitch p, and space s of hydrophilic nanowells 3712. Again, the fraction of variegated-hydrophilic-hydrophobic region 3700 that is hydrophobic vs. the fraction of variegated-hydrophilic-hydrophobic region 3700 that is hydrophilic can vary.

In this example, the process of forming variegated-hydrophilic-hydrophobic region 3700 that comprises hydrophilic pedestals 3720 may include, but may not necessarily be limited to, the following steps.

At a step 1, substrate 3710 is provided. For example, an SiO₂ substrate 3710 is provided. It is of the form of an array of pedestals/posts structured into the SiO₂ substrate. This structuring can be performed using conventional lithography and dry etching processes or it can be formed using alternative approaches to patterning such as nanoimprint lithography.

At a step 2, a hydrophobic silane, or similar hydrophobic material, is coated onto the substrate. The thickness of this material can range from 1 nm to greater than 1000 nm. The thickness of the hydrophobic material may or may not be greater than the height of the pedestals/posts.

At a step 3, the structured substrate coated with the hydrophobic material goes through a mechanical, or chemical mechanical polishing step that will remove the hydrophobic material from the top of the pedestals/posts, but not from the interstitial region separating the pedestals/posts. This polishing will remove the hydrophobic material from the top of the posts.

At a step 4, a coating of the coupling silane, such as the norbornene silane is deposited by either spin coating or vapor phase deposition and then a film of the PAZAM is coated using a spin coating procedure. This silane will selectively bind to the tops of the pedestals/posts due to the presence of the hydrophobic material deposited in step 2 in the interstitial region of the array and on the sidewalls of the pedestals/posts. Because the silane selectively coats the tops of the pedestals/posts, the PAZAM will selectively bind to the tops of the pedestals/posts where the silane binds to the exposed SiO₂. The binding of the PAZAM to the silane may be potentially enhanced through the additional use of heat and allowing extended incubation time to elapse.

At a step 5, the chemically coated substrate is washed, potentially using sonication methods. During the washing process, the PAZAM that coats the hydrophobic material will be washed away but the PAZAM that is bound to the silane that is bound to the glass will remain, resulting in a pattern of hydrophilic PAZAM surrounded by the hydrophobic interstitial region of the array.

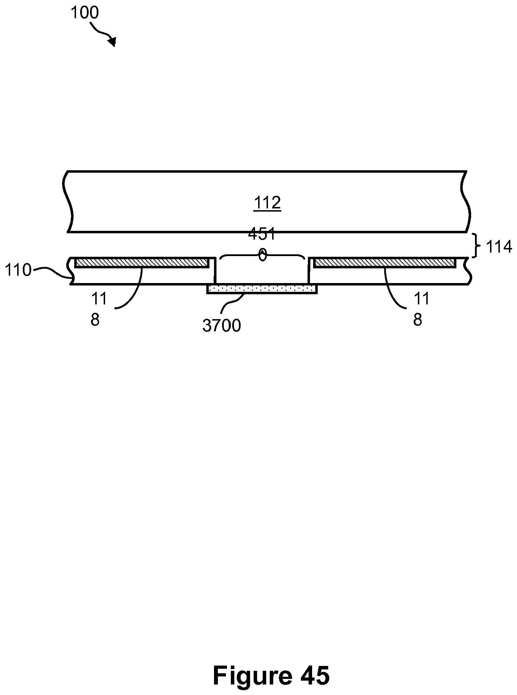

**Figure 45** illustrates a side view of an example of variegated-hydrophilic-hydrophobic region 3700 on bottom substrate 110 of droplet actuator 100 instead of on top substrate 112. In this example, variegated-hydrophilic-hydrophobic region 3700 is in a recessed region 4510 that is along the line of droplet operations electrodes 118. In one example, droplet operations gap 114 has a gap height of about 1 mm, recessed region 4510 has a width of about 3.75 mm, and recessed region 4510 has a depth of about 0.27 mm. In this example, variegated-hydrophilic-hydrophobic region 3700 can be, for example, integrated with a CMOS detector on and/or near bottom substrate 110 of droplet actuator 100.

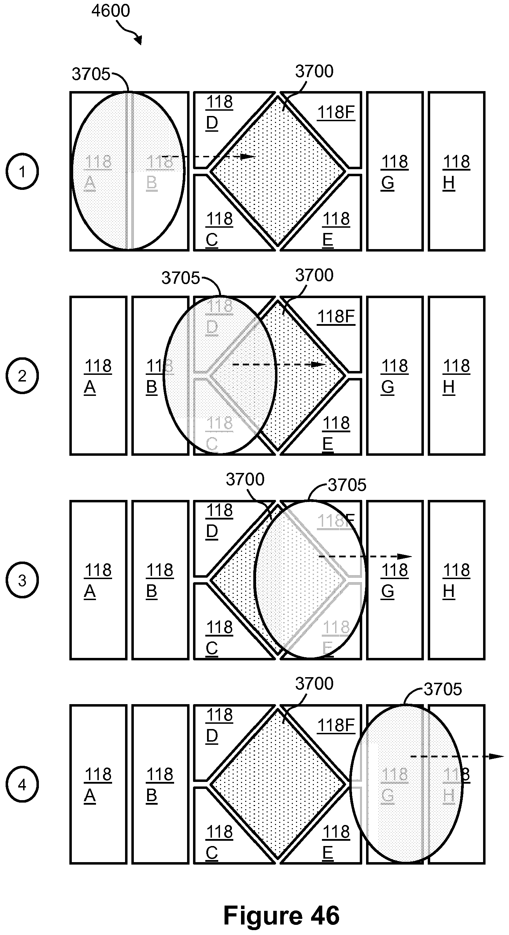

**Figure 46** illustrates a plan view of an example of an electrode arrangement 4600 that includes variegated-hydrophilic-hydrophobic region 3700 on bottom substrate 110 of droplet actuator 100 and a process of transporting a droplet, such as droplet 3705, across variegated-hydrophilic-hydrophobic region 3700. As demonstrated by this example, the variegated-hydrophilic region can be flanked by droplet operations electrodes in a way to cause a droplet to be moved across the surface of the variegated-hydrophilic region when the droplet operations electrodes are actuated. In particular, the droplet is generally larger than the droplet operations electrodes that flank or even surround the variegated-hydrophilic region. Thus, volume exclusion, due to the relatively low capacity of the droplet operations electrodes and the excess volume of the droplet, cause at least a portion of the droplet to squeeze onto the variegated-hydrophilic surface. In the example of Figure 46 variegated-hydrophilic-hydrophobic region 3700 is a substantially square region that is oriented at about 45 degrees with respect to the line of droplet operations electrodes 118. Accordingly, a set of substantially triangular droplet operations electrodes 118 surround variegated-hydrophilic-hydrophobic region 3700, thereby substantially conforming to the orientation of variegated-hydrophilic-hydrophobic region 3700. In one example, variegated-hydrophilic-hydrophobic region 3700 shown in Figure 46 is implemented according to the example shown in Figure 45.

In this example process of transporting droplet 3705 across variegated-hydrophilic-hydrophobic region 3700, droplet 3705 is transported via droplet operations in a direction from droplet operations electrode 118A to droplet operations electrode 118H, wherein variegated-hydrophilic-hydrophobic region 3700 is in the line between droplet operations electrodes 118A and 118H.

In a step 1, droplet 3705 is atop droplet operations electrodes 118A and 118B, which are activated.

In a step 2, droplet operations electrodes 118A and 118B are deactivated and the triangular droplet operations electrodes 118C and 118D are activated. In so doing, droplet 3705 is pulled onto the triangular droplet operations electrodes 118C and 118D and onto the leading edge of variegated-hydrophilic-hydrophobic region 3700.

In a step 3, droplet operations electrodes 118C and 118D are deactivated and the triangular droplet operations electrodes 118E and 118F are activated. In so doing, droplet 3705 is pulled onto the triangular droplet operations electrodes 118E and 118F and onto the trailing edge of variegated-hydrophilic-hydrophobic region 3700.

In a step 4, droplet operations electrodes 118E and 118F are deactivated and droplet operations electrodes 118G and 118H are activated. In so doing, droplet 3705 is pulled onto droplet operations electrodes 118G and 118H and away from variegated-hydrophilic-hydrophobic region 3700.

### 4.3 Superhydrophobic Surfaces and Digital Fluidics

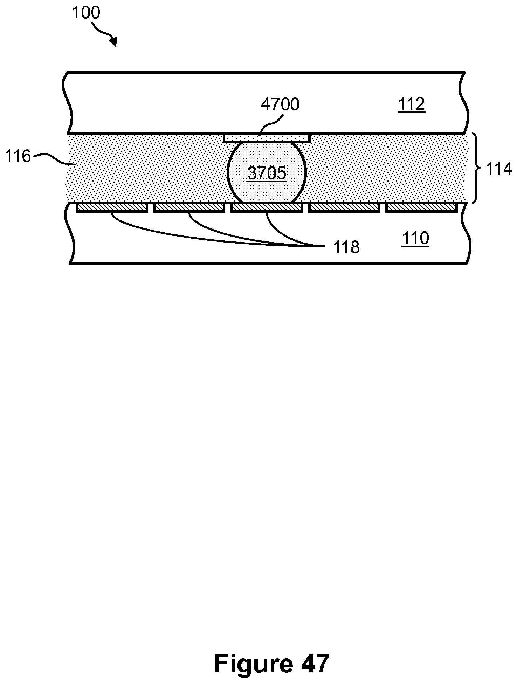

The present disclosure provides yet another surface that can be used when conducting surface-based chemistry in droplet actuators. Specifically, superhydrophobic surfaces can be used as described hereinbelow with reference to Figures 47, 48, and 49. Namely, the present disclosure provides techniques for making use of a superhydrophobic region in a droplet actuator for conducting surface-based chemistry, wherein the superhydrophobic region is formed, for example, by adding surface roughness to a variegated-hydrophilic surface. In particular embodiments, a variegated-hydrophilic-superhydrophobic surface will include first portions having surface roughness (i.e. superhydrophobic portions) and second portions having gel filled wells (i.e. hydrophilic portions).

**Figure 47** illustrates a cross-sectional view of a portion of droplet actuator 100 that has a variegated-hydrophilic-superhydrophobic region 4700 on top substrate 112. Namely, variegated-hydrophilic-superhydrophobic region 4700 provides a superhydrophobic surface on the top substrate 112 and in the droplet operations gap 114 which can be used for conducting surface-based chemistry in droplet actuator 100. Variegated-hydrophilic-superhydrophobic region 4700 is formed, for example, by adding surface roughness to a variegated-hydrophilic surface, such as to variegated-hydrophilic-hydrophobic region 3700 described with reference to Figures 37 through 46. It will be understood that variegated-hydrophilic-superhydrophobic region 4700 can be used in place of variegated-hydrophilic-hydrophobic region 3700 in the exemplary embodiments set forth herein. A few non-limiting illustrations are set forth below.

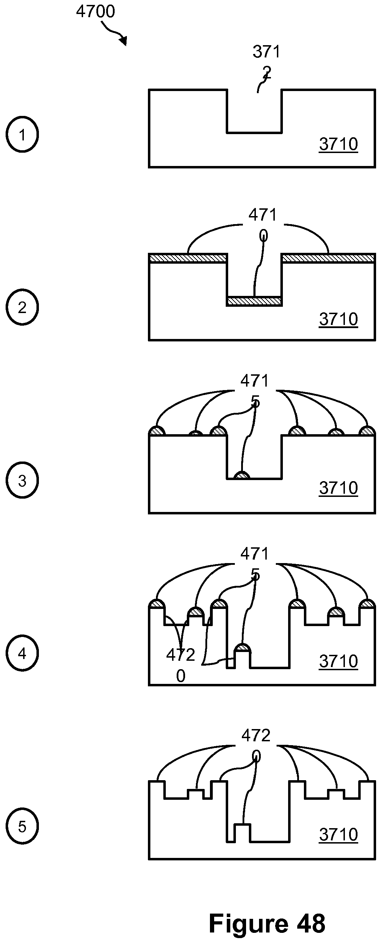

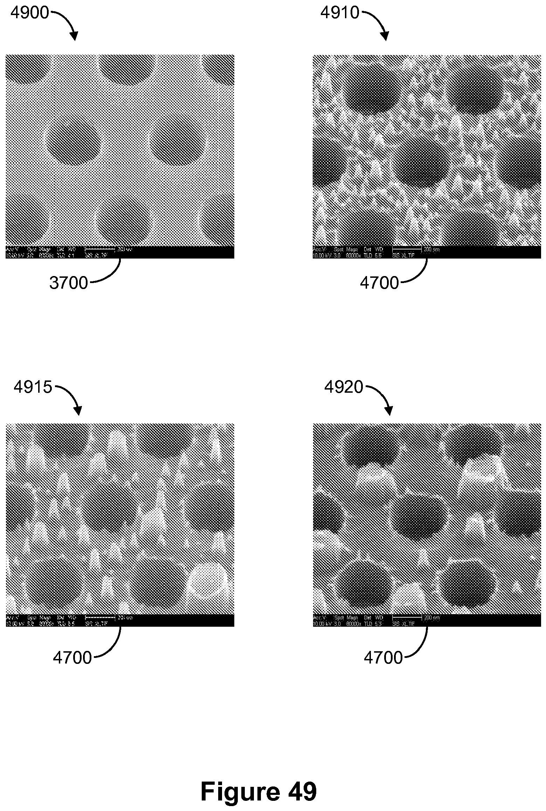

For example, a moiety may be captured on or coupled to the surface of variegated-hydrophilic-superhydrophobic region 4700, and reagents may be contacted with the same surface to conduct chemistry, such as chemistry aimed at identifying the captured moiety, or chemistry aimed at building on the captured moiety to synthesize a new moiety. In another example, a nucleic acid may be attached to the surface of superhydrophobic region 4700 in droplet actuator 100 for conducting surface-based sequencing chemistry. More details of examples of variegated-hydrophilic-superhydrophobic region 4700 are shown and described hereinbelow with reference to Figures 48 and 49.

**Figure 48** illustrates an example of a process of forming variegated-hydrophilic-superhydrophobic region 4700. In this example, the process of forming variegated-hydrophilic-superhydrophobic region 4700 may include, but it not limited to, the following steps.

At a step 1, substrate 3710 is provided that already has nanowells 3712 formed therein. In one example, an SiO₂ substrate 3710 is provided. Substrate 3710 may have been made by any of a variety of nanofabrication methods set forth herein or known in the art. Substrate 3710 can have a hydrophilic or hydrophobic surface.

At a step 2, a layer of tin/gold (Sn/Au) is formed on substrate 3710 that has nanowells 3712. Other materials that can be used in place of the Sn/Au layer include, but are not limited to gold, carbon nanotubes, block copolymers, metallic nanoparticles, quantum dots, or fumed silica coated with metal such as Cr. For example, a tin/gold layer 4710 is deposited on substrate 3710 that has nanowells 3712. The thickness of tin/gold layer 4710 can be, for example, from about 2 nm to about 200 nm. In one example, the thickness of tin/gold layer 4710 is about 5 nm. In another example, the thickness of tin/gold layer 4710 is about 7.5 nm. In yet another example, the thickness of tin/gold layer 4710 is about 10 nm.

At a step 3, substrate 3710, which has tin/gold layer 4710 thereon, under goes an annealing process. In so doing, tin/gold layer 4710 melts and tin/gold droplets 4715 form and then harden on the surfaces of substrate 3710. In one example, substrate 3710, which has tin/gold layer 4710 thereon, is annealed at 400°C in forming gas for 30 minutes.

At a step 4, tin/gold droplets 4715 serve as a mask while substrate 3710 undergoes an etching process to form a nanopillar 4720 beneath each tin/gold droplet 4715. In one example, the etching process is a reactive-ion etching (RIE) process.

At a step 5, tin/gold droplets 4715 are etched away using, for example, a standard wet etch process. In so doing, the nanopillars 4720 are exposed and provide roughness to the surfaces of substrate 3710. Optionally, the roughened substrate 3710 undergoes the process steps 2, 3, 4, and 5 that are described with reference to Figure 39 to form variegated-hydrophilic-superhydrophobic region 4700. It will be understood that the roughened substrate 3710 can be used for other applications where this superhydrophobic surface is useful. Surface roughness also enables manufacture of superhydrophilic surfaces when the surface 3710 with pillars 4720 are coated with a hydrophilic molecule such as an aminosilane. Generally, roughened surfaces provide a versatile surface for surface treatments to produce either superhydrophobic or superhydrophilic characteristics.

The degree of roughness for substrate 3710 can be controlled by two factors (1) the diameter of nanopillars 4720 can be determined by controlling the starting thickness of tin/gold layer 4710. Namely, the thicker the tin/gold layer 4710 the larger the diameter of tin/gold droplets 4715 and thus the larger the diameter of nanopillars 4720, and (2) the height of nanopillars 4720 can be determined by controlling the etching time. Namely, the longer the etching time the taller the nanopillars 4720. In one example, the diameter of nanopillars 4720 can be up to about the same diameter of nanowells 3712. The pillars can occupy a volume that is in a range set forth herein previously with regard to the volume of a nanowell. The area occupied by each pillar on a surface (i.e. footprint of each pillar), density of pillars on a surface, and/or pitch of pillars on the surface can be in a range set forth herein previously with regard to nanowells. Furthermore, the height of a pillar can be in a range that is set forth above in regard to the depth of nanowells. In one example, the height of nanopillars 4720 can be up to about 200 nm. For example, a 3-minite etching time can provide nanopillars 4720 that are from about 50 nm to about 150 nm tall. Examples of different roughness are shown hereinbelow in Figure 49.

**Figure 49** shows images of exemplary substrates having variegated-hydrophilic regions including wells and interstitial surface between wells. For comparison, Figure 49 shows an image 4900 of variegated-hydrophilic region 3700 that has been formed without surface roughness. Figure 49 also shows an image 4910 of an example of variegated-hydrophilic-superhydrophobic region 4700 that has small and tightly spaced nanopillars 4720. Figure 49 also shows an image 4915 of an example of variegated-hydrophilic-superhydrophobic region 4700 that has medium sized and medium spaced nanopillars 4720. Figure 49 also shows an image 4920 of an example of variegated-hydrophilic-superhydrophobic region 4700 that has large sized and large spaced nanopillars 4720.

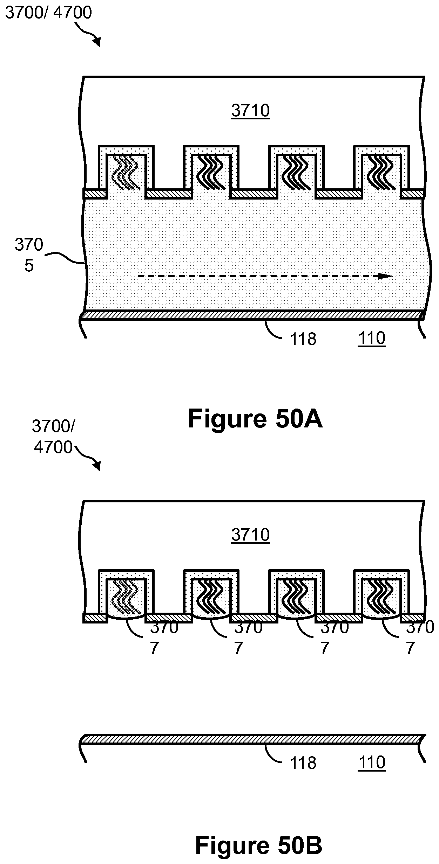

**Figures 50A and 50B** illustrate cross-sectional views of variegated-hydrophilic substrates having smooth (hydrophobic) interstitial regions 3700 and/or rough (i.e. superhydrophobic) interstitial regions 4700 when in use. Referring now to Figure 50A, droplet 3705 is transported across the smooth surface of substrate 3700 and/or the rough surface of substrate 4700 via droplet operations. In so doing, droplet 3705 fills hydrophilic nanowells 3712 for conducting surface-based chemistry in droplet actuator 100. Referring now to Figure 50B, when droplet 3705 is transported away from smooth substrate 3700 and/or rough substrate 4700, hydrophobic layer 3716 dewets and small droplets 3707 are left behind inside of hydrophilic nanowells 3712, wherein the small droplets 3707 are from the original droplet 3705.

With respect to both the variegated-hydrophilic-hydrophobic surfaces (e.g., region 3700) and the variegated-hydrophilic-superhydrophobic surfaces (e.g., region 4700), certain factors can affect the dewetting behavior, factors such as (1) the contact angle of the liquid, (2) the surface tension of the liquid, and (3) the electrowetting curve. Namely, the higher the contact angle of the liquid the easier it is to dewet a surface and the higher the surface tension of the liquid the easier it is to dewet a surface.

With respect to contact angle, Table 1 shows that the contact angle of, for example, deionized water (DI) water increases on the presently disclosed variegated-hydrophilic surfaces and superhydrophobic surfaces as compared with a blank substrate.

| **Table 1** Contact angles of DI water on fused silica nanowell arrays | |
|---|---|
| **Surface** | **Contact Angle** |
| Blank Fused Silica Control | from ∼10° to ∼15° |
| Patterned Fused Silica Control | from ∼10° to ∼15° |
| Variegated-hydrophilic-hydrophobic region 3700: After PAZAM and polish, No FOTS - *Off Array | from ∼40° to ∼50° |
| Variegated-hydrophilic-hydrophobic region 3700: After PAZAM and polish, No FOTS - *On Array | from ∼50° to ∼55° |
| Variegated-hydrophilic-hydrophobic region 3700: Fused Silica & FOTS - Off Array | from ∼95° to ∼105° |
| Variegated-hydrophilic-hydrophobic region 3700: Fused Silica & FOTS - On Array | from ∼95° to ∼110° |
| Variegated-hydrophilic-superhydrophobic region 4700, nanopillar height 50-150 nm, nanopillar diameter >100 nm - Off Array | from ∼100° to ∼115° |
| Variegated-hydrophilic-superhydrophobic region 4700, nanopillar height 50-150 nm, nanopillar diameter >100 nm - On Array | from ∼125° to ∼140° |
| Variegated-hydrophilic-superhydrophobic region 4700, nanopillar height 50-150 nm, nanopillar diameter 50-100 nm - Off Array | from ∼120° to ∼130° |
| Variegated-hydrophilic-superhydrophobic region 4700, nanopillar height 50-150 nm, nanopillar diameter 50-100 nm - On Array | from ∼140° to ∼160° |
| Variegated-hydrophilic-superhydrophobic region 4700, nanopillar height 50-150 nm, nanopillar diameter <50 nm - Off Array | from ∼150° to ∼170° |
| Variegated-hydrophilic-superhydrophobic region 4700, nanopillar height 50-150 nm, nanopillar diameter <50 nm - On Array | from ∼155° to ∼180° |
| Variegated-hydrophilic-superhydrophobic region 4700, nanopillar height about 200 nm, nanopillar diameter >100 nm - Off Array | from ∼110° to ∼120° |
| Variegated-hydrophilic-superhydrophobic region 4700, nanopillar height about 200 nm, nanopillar diameter >100 nm - On Array | from ∼120° to ∼140° |
| Variegated-hydrophilic-superhydrophobic region 4700, nanopillar height about 200 nm, nanopillar diameter 50-100 nm - Off Array | from ∼130° to ∼140° |
| Variegated-hydrophilic-superhydrophobic region 4700, nanopillar height about 200 nm, nanopillar diameter 50-100 nm - On Array | from ∼130° to ∼140° |
| Variegated-hydrophilic-superhydrophobic region 4700, nanopillar height about 200 nm, nanopillar diameter >50 nm - Off Array | from ∼125° to ∼135° |
| Variegated-hydrophilic-superhydrophobic region 4700, nanopillar height about 200 nm, nanopillar diameter >50 nm - On Array | from ∼130° to ∼145° |
| *Off-Array means a patterned region, which will be completely hydrophobic. | |
| *On-Array means patterned region which will be variegated-hydrophilic. | |

With respect to surface tension, adding surfactant (e.g., TWEEN® 20) to the reagent liquid reduces the surface tension and makes it harder to dewet. As a result, a decrease in the concentration of surfactants may be useful to achieve desired dewetting characteristics of the variegated-hydrophilic or superhydrophobic surfaces. Namely, there may be a desire to select concentrations and types of surfactants that permit both robust electrowetting and sufficient dewetting.
The present disclosure provides substantially complete liquid exchange or dewetting at smooth substrate 3700 and/or rough substrate 4700 while the only substantial residue left behind is in hydrophilic nanowells 3712. Accordingly and referring now again to Figures 50A and 50B, there may be a need to provide wash droplets to exchange the small droplets 3707 in hydrophilic nanowells 3712. For example, small droplets 3707 in hydrophilic nanowells 3712 combine with every droplet 3705 passing by and get further and further diluted with each pass. In some embodiments, at variegated-hydrophilic-hydrophobic region 3700 and/or at variegated-hydrophilic-superhydrophobic region 4700 there can be about a 90%, or 95%, or 99%, or 99.9% liquid exchange or dewetting.
It will be understood that the substrate set forth above and exemplified in the context of droplet actuation devices and methods can also be used in other fluidic devices and methods. For example, the hydrophobic/hydrophilic characteristics of the surfaces and their benefits to analytical or preparative methods (e.g. detection and/or synthesis of nucleic acids) can be exploited in conditions where fluid flows in bulk as opposed to in droplets. Thus, the substrates set forth herein and the related methods can be employed in standard fluidic or microfluidic apparatus and methods. By way of more specific example, the substrates and surfaces are particularly useful in flow cells and other apparatus set forth in US Pat. App. Pub. Nos. 2012/0316086 A1; 2013/0085084 A1; 2013/0096034 A1; 2013/0116153 A1; 2014/0079923 A1; and 2013/0338042 A1; and US Pat. App. Ser. No. 13/787,396.

### 4.4 Flexible PCB for Integrating CMOS Detector and Digital Fluidics

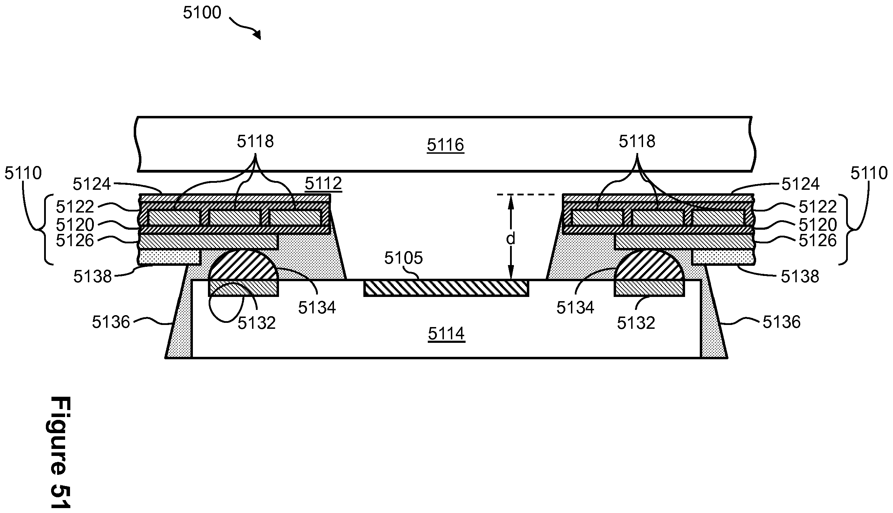

The present disclosure provides a flexible PCB for monolithic integration of a CMOS detector and digital fluidics. Namely, flexible PCB packaging enables integration of digital fluidics droplet manipulation and CMOS detection electronics. One advantage of using a flexible PCB is its form-factor and the fact that droplet manipulation active electrodes can be placed as close as possible to the active area of the CMOS detector. Another advantage of using a flexible PCB is that it has very small thickness (e.g., from about 25 µm to about 125 µm) which allows minimal height barrier between the digital fluidics platform and CMOS detection platform. This backend integration can be accomplished, for example, using a roll-to-roll manufacturing process flow that has promise of a low cost structure (e.g., about $1 per foil, which covers all components other than CMOS). Examples of using a flexible PCB for the monolithic integration of CMOS detectors and digital fluidics are shown and described herein below with reference to Figures 51, 52, and 53.

**Figure 51** illustrates a side view of a portion of a droplet actuator 5100 that uses a flexible PCB and flip-chip bonding for monolithic integration of a CMOS detector and digital fluidics. Droplet actuator 5100 includes a flexible PCB 5110, which is the bottom substrate, and a top substrate 5112 that are separated by a droplet operations gap 5114. Droplet operations gap 5114 can contain filler fluid (not shown). Flexible PCB 5110 is mechanically, fluidly, and electrically coupled to a CMOS detector 5116, which is an optical detector. Namely, flexible PCB 5110 includes an arrangement of droplet operations electrodes 5118 (e.g., electrowetting electrodes) that are disposed between a first polyimide layer 5120 and a second polyimide layer 5122. A cytop layer 5124 is provided atop second polyimide layer 5122. Droplet operations are conducted atop droplet operations electrodes 5118 on a droplet operations surface. Further, top substrate 5112 may include a ground reference plane or electrode (not shown).

Additionally, an interconnect layer 5126, such as a copper layer, is provided beneath first polyimide layer 5120 of flexible PCB 5110 for electrically connecting to CMOS detector 5116. Namely, CMOS detector 5116 includes contact pads 5132. Solder bumps 5134 are provided atop contact pads 5132. Solder bumps 5134 of CMOS detector 5116 are bonded to interconnect layer 5126 of flexible PCB 5110 using flip-chip bonding methods or low temperature epoxy.

CMOS detector 5116 also includes an active pixel region 5130. An interruption, gap, or opening in flexible PCB 5110 substantially aligns with active pixel region 5130 of CMOS detector 5116, which provides a line-of-sight path from active pixel region 5130 through top substrate 5112. Active pixel region 5130 is in a recessed region with respect to the plane of droplet operations gap 5114. Namely, active pixel region 5130 is a distance d away from the plane of droplet operations gap 5114. The distance d can be, for example, from about 150 µm to about 200 µm.

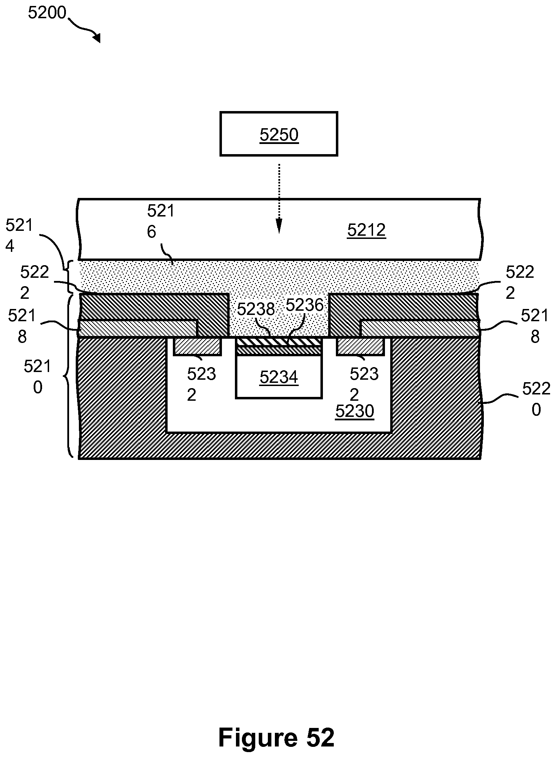

Flexible PCB 5110 and CMOS detector 5116 can be mechanically coupled together using, for example, a hydrophobic epoxy 5136. Hydrophobic epoxy 5136 enables droplet manipulation and also decouples the electronics from the fluidics. A protection layer 5138 is provided on flexible PCB 5110 at the interface of interconnect layer 5126 and hydrophobic epoxy 5136. **Figure 52** illustrates a side view of a portion of a droplet actuator 5200 that uses a flexible PCB and flow cell integration of a CMOS detector and digital fluidics. Droplet actuator 5200 includes a flexible PCB 5210, which is the bottom substrate, and a top substrate 5212 that are separated by a droplet operations gap 5214. In this example, droplet operations gap 5214 contains a reagent liquid 5216. Top substrate 5212 may include a ground reference plane or electrode (not shown). Flexible PCB 5210 includes an interconnect layer 5218 that is disposed between a first polyimide layer 5220 and a second polyimide layer 5222.
A CMOS detector 5230, which is one type of optical detector that can be used, is integrated into first polyimide layer 5220 (non-optical detectors, such as those exemplified previously herein for sequencing methods, can also be used in place of the CMOS detector). CMOS detector 5230 includes contact pads 5232. Contact pads 5232 are used to provide the electrical connection between CMOS detector 5230 and interconnect layer 5218 of flexible PCB 5210. CMOS detector 5230 includes a filter 5234. Atop filter 5234 is a passivation layer 5236. Atop passivation layer 5236 is a polyacrylamide gel coating 5238, which is facing droplet operations gap 5214. In one example, polyacrylamide gel coating 5238 is Poly(N-(5-azidoacetamidylpentyl) acrylamide-co-acrylamide), also known as PAZAM. In another example, polyacrylamide gel coating 5238 is Poly(N-(5-azidoacetamidylpentyl) acrylamide-co-acrylamide-co-acrylonitrile), also known as PAZAM-PAN. In some embodiments, the PAZAM and/or PAZAM-PAN can be modified to be thermally responsive, thereby forming a thermo-responsive polyacrylamide gel. More details about PAZAM can be found with reference to George et al., U.S. Patent App. No. 13/784,368, entitled "Polymer Coatings," filed on March 4, 2013.

An interruption, gap, or opening in second polyimide layer 5222 substantially aligns with polyacrylamide gel coating 5238 of CMOS detector 5230, which provides a line-of-sight path from CMOS detector 5230 through top substrate 5212. CMOS detector 5230 is in a recessed region with respect to the plane of droplet operations gap 5214. In one example, Figure 52 shows a light-emitting diode (LED) instrument directed at CMOS detector 5230 of droplet actuator 5200.
In droplet actuator 5200, flexible PCB 5210 is used to extend the fluidic channel beyond CMOS detector 5230. The use of flexible PCB 5210 provides improved flow uniformity and easier LED/fluidic/instrument integration. The use of flexible PCB 5210 also eliminates coupon PCB and other packaging steps.

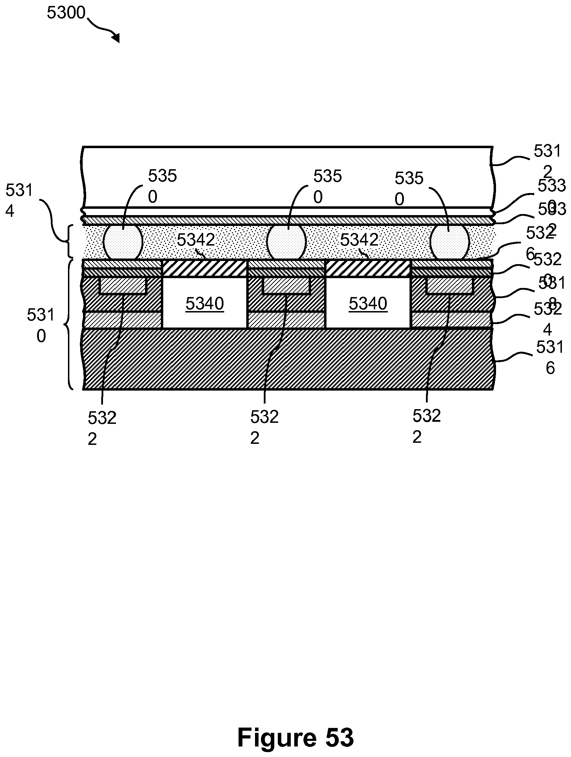

**Figure 53** illustrates a side view of a portion of a droplet actuator 5300 showing another example of using a flexible PCB for monolithic integration of a CMOS detector and digital fluidics. Droplet actuator 5300 includes a flexible PCB 5310, which is the bottom substrate, and a top substrate 5312 that are separated by a droplet operations gap 5314. Droplet operations gap 5314 contains filler fluid, such as silicone oil or hexadecane filler fluid. Flexible PCB 5310 comprises in order a first polyimide layer 5316, a second polyimide layer 5318, and a third polyimide layer 5320, wherein third polyimide layer 5320 is nearest droplet operations gap 5314. Flexible PCB 5310 includes an arrangement of droplet operations electrodes 5322 (e.g., electrowetting electrodes) that are disposed between second polyimide layer 5318 and third polyimide layer 5320. An interconnect layer 5324, such as a copper layer, is disposed between first polyimide layer 5316 and second polyimide layer 5318. A cytop layer 5326 is provided atop third polyimide layer 5320. Further, top substrate 5312 may include a ground reference plane or electrode 5330, which is coated with a cytop layer 5332. Ground reference plane or electrode 5330 is formed, for example, of transparent indium tin oxide (ITO). Droplet operations are conducted atop droplet operations electrodes 5322 on a droplet operations surface. For example, droplets 5350 are shown in droplet operations gap 5314 and atop droplet operations electrodes 5322.

CMOS detectors 5340, which are optical detectors, are arranged between droplet operations electrodes 5322 of flexible PCB 5310 of droplet actuator 5300. Atop each of the CMOS detectors 5340 is a polyacrylamide gel coating 5342, such as PAZAM or PAZAM-PAN.

Droplet actuator 5300 features flex-embedded CMOS, wafer level PAZAM coat, electrical connections (e.g., copper lines) embedded in the polyimide, flex-embedded digital fluidics, electrodes (e.g., copper electrodes) embedded between the polyimide, and a transparent ITO electrode on the top substrate to enable droplet manipulation/imaging.

### 4.5 Systems

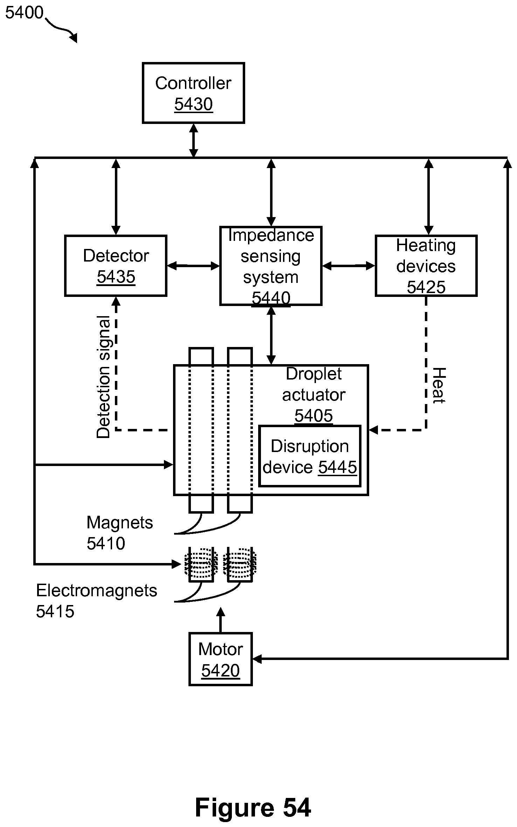

**Figure 54** illustrates a functional block diagram of an example of a microfluidics system 5400 that includes a droplet actuator 5405. Digital microfluidic technology conducts droplet operations on discrete droplets in a droplet actuator, such as droplet actuator 5405, by electrical control of their surface tension (electrowetting). The droplets may be sandwiched between two substrates of droplet actuator 5405, a bottom substrate and a top substrate separated by a droplet operations gap. The bottom substrate may include an arrangement of electrically addressable electrodes. The top substrate may include a reference electrode plane made, for example, from conductive ink or indium tin oxide (ITO). The bottom substrate and the top substrate may be coated with a hydrophobic material. Droplet operations are conducted in the droplet operations gap. The space around the droplets (i.e., the gap between bottom and top substrates) may be filled with an immiscible inert fluid, such as silicone oil, to prevent evaporation of the droplets and to facilitate their transport within the device. Other droplet operations may be effected by varying the patterns of voltage activation; examples include merging, splitting, mixing, and dispensing of droplets.

Droplet actuator 5405 may be designed to fit onto an instrument deck (not shown) of microfluidics system 5400. The instrument deck may hold droplet actuator 5405 and house other droplet actuator features, such as, but not limited to, one or more magnets and one or more heating devices. For example, the instrument deck may house one or more magnets 5410, which may be permanent magnets. Optionally, the instrument deck may house one or more electromagnets 5415. Magnets 5410 and/or electromagnets 5415 are positioned in relation to droplet actuator 5405 for immobilization of magnetically responsive beads. Optionally, the positions of magnets 5410 and/or electromagnets 5415 may be controlled by a motor 5420. Additionally, the instrument deck may house one or more heating devices 5425 for controlling the temperature within, for example, certain reaction and/or washing zones of droplet actuator 5405. In one example, heating devices 5425 may be heater bars that are positioned in relation to droplet actuator 5405 for providing thermal control thereof.

A controller 5430 of microfluidics system 5400 is electrically coupled to various hardware components of the apparatus set forth herein, such as droplet actuator 5405, electromagnets 5415, motor 5420, and heating devices 5425, as well as to a detector 5435, an impedance sensing system 5440, and any other input and/or output devices (not shown). Controller 5430 controls the overall operation of microfluidics system 5400. Controller 5430 may, for example, be a general purpose computer, special purpose computer, personal computer, or other programmable data processing apparatus. Controller 5430 serves to provide processing capabilities, such as storing, interpreting, and/or executing software instructions, as well as controlling the overall operation of the system. Controller 5430 may be configured and programmed to control data and/or power aspects of these devices. For example, in one aspect, with respect to droplet actuator 5405, controller 5430 controls droplet manipulation by activating/deactivating electrodes.

In one example, detector 5435 may be an imaging system that is positioned in relation to droplet actuator 5405. In one example, the imaging system may include one or more light-emitting diodes (LEDs) (i.e., an illumination source) and a digital image capture device, such as a charge-coupled device (CCD) camera. Detection can be carried out using an apparatus suited to a particular reagent or label in use. For example, an optical detector such as a fluorescence detector, absorbance detector, luminescence detector or the like can be used to detect appropriate optical labels. Systems designed for array-based detection are particularly useful. For example, optical systems for use with the methods set forth herein may be constructed to include various components and assemblies as described in Banerjee et al., U.S. Patent No. 8,241,573, entitled "Systems and Devices for Sequence by Synthesis Analysis," issued on August 14, 2012; Feng et al., U.S. Patent No. 7,329,860, entitled "Confocal Imaging Methods and Apparatus," issued on February 12, 2008; Feng et al., U.S. Patent No. 8,039,817, entitled "Compensator for Multiple Surface Imaging," issued on October 18, 2011; Feng et al., U.S. Patent Pub. No. 2009/0272914 A1, entitled "Compensator for Multiple Surface Imaging," published on November 5, 2009; and Reed et al., U.S. Patent Pub. No. 2012/0270305 A1, entitled "Systems, Methods, and Apparatuses to Image a Sample for Biological or Chemical Analysis," published on October 25, 2012. Such detection systems are particularly useful for nucleic acid sequencing embodiments.
Impedance sensing system 5440 may be any circuitry for detecting impedance at a specific electrode of droplet actuator 5405. In one example, impedance sensing system 5440 may be an impedance spectrometer. Impedance sensing system 5440 may be used to monitor the capacitive loading of any electrode, such as any droplet operations electrode, with or without a droplet thereon. For examples of suitable capacitance detection techniques, see Sturmer et al., International Patent Pub. No. WO/2008/101194, entitled "Capacitance Detection in a Droplet Actuator," published on December 30, 2009; and Kale et al., International Patent Pub. No. WO/2002/080822, entitled "System and Method for Dispensing Liquids," published on February 26, 2004.

Droplet actuator 5405 may include disruption device 5445. Disruption device 5445 may include any device that promotes disruption (lysis) of materials, such as tissues, cells and spores in a droplet actuator. Disruption device 5445 may, for example, be a sonication mechanism, a heating mechanism, a mechanical shearing mechanism, a bead beating mechanism, physical features incorporated into the droplet actuator 5405, an electric field generating mechanism, armal cycling mechanism, and any combinations thereof. Disruption device 5445 may be controlled by controller 5430.

It will be appreciated that various aspects of the present disclosure may be embodied as a method, system, computer readable medium, and/or computer program product. Aspects of the present disclosure may take the form of hardware embodiments, software embodiments (including firmware, resident software, micro-code, etc.), or embodiments combining software and hardware aspects that may all generally be referred to herein as a "circuit," "module," or "system." Furthermore, the methods of the present disclosure may take the form of a computer program product on a computer-usable storage medium having computer-usable program code embodied in the medium.

Any suitable computer useable medium may be utilized for software aspects of the present disclosure. The computer-usable or computer-readable medium may be, for example but not limited to, an electronic, magnetic, optical, electromagnetic, infrared, or semiconductor system, apparatus, device, or propagation medium. The computer readable medium may include transitory and/or non-transitory embodiments. More specific examples (a non-exhaustive list) of the computer-readable medium would include some or all of the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission medium such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Program code for carrying out operations of the methods and apparatus set forth herein may be written in an object oriented programming language such as Java, Smalltalk, C++ or the like. However, the program code for carrying out operations of the methods and apparatus set forth herein may also be written in conventional procedural programming languages, such as the "C" programming language or similar programming languages. The program code may be executed by a processor, application specific integrated circuit (ASIC), or other component that executes the program code. The program code may be simply referred to as a software application that is stored in memory (such as the computer readable medium discussed above). The program code may cause the processor (or any processor-controlled device) to produce a graphical user interface ("GUI"). The graphical user interface may be visually produced on a display device, yet the graphical user interface may also have audible features. The program code, however, may operate in any processor-controlled device, such as a computer, server, personal digital assistant, phone, television, or any processor-controlled device utilizing the processor and/or a digital signal processor.

The program code may locally and/or remotely execute. The program code, for example, may be entirely or partially stored in local memory of the processor-controlled device. The program code, however, may also be at least partially remotely stored, accessed, and downloaded to the processor-controlled device. A user's computer, for example, may entirely execute the program code or only partly execute the program code. The program code may be a stand-alone software package that is at least partly on the user's computer and/or partly executed on a remote computer or entirely on a remote computer or server. In the latter scenario, the remote computer may be connected to the user's computer through a communications network.

The methods and apparatus set forth herein may be applied regardless of networking environment. The communications network may be a cable network operating in the radiofrequency domain and/or the Internet Protocol (IP) domain. The communications network, however, may also include a distributed computing network, such as the Internet (sometimes alternatively known as the "World Wide Web"), an intranet, a local-area network (LAN), and/or a wide-area network (WAN). The communications network may include coaxial cables, copper wires, fiber optic lines, and/or hybrid-coaxial lines. The communications network may even include wireless portions utilizing any portion of the electromagnetic spectrum and any signaling standard (such as the IEEE 802 family of standards, GSM/CDMA/TDMA or any cellular standard, and/or the ISM band). The communications network may even include powerline portions, in which signals are communicated via electrical wiring. The methods and apparatus set forth herein may be applied to any wireless/wireline communications network, regardless of physical componentry, physical configuration, or communications standard(s).

Certain aspects of present disclosure are described with reference to various methods and method steps. It will be understood that each method step can be implemented by the program code and/or by machine instructions. The program code and/or the machine instructions may create means for implementing the functions/acts specified in the methods.

The program code may also be stored in a computer-readable memory that can direct the processor, computer, or other programmable data processing apparatus to function in a particular manner, such that the program code stored in the computer-readable memory produce or transform an article of manufacture including instruction means which implement various aspects of the method steps.
The program code may also be loaded onto a computer or other programmable data processing apparatus to cause a series of operational steps to be performed to produce a processor/computer implemented process such that the program code provides steps for implementing various functions/acts specified in the methods of the present disclosure.
The following describes certain embodiments that have been described and/or illustrated in the drawings. However, it is understood that the following embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the scope of the claims will be apparent to those of skill in the art upon reviewing the above description. The scope of the invention should, therefore, be determined with reference to the appended claims, along with the full scope of equivalents to which such claims are entitled.
In an embodiment (e.g., see Figures 1-36), a droplet actuator is provided that includes first and second substrates separated by a droplet-operations gap. The first and second substrates include respective hydrophobic surfaces that face the droplet-operations gap. The droplet actuator also includes a plurality of electrodes that are coupled to at least one of the first substrate and the second substrate. The electrodes are arranged along the droplet-operations gap to control movement of a droplet along the hydrophobic surfaces within the droplet-operations gap. The droplet actuator also includes a hydrophilic surface that is exposed to the droplet-operations gap. The hydrophilic surface is positioned to contact the droplet when the droplet is at a select position (see, e.g., position of droplet 124 in Figures 1B and 2-6B and droplet 130 in Figure 7B) within the droplet-operations gap.
In one aspect, the hydrophobic surfaces include at least one of a tetrafluoroethylene polymer, a fluoropolymer, and an amorphous fluoropolymer.

In another aspect, the hydrophilic surface includes at least one of silicon and glass.

In another aspect (see, e.g., Figures 1-5), the hydrophilic surface is at least partially surrounded by at least one of the hydrophobic surfaces.

In another aspect, a footprint of the hydrophilic surface is defined by at least one of the hydrophobic surfaces.

In another aspect, at least one of the first and second substrates includes a substrate material. The substrate material provides the corresponding hydrophobic surface.

In another aspect, at least one of the first and second substrates is coated or treated to provide the corresponding hydrophobic surface.

In another aspect, the electrodes are positioned to transport the droplet toward the hydrophilic surface.

In another aspect, the electrodes are positioned to transport the droplet away from the hydrophilic surface.

In another aspect, the droplet actuator includes a controller that is configured to control the electrodes to transport the droplet onto the hydrophilic surface from at least one of the hydrophobic surfaces.

In another aspect, the droplet actuator includes a controller that is configured to control the electrodes to transport the droplet onto at least one of the hydrophobic surfaces from the hydrophilic surface.

In another aspect, the droplet actuator includes a controller that is configured to control the electrodes to transport the droplet onto and off of the hydrophilic surface.

In another aspect, the controller is configured to control the electrodes to hold the droplet in contact with the hydrophilic surface for a predetermined period of time to carry out a designated reaction.

In another aspect, the droplet-operations gap and the electrodes are configured such that the droplet is substantially disc-shaped when transported through at least a portion of the droplet-operations gap.

In another aspect, the droplet actuator includes a filler fluid and the droplet deposited within the droplet-operations gap.

In another aspect, the droplet is aligned (see, e.g., droplet 124 in Figures 1B and 2-6B and droplet 130 in Figure 7B) with a designated electrode when at the select position such that the designated electrode faces and is adjacent to the droplet within the droplet-operations gap. For example, the hydrophilic surface may be positioned to face the designated electrode with the droplet-operations gap therebetween. As another example, the hydrophilic surface may be coupled to the same substrate as the designated electrode. As another example (e.g., see Figures 6A, 6B), the hydrophilic surface may be arranged between the first and second substrates. The hydrophilic surface may extend along a spacer that is positioned between the first and second substrates.

In another aspect, the hydrophilic surface has a footprint with a corresponding shape and the designated electrode has a footprint with a corresponding shape. For example, the footprint of the hydrophilic surface may have an area that is greater than or equal to an area of the footprint of the designated electrode. The footprint of the hydrophilic surface may have an area that is smaller than an area of the footprint of the designated electrode.

In another aspect, the corresponding shapes of the footprints may be similar. Alternatively, the corresponding shapes of the footprints may be different.

In another aspect, the droplet-operations gap has a gap height. The gap height at the designated electrode may be different than the gap height at an electrode adjacent to the designated electrode such that the droplet has a different height when aligned with the designated electrode than when aligned with the adjacent electrode. In one embodiment, the gap height at the designated electrode may be greater than the gap height at the adjacent electrode. In another embodiment, the gap height at the designated electrode may be less than the gap height at the adjacent electrode.

In another aspect, the droplet actuator includes a support element (see, e.g., hydrophilic region 122) having the hydrophilic surface. For example, the support element may include at least one of a silicon material or metal (see, e.g., Figures 21A and 21B).

In another aspect, the first substrate or the second substrate includes the support element.

In another aspect, the designated electrode is part of a sub-set of the plurality of electrodes. The hydrophilic surface may be in contact with the droplet when the droplet is held by any one of the electrodes of the sub-set.

In another aspect, the hydrophilic surface is aligned with multiple electrodes, including the designated electrode, such that each of the multiple electrodes faces the hydrophilic surface.

In another aspect, the hydrophilic surface is among a plurality of hydrophilic surfaces that are exposed to the droplet-operations gap. The plurality of electrodes may form a droplet-operations path along the droplet-operations gap. The electrodes may be configured to move the droplet along the droplet-operations path. The hydrophilic surfaces may be positioned in a series that extends parallel to the droplet-operations path. In one aspect, each of the hydrophilic surfaces in the series has a footprint that is sized to permit the droplet to move along the droplet-operations path using electrowetting-mediated droplet operations conducted by the electrodes.

In another aspect, the hydrophilic surface has a footprint and includes hydrophilic portions and hydrophobic portions within the footprint. For example, the footprint may have a total hydrophilic area formed by the hydrophilic portions and a total hydrophobic area formed by the hydrophobic portions. A ratio of the total hydrophilic area to a total hydrophobic area may permit the droplet to be moved onto and from the hydrophilic surface using electrowetting-mediated droplet operations conducted by the electrodes.

In another aspect, the hydrophilic portions and the hydrophobic portions form a designated pattern. The designated pattern may be a checkerboard pattern, a parallel-bars pattern, a hatched pattern, a spiral pattern, or a pattern of concentric shapes.

In another aspect, the droplet-operations gap may include a retention zone that is not aligned with an electrode. The retention zone may be sized to receive the droplet. In some embodiments, the hydrophilic surface may extend continuously along the droplet-operations gap to align with the retention zone. In some embodiments, the droplet actuator includes a barrier that at least partially surrounds the retention zone. The barrier may be porous to permit filler fluid to flow into and out of the retention zone.

In another aspect, the first substrate has a varying contour such that a gap height measured between the first and second substrates changes. In some embodiments, the plurality of electrodes forms a droplet-operations path along the droplet-operations gap. The contour of the first substrate may be configured such that the gap height changes along the path. The droplet-operations gap may have different first, second, and third gap heights along the droplet-operations path. In one aspect, the first gap height may be less than the second gap height and the second gap height may be less than the third gap height. The hydrophilic surface may be located within at least a portion of the droplet-operations path that has the second gap height.

In another aspect, the varying contour is configured to induce a pumping effect caused by a change in flow rate through the droplet-operations gap.

In another aspect, the hydrophilic surface is located within a recessed region along one of the first substrate or the second substrate. In some embodiments, the recessed region and the hydrophilic surface are sized to hold a volume that includes a plurality of droplets.

In another aspect, a dielectric layer is positioned between the hydrophilic surface and the electrodes.

In another aspect, the hydrophilic surface extends along one of the first substrate or the second substrate. The hydrophilic surface may be aligned with an opening along the other substrate that is opposite the hydrophilic surface.

In another aspect, the first substrate includes a ground electrode and a dielectric layer that each extend along the droplet-operations gap. The dielectric layer may be located between the ground electrode and the droplet-operations gap. The second substrate may include the plurality of electrodes, wherein the plurality of electrodes is configured to impart an electro-wetting effect on the first substrate.

In another aspect, the ground electrode is a ground reference plane that extends continuously along the first substrate such that the ground reference plane opposes the electrodes with the droplet-operations gap therebetween.

In another aspect, the second substrate includes a dielectric layer that extends between the electrodes and the droplet-operations gap. The hydrophilic surface may bre coupled to the dielectric layer of the second substrate.

In another aspect, the plurality of electrodes includes a gap electrode that is coupled to the dielectric layer of the second substrate and is located between the dielectric layer of the second substrate and the droplet-operations gap.

In another aspect, at least some of the electrodes and at least one of the first or second substrates are part of a flexible printed circuit board.

In another aspect, an optical detector coupled to one of the first substrate or the second substrate, the hydrophilic surface being aligned with the optical detector for detecting light signals from the hydrophilic surface.

In an embodiment, a droplet actuator is provided that includes a substrate and a flexible printed circuit board (PCB) coupled to the substrate and defining a droplet-operations gap therebetween. The flexible PCB includes a plurality of electrodes that are sized, shaped, and spaced relative to one another to conduct electrowetting-mediated operations of a droplet along the droplet-operations gap. The droplet actuator includes an optical detector that is coupled to the flexible PCB and positioned to detect light signals from the droplet-operations gap.

In one aspect, the optical detector is a complementary metal-oxide-semiconductor (CMOS) detector. In some embodiments, the CMOS detector is embedded within the flexible PCB.

In another aspect, the flexible PCB includes a recessed region. The optical detector may be positioned within the recessed region.

In another aspect, the optical detector includes a filter and a passivation layer. The passivation layer may be positioned between the filter and the droplet-operations gap.

In another aspect, the droplet actuator includes a polymer coating deposited along the passivation layer. For example, the polymer coating may include a polyacrylamide gel coating.

In an embodiment, a flexible printed circuit board (PCB) (see, e.g., Figures 37-39) is provided that includes first and second polyimide layers and a plurality of electrodes located between the first and second polyimide layers. The electrodes may be sized, shaped, and spaced relative to one another to conduct electrowetting mediated operations of a droplet along one of the first and second polyimide layers. The flexible PCB may include an interconnect layer coupled to the first and second polyimide layers and electrically coupled to the electrodes through conductive traces. The interconnect layer may be, for example, another layer found in PCB that has conductive pathways (e.g., traces, vias, and the like) that electrically couple to the electrodes. The conductive pathways may enable the controller to control the electrodes to provide the electrowetting-mediated operations and move the droplet. The interconnect layer may be configured to be electrically coupled to an external system for controlling the electrodes during the electrowetting-mediated operations. The interconnect layer may be directly coupled to the external system or indirectly coupled through other conductive pathways.

In one aspect, the flexible PCB includes a CMOS detector embedded within the first and second polyimide layers, the CMOS detector positioned to detect light signals along a surface of the flexible PCB.

In an embodiment, a method is provided that includes providing a droplet actuator including a droplet-operations gap and a plurality of electrodes positioned along the droplet-operations gap. The droplet-operations gap is defined between opposing hydrophobic surfaces. The droplet actuator has a hydrophilic surface exposed to the droplet-operations gap. The method may also include controlling the electrodes to transport a droplet using electrowetting-mediated droplet operations through the droplet-operations gap along the hydrophobic surfaces to a select position. The droplet is in contact with the hydrophilic surface when the droplet in a select position.

In one aspect, the hydrophobic surfaces include at least one of a tetrafluoroethylene polymer, a fluoropolymer, and an amorphous fluoropolymer.

In another aspect, the hydrophilic surface includes at least one of silicon and glass.

In another aspect, the hydrophilic surface is at least partially surrounded by at least one of the hydrophobic surfaces.

In another aspect, a footprint of the hydrophilic surface is defined by at least one of the hydrophobic surfaces.

In another aspect, the droplet actuator includes first and second substrates that are separated by the droplet-operations gap. At least one of the first and second substrates may have a substrate material. The substrate material may provide the corresponding hydrophobic surface.

In another aspect, the droplet actuator includes first and second substrates that are separated by the droplet-operations gap. At least one of the first and second substrates may be coated or treated to provide the corresponding hydrophobic surface.

In another aspect, the method includes controlling the electrodes to transport the droplet includes transporting the droplet toward the hydrophilic surface.

In another aspect, the method includes controlling the electrodes to transport the droplet includes transporting the droplet away from the hydrophilic surface.

In another aspect, the method includes controlling the electrodes to transport the droplet includes transporting the droplet onto and off of the hydrophilic surface. In some embodiments, controlling the electrodes to transport the droplet includes holding the droplet in contact with the hydrophilic surface for a predetermined period of time. Optionally, the method may include carrying out a designated reaction while the droplet is in contact with the hydrophilic surface.

In another aspect, the method includes the droplet being substantially disc-shaped when transported through at least a portion of the droplet-operations gap.

In another aspect, the droplet is a first droplet, the method further comprising controlling the electrodes to move a second droplet to engage the first droplet and displace the first droplet from the select position. Optionally, the method includes controlling the electrodes to move the first droplet further away from the select position after the first droplet has been displaced. In some embodiments, the first droplet may be incapable of being displaced from the select position using only electrowetting-mediated droplet operations on the first droplet.

In another aspect, the method includes moving the second droplet to repeatedly engage the first droplet to move the first droplet to different positions along the droplet-operations gap. Optionally, the first droplet may be in contact with different portions of the hydrophilic surface when in the different positions. In some embodiments, the first droplet remains in contact with a portion of the hydrophilic surface after being displaced.

In another aspect, the droplet is a first droplet and the method also includes controlling a second droplet to engage and combine with the first droplet at the select position and form a combined droplet. The method may also include moving at least a portion of the combined droplet away from the select position.

In another aspect, the first droplet has a volume such that the first droplet aligns with multiple electrodes when in the select position. The second droplet may have a volume that is smaller than the first droplet, wherein the portion of the combined droplet that is moved away from the select position is substantially equal to a volume of the second droplet.

In another aspect, the droplet is a first droplet. The method may also moving a second droplet toward the first droplet with a filler fluid therebetween thereby generating a pumping force. The pumping force displaces the first droplet from the select position.

In another aspect, the first droplet is moved without using electrowetting-mediated droplet operations conducted by the electrodes.

In another aspect, the second droplet has a reservoir volume. The method may also include splitting the second droplet to form the first droplet and then moving the first droplet with the pumping force.

In another aspect, the electrodes form a two-dimensional array of electrodes. The second droplet partially surrounds the first droplet with filler fluid located therebetween prior to generating the pumping force.

In an embodiment, a method is provided that includes providing a droplet actuator having a droplet-operations gap and a plurality of electrodes positioned along the droplet-operations gap. The method also includes controlling the electrodes to move a first droplet using electrowetting-mediated droplet operations through the droplet-operations gap to a select position. The method also includes controlling the electrodes to move a second droplet to engage the first droplet and displace the first droplet from the select position, wherein the first and second droplets comprise different substances.

In one aspect, the method also includes moving the first droplet further away from the select position after the first droplet has been displaced.

In another aspect, the first droplet is incapable of being displaced from the select position using only electrowetting-mediated droplet operations on the first droplet.

In another aspect, the method also includes controlling the second droplet to repeatedly engage the first droplet to move the first droplet to different positions along the droplet-operations gap.

In an embodiment, a method is provided that includes providing a droplet actuator including a droplet-operations gap and a plurality of electrodes positioned along the droplet-operations gap. The droplet actuator has a hydrophilic surface exposed to the droplet-operations gap. The method also includes controlling the electrodes to move a droplet using electrowetting-mediated droplet operations through the droplet-operations gap to a select position. The method also includes controlling the electrodes to move a second droplet to engage and combine with the first droplet at the select position and form a combined droplet. The method also includes controlling the electrodes to move at least a portion of the combined droplet away from the select position.

In one aspect, the first droplet has a volume such that the first droplet aligns with multiple electrodes when in the select position. The second droplet has a volume that is smaller than the first droplet, wherein the portion of the combined droplet that is moved away from the select position is substantially equal to a volume of the second droplet.

In an embodiment, a method is provided that includes providing a droplet actuator having a droplet-operations gap and a plurality of electrodes positioned along the droplet-operations gap. The droplet actuator has a hydrophilic surface that is exposed to the droplet-operations gap. The method also includes controlling the electrodes to move a first droplet using electrowetting-mediated droplet operations through the droplet-operations gap to a select position. The method also includes controlling the electrodes to move a second droplet toward the first droplet with a filler fluid therebetween thereby generating a pumping force. The pumping force may displace the first droplet from the select position.

In one aspect, the first droplet is moved without using electrowetting-mediated droplet operations conducted by the electrodes.

In another aspect, the electrodes form a two-dimensional array of electrodes. The second droplet partially surrounds the first droplet with filler fluid located therebetween prior to generating the pumping force.

In an embodiment, a microfluidics system is provided that includes a droplet actuator and a controller that is configured to perform any one of the methods set forth herein.

In an embodiment, a microfluidics system is provided that includes first and second substrates separated by a droplet-operations gap. The first and second substrates include respective hydrophobic surfaces that face the droplet-operations gap. The microfluidics system also includes a plurality of electrodes that are coupled to at least one of the first substrate or the second substrate. The electrodes are arranged along the droplet-operations gap to control movement of a droplet along the hydrophobic surfaces through the droplet-operations gap. The microfluidics system also includes a hydrophilic surface that is exposed to the droplet-operations gap. The hydrophilic surface is positioned to contact the droplet when the droplet in a select position in the droplet-operations gap. The microfluidics system also includes a controller that is operably coupled to the electrodes and configured to control the electrodes to conduct electrowetting-mediated droplet operations.

In one aspect, the hydrophobic surfaces include at least one of a tetrafluoroethylene polymer, a fluoropolymer, and an amorphous fluoropolymer.

In another aspect, the hydrophilic surface includes at least one of silicon and glass.

In another aspect, the hydrophilic surface is at least partially surrounded by at least one of the hydrophobic surfaces.

In another aspect, a footprint of the hydrophilic surface is defined by at least one of the hydrophobic surfaces.

In another aspect, at least one of the first and second substrates includes a substrate material. The substrate material provides the corresponding hydrophobic surface.

In another aspect, at least one of the first and second substrates is coated or treated to provide the corresponding hydrophobic surface.

In another aspect, the electrodes are positioned to transport the droplet toward the hydrophilic surface.

In another aspect, the electrodes are positioned to transport the droplet away from the hydrophilic surface.

In another aspect, the controller is configured to control the electrodes to transport the droplet onto the hydrophilic surface from at least one of the hydrophobic surfaces.

In another aspect, the controller is configured to control the electrodes to transport the droplet onto at least one of the hydrophobic surfaces from the hydrophilic surface.

In another aspect, the controller is configured to control the electrodes to transport the droplet onto and off of the hydrophilic surface.

In another aspect, the controller is configured to control the electrodes to hold the droplet in contact with the hydrophilic surface for a predetermined period of time to carry out a designated reaction.

In another aspect, the droplet-operations gap and the electrodes are configured such that the droplet is substantially disc-shaped when transported through at least a portion of the droplet-operations gap.

In another aspect, the droplet is a first droplet. The controller may be configured to control the electrodes to move the first droplet to the select position so that the hydrophilic surface is in contact with the first droplet. The controller may also be configured to control the electrodes to move a second droplet to engage the first droplet and displace the first droplet from the select position. In some embodiments, the controller is further configured to control the electrodes to move the first droplet further away from the select position after the first droplet has been displaced. Optionally, the hydrophilic surface is dimensioned such that the first droplet is incapable of being displaced from the select position using only electrowetting-mediated droplet operations on the first droplet.

In another aspect, the controller is configured to control the electrodes to repeatedly displace the first droplet with the second droplet to move the first droplet to different positions along the droplet-operations gap. Optionally, the first droplet is in contact with different portions of the hydrophilic surface when in the different positions.

In another aspect, the droplet is a first droplet. The controller is configured to control the electrodes to move the first droplet to the select position so that the hydrophilic surface is in contact with the first droplet. The controller is configured to control a second droplet to engage and combine with the first droplet at the select position and form a combined droplet. The controller is further configured to move at least a portion of the combined droplet away from the select position.

In another aspect, the first droplet has a volume such that the first droplet aligns with multiple electrodes when in the select position. The second droplet may have a volume that is smaller than the first droplet, wherein the portion of the combined droplet that is moved away from the select position is substantially equal to a volume of the second droplet.

In another aspect, the droplet is a first droplet. The controller is configured to control the electrodes to move the first droplet to the select position so that the hydrophilic surface is in contact with the first droplet. The controller is configured to control a second droplet to move the second droplet within the droplet-operations gap toward the first droplet thereby generating a pumping force when a filler fluid is located within the droplet-operations gap, the pumping force moving the first droplet. Optionally, the first droplet is moved without using electrowetting-mediated forces generated by the electrodes.

In another aspect, the second droplet has a reservoir volume. The controller may be configured to split the first droplet from the second droplet and move the second droplet to generate the pumping force.

In another aspect, the electrodes form a two-dimensional array of electrodes. The controller is configured to partially surround the first droplet with the second droplet with filler fluid located therebetween.

In an embodiment, a droplet actuator is provided that includes first and second substrates separated by a droplet-operations gap. The droplet actuator also includes a ground electrode that is coupled to the first substrate and extends along the droplet-operations gap. The droplet actuator also includes a dielectric layer that is coupled to the first substrate and extends along the droplet-operations gap. The dielectric layer may be located between the ground electrode and the droplet-operations gap. The droplet actuator may also include a plurality of electrodes coupled to the second substrate, wherein the plurality of electrodes are configured to impart an electro-wetting effect on the first substrate.

In one aspect, the ground electrode is a ground reference plane that extends continuously along the first substrate such that the ground reference plane opposes the electrodes with the droplet-operations gap therebetween.

In another aspect, the second substrate includes a dielectric layer that extends between the electrodes and the droplet-operations gap. The droplet actuator may also include a hydrophilic surface that is coupled to the dielectric layer of the second substrate and is exposed to the droplet-operations gap. Optionally, the plurality of electrodes includes a gap electrode that is coupled to the dielectric layer of the second substrate and is located between the dielectric layer of the second substrate and the droplet-operations gap. Optionally, the plurality of electrodes includes substrate electrodes. The dielectric layer may be located between at least one of the substrate electrodes and the gap electrode. The gap electrode may be dimensioned to align with a plurality of the substrate electrodes with the dielectric layer of the second substrate therebetween.

In an embodiment, a droplet actuator is provided that includes first and second substrates separated by a droplet-operations gap and a ground electrode coupled to the first substrate and extending along the droplet-operations gap. The droplet actuator also includes a dielectric layer that is coupled to the second substrate. The droplet actuator also includes a plurality of electrodes that are coupled to the second substrate and include a gap electrode and a plurality of substrate electrodes. The dielectric layer extends between the gap electrode and the plurality of substrate electrodes. The gap electrode may be exposed to the droplet-operations gap, wherein the plurality of electrodes are configured to impart an electro-wetting effect on the first substrate.

In one aspect, the ground electrode is a ground reference plane that extends continuously along the first substrate.

In another aspect, the gap electrode is dimensioned to align with a plurality of the substrate electrodes with the dielectric layer of the second substrate therebetween.

In another aspect, the droplet actuator includes a hydrophilic surface that is exposed to the droplet-operations gap and located proximate to the gap electrode. The gap electrode may be configured to move a droplet onto the hydrophilic surface using electrowetting-mediated droplet operations.

In another aspect, the droplet actuator includes a controller configured to activate the plurality of electrodes to move a droplet through the droplet-operations gap.

In particular embodiments, the present disclosure provides a method of fluid exchange that includes the steps of (a) providing a droplet actuator that includes (i) substrates forming a gap; (ii) some or all of the substrates having electrodes configured for conducting electrowetting-mediated droplet operations; (iii) a hydrophilic region on a surface of at least one the substrates and facing the gap; (b) using the electrowetting electrodes to transport a first droplet into contact with the hydrophilic region, thereby forming a column of liquid in contact with the hydrophilic region; (c) using the electrowetting electrodes to transport a second droplet into contact with the first droplet to yield a combined droplet; (d) transporting a subdroplet away from the combined droplet, leaving the liquid column in contact with hydrophilic region; and (e) repeating steps (b) and (c) to substantially exchange liquid in contact with the hydrophilic region.

The method of fluid exchange can be performed on the apparatus set forth herein and using any of a variety of methods set forth herein. For example, in particular embodiments, the hydrophilic surface can include nucleic acid capture moieties. The hydrophilic surface can be part of a patterned flow cell. The hydrophilic surface can be on glass. The hydrophilic surface can be on fused silica. The hydrophilic surface can be on a silicon chip. The hydrophilic surface can include a hydrogel. The hydrophilic surface can include wells or microwells or nanowells. The hydrophilic surface can include hydrophilic regions and hydrophobic regions.

The hydrophilic surface can include a regular pattern of hydrophilic regions interspersed with hydrophobic regions.

Also provided by the present disclosure is a method of displacing a liquid column that includes the steps of (a) providing a droplet actuator that includes (i) substrates forming a gap; (ii) some or all of the substrates having electrodes configured for conducting electrowetting-mediated droplet operations; (iii) a hydrophilic region on a surface of at least one the substrates and facing the gap; (b) using the electrowetting electrodes to transport a first droplet into contact with the hydrophilic region, thereby forming a column of liquid in contact with the hydrophilic region; (c) using the electrowetting electrodes to transport a second droplet immiscible with the first droplet into contact with the first droplet to displace the liquid column from the hydrophilic region; and (d) using the electrowetting electrodes to transport the first droplet away from the hydrophilic region.

The method of displacing the liquid column can be performed on the apparatus set forth herein and using any of a variety of methods set forth herein. For example, in particular embodiments, the hydrophilic surface can include nucleic acid capture moieties. The hydrophilic surface can be part of a patterned flow cell. The hydrophilic surface can be on glass. The hydrophilic surface can be on fused silica. The hydrophilic surface can be on a silicon chip. The hydrophilic surface can include a hydrogel. The hydrophilic surface can include wells or microwells or nanowells. The hydrophilic surface can include hydrophilic regions and hydrophobic regions. The hydrophilic surface can include a regular pattern of hydrophilic regions interspersed with hydrophobic regions.

This disclosure further provides a method of preventing droplet trapping, including the steps of (a) providing a droplet actuator that includes (i) substrates forming a gap; (ii) some or all of the substrates having electrodes configured for conducting electrowetting-mediated droplet operations; (iii) a hydrophilic region on a surface of at least one the substrates and facing the gap; (b) providing a hydrophobic droplet in contact with the hydrophilic region; (c) using the electrowetting electrodes to transport an aqueous droplet into contact with hydrophilic region in the presence of the hydrophobic droplet, permitting aqueous droplet to contact hydrophilic region without becoming trapped; and (d) using the electrowetting electrodes to transport the aqueous droplet away from the hydrophilic region.

The method of preventing droplet trapping can be performed on the apparatus set forth herein and using any of a variety of methods set forth herein. For example, in particular embodiments, the hydrophilic surface can include nucleic acid capture moieties. The hydrophilic surface can be part of a patterned flow cell. The hydrophilic surface can be on glass. The hydrophilic surface can be on fused silica. The hydrophilic surface can be on a silicon chip. The hydrophilic surface can include a hydrogel. The hydrophilic surface can include wells or microwells or nanowells. The hydrophilic surface can include hydrophilic regions and hydrophobic regions. The hydrophilic surface can include a regular pattern of hydrophilic regions interspersed with hydrophobic regions.

## Claims

1. A droplet actuator (100) comprising:
first and second substrates (110,112) separated by a droplet-operations gap (114), the first and second substrates including respective hydrophobic surfaces that face the droplet-operations gap;
a plurality of electrodes (118) coupled to at least one of the first substrate and the second substrate, the electrodes arranged along the droplet-operations gap to control movement of a droplet along the hydrophobic surfaces within the droplet-operations gap; and **characterised in that** the droplet actuator further comprising
a hydrophilic or variegated-hydrophilic surface (122) exposed to the droplet-operations gap, the hydrophilic or variegated-hydrophilic surface being positioned to contact the droplet when the droplet is at a select position within the droplet-operations gap.

2. The droplet actuator of claim 1, wherein the hydrophobic surfaces include at least one of a tetrafluoroethylene polymer, a fluoropolymer, and an amorphous fluoropolymer.

3. The droplet actuator of claim 1 or claim 2, wherein the variegated-hydrophilic surface comprises a rough surface that forms interstitial regions that separate a plurality of nanowells.

4. The droplet actuator of any one of claims 1-3, wherein the electrodes are positioned to transport the droplet toward the hydrophilic or variegated-hydrophilic surface, or to transport the droplet away from the hydrophilic or variegated-hydrophilic surface.

5. The droplet actuator of any one of claims 1-4, further comprising a controller, the controller configured to control the electrodes to transport the droplet onto the hydrophilic or variegated-hydrophilic surface from at least one of the hydrophobic surfaces, or configured to control the electrodes to transport the droplet onto at least one of the hydrophobic surfaces from the hydrophilic or variegated-hydrophilic surface.

6. The droplet actuator of claim 1-5, wherein the droplet is aligned with a designated electrode when at the select position, such that the designated electrode faces and is adjacent to the droplet within the droplet-operations gap.

7. The droplet actuator of claim 6, wherein the hydrophilic or variegated-hydrophilic surface is positioned to face the designated electrode with the droplet-operations gap therebetween, or wherein the hydrophilic or variegated-hydrophilic surface is coupled to the same substrate as the designated electrode, or wherein the hydrophilic or variegated-hydrophilic surface is arranged between the first and second substrates.

8. The droplet actuator of claim 6 or 7, wherein the droplet-operations gap has a gap height, the gap height at the designated electrode being different than the gap height at an electrode adjacent to the designated electrode such that the droplet has a different height when aligned with the designated electrode than when aligned with the adjacent electrode.

9. The droplet actuator of any one of claims 1-8, wherein the variegated-hydrophilic surface has hydrophilic portions and superhydrophobic portions within the footprint.

10. The droplet actuator of any one of claims 1-9, wherein a dielectric layer is positioned between the hydrophilic or variegated-hydrophilic surface and the electrodes.

11. The droplet actuator of any one of claim 1-10, further comprising an optical detector coupled to one of the first substrate or the second substrate, the hydrophilic or variegated-hydrophilic surface being aligned with the optical detector for detecting light signals from the hydrophilic surface.

12. A method comprising:
providing a droplet actuator including a droplet-operations gap and a plurality of electrodes positioned along the droplet-operations gap, the droplet-operations gap being defined between opposing hydrophobic surfaces, the droplet actuator having a hydrophilic or variegated-hydrophilic surface exposed to the droplet-operations gap;
controlling the electrodes to transport a droplet using electrowetting-mediated droplet operations through the droplet-operations gap along the hydrophobic surfaces to a select position, wherein the droplet is in contact with the hydrophilic or variegated-hydrophilic surface when the droplet in a select position.

13. The method of claim 12, wherein controlling the electrodes to transport the droplet includes transporting the droplet toward the hydrophilic or variegated-hydrophilic surface, or transporting the droplet away from the hydrophilic or variegated-hydrophilic surface.

14. The method of claim 12 or 13, wherein the droplet is a first droplet, the method further comprising controlling the electrodes to move a second droplet to engage the first droplet and displace the first droplet from the select position, or the method further comprising controlling the electrodes to move the first droplet further away from the select position after the first droplet has been displaced.

15. The method of claim 12 or 13, wherein the droplet is a first droplet, the method further comprising controlling a second droplet to engage and combine with the first droplet at the select position and form a combined droplet, the method further comprising moving at least a portion of the combined droplet away from the select position.

16. A microfluidics system comprising:
first and second substrates separated by a droplet-operations gap, the first and second substrates including respective hydrophobic surfaces that face the droplet-operations gap;
a plurality of electrodes coupled to at least one of the first substrate or the second substrate, the electrodes arranged along the droplet-operations gap to control movement of a droplet along the hydrophobic surfaces through the droplet-operations gap;
a hydrophilic or variegated-hydrophilic surface exposed to the droplet-operations gap, the hydrophilic surface being positioned to contact the droplet when the droplet in a select position in the droplet-operations gap; and
a controller that is operably coupled to the electrodes and configured to control the electrodes to conduct electrowetting-mediated droplet operations.

## Patentansprüche

1. Tröpfchenaktuator (100), der Folgendes aufweist:
erste und zweite Substrate (110, 112), die durch einen Spalt (114) für Tröpfchenoperationen getrennt sind, wobei die ersten und zweiten Substrate jeweils hydrophobe Flächen beinhalten, die dem Spalt für Tröpfchenoperationen zugewandt sind;
eine Vielzahl von Elektroden (118), die an zumindest dem ersten Substrat und/oder dem zweiten Substrat gekoppelt sind, wobei die Elektroden entlang des Spalts für Tröpfchenoperationen angeordnet sind, um die Bewegung eines Tröpfchens entlang der hydrophoben Flächen innerhalb des Spalts für Tröpfchenoperationen zu steuern; und **dadurch gekennzeichnet, dass** der Tröpfchenaktuator ferner Folgendes aufweist, nämlich
eine hydrophile oder uneinheitlich hydrophile Fläche (122), die an den Spalt für Tröpfchenoperationen exponiert ist, wobei die hydrophile oder uneinheitlich hydrophile Fläche so positioniert ist, um das Tröpfchen zu kontaktieren, wenn sich das Tröpfchen an einer Auswahlposition im Inneren des Spalts für Tröpfchenoperationen befindet.

2. Tröpfchenaktuator nach Anspruch 1, wobei die hydrophoben Flächen zumindest eines von Folgendem beinhalten, nämlich einem Tetrafluorethylenpolymer, einem Fluoropolymer und einem amorphen Fluoropolymer.

3. Tröpfchenaktuator nach Anspruch 1 oder Anspruch 2, wobei die uneinheitlich hydrophile Fläche eine raue Fläche aufweist, die dazwischenliegende Bereiche bildet, welche eine Vielzahl von Nanovertiefungen separieren.

4. Tröpfchenaktuator nach einem der Ansprüche 1-3, wobei die Elektroden positioniert sind, um das Tröpfchen in Richtung der hydrophilen oder uneinheitlich hydrophilen Fläche zu transportieren, oder um das Tröpfchen weg von der hydrophilen oder uneinheitlich hydrophilen Fläche zu transportieren.

5. Tröpfchenaktuator nach einem der Ansprüche 1-4, der ferner eine Steuereinheit aufweist, wobei die Steuereinheit ausgebildet ist, um die Elektroden zu steuern, um das Tröpfchen auf der hydrophilen oder uneinheitlich hydrophilen Fläche von zumindest einer der hydrophoben Flächen zu transportieren, oder ausgebildet ist, um die Elektroden zu steuern, um das Tröpfchen auf zumindest einer der hydrophoben Flächen von der hydrophilen oder uneinheitlich hydrophilen Fläche zu transportieren.

6. Tröpfchenaktuator nach Anspruch 1-5, wobei das Tröpfchen an der Auswahlposition mit einer designierten Elektrode ausgerichtet ist, so dass die designierte Elektrode innerhalb des Spalts für Tröpfchenoperationen dem Tröpfchen zugewandt ist und zu diesem benachbart ist.

7. Tröpfchenaktuator nach Anspruch 6, wobei die hydrophile oder uneinheitlich hydrophile Fläche positioniert ist, um der designierten Elektrode mit dem dazwischenliegenden Spalt für Tröpfchenoperationen zugewandt ist, oder wobei die hydrophile oder uneinheitlich hydrophile Fläche an das gleiche Substrat wie die designierte Elektrode gekoppelt ist, oder wobei die hydrophile oder uneinheitlich hydrophile Fläche zwischen den ersten und zweiten Substraten angeordnet ist.

8. Tröpfchenaktuator nach Anspruch 6 oder 7, wobei der Spalt für Tröpfchenoperationen eine Spalthöhe aufweist, wobei die Spalthöhe an der designierten Elektrode verschieden ist von der Spalthöhe an einer Elektrode, die zu der designierten Elektrode benachbart ist, so dass das Tröpfchen eine Höhe aufweist, die verschieden ist, wenn es mit der designierten Elektrode ausgerichtet und wenn es mit der benachbarten Elektrode ausgerichtet ist.

9. Tröpfchenaktuator nach einem der Ansprüche 1-8, wobei die uneinheitlich hydrophile Fläche hydrophile Teile und superhydrophobe Teile im Inneren der Grundfläche aufweist.

10. Tröpfchenaktuator nach einem der Ansprüche 1-9, wobei eine dielektrische Schicht zwischen der hydrophilen oder uneinheitlich hydrophilen Fläche und den Elektroden positioniert ist.

11. Tröpfchenaktuator nach einem der Ansprüche 1-10, der ferner einen optischen Detektor aufweist, der an eines von Folgendem gekoppelt ist, nämlich das erste Substrat oder das zweite Substrat, wobei die hydrophile oder uneinheitlich hydrophile Fläche mit dem optischen Detektor zum Detektieren von Lichtsignalen von der hydrophilen Fläche ausgerichtet ist.

12. Verfahren, das Folgendes aufweist:
Bereitstellen eines Tröpfchenaktuators, der ein Spalt für Tröpfchenoperationen und eine Vielzahl von Elektroden beinhaltet, die entlang des Spalts für Tröpfchenoperationen positioniert sind, wobei der Spalt für Tröpfchenoperationen zwischen gegenüberliegenden hydrophoben Flächen definiert ist, wobei der Tröpfchenaktuator eine hydrophile oder uneinheitlich hydrophile Fläche aufweist, die an den Spalt für Tröpfchenoperationen exponiert ist;
Steuern der Elektroden, um ein Tröpfchen unter Verwendung von über Elektrobenetzung vermittelte Tröpfchenoperationen durch den Spalt für Tröpfchenoperationen entlang der hydrophoben Flächen an eine Auswahlposition zu transportieren, wobei das Tröpfchen in Kontakt mit der hydrophilen oder uneinheitlich hydrophilen Fläche steht, wenn sich das Tröpfchen in einer Auswahlposition befindet.

13. Verfahren nach Anspruch 12, wobei das Steuern der Elektroden, um das Tröpfchen zu transportieren, das Transportieren des Tröpfchens in Richtung der hydrophilen oder uneinheitlich hydrophilen Fläche beinhaltet, oder das Transportieren des Tröpfchens weg von der hydrophilen oder uneinheitlich hydrophilen Fläche beinhaltet.

14. Verfahren nach Anspruch 12 oder 13, wobei das Tröpfchen ein erstes Tröpfchen ist, wobei das Verfahren ferner das Steuern der Elektroden umfasst, um ein zweites Tröpfchen zu bewegen, um in das erste Tröpfchen einzugreifen und das erste Tröpfchen von der Auswahlposition zu verlagern, oder das Verfahren ferner das Steuern der Elektroden umfasst, um das erste Tröpfchen weiter weg von der Auswahlposition zu bewegen, nachdem das erste Tröpfchen verlagert wurde.

15. Verfahren nach Anspruch 12 oder 13, wobei das Tröpfchen ein erstes Tröpfchen ist, wobei das Verfahren ferner das Steuern eines zweiten Tröpfchens umfasst, um in das erste Tröpfchen an der Auswahlposition einzugreifen und sich zu vereinen und um ein kombiniertes Tröpfchen zu bilden, wobei das Verfahren ferner das Bewegen von zumindest einem Teil des kombinierten Tröpfchens weg von der Auswahlposition umfasst.

16. Mikrofluidisches System, das Folgendes aufweist:
erste und zweite Substrate, die durch einen Spalt für Tröpfchenoperationen getrennt sind, wobei die ersten und zweiten Substrate jeweils hydrophobe Flächen beinhalten, die dem Spalt für Tröpfchenoperationen zugewandt sind;
eine Vielzahl von Elektroden, die an zumindest einem von Folgendem gekoppelt sind, nämlich dem ersten Substrat oder dem zweiten Substrat, wobei die Elektroden entlang des Spalts für Tröpfchenoperationen angeordnet sind, um die Bewegung eines Tröpfchens entlang der hydrophoben Flächen durch den Spalt für Tröpfchenoperationen zu steuern;
eine hydrophile oder uneinheitlich hydrophile Fläche, die an den Spalt für Tröpfchenoperationen exponiert ist, wobei die hydrophile Fläche positioniert ist, um das Tröpfchen zu kontaktieren, wenn sich das Tröpfchen in einer Auswahlposition in dem Spalt für Tröpfchenoperationen befindet; und
eine Steuereinheit, die operativ an die Elektroden gekoppelt ist und eingerichtet ist, um die Elektroden zu steuern, um Tröpfchenoperationen durchzuführen, die durch Elektrobenetzung vermittelt werden.

## Revendications

1. Actionneur de gouttelettes (100) comprenant :
des premier et deuxième substrats (110, 112) séparés par un intervalle d'opérations de gouttelettes (114), les premier et deuxième substrats comportant des surfaces hydrophobes respectives qui sont tournées vers l'intervalle d'opérations de gouttelettes ;
une pluralité d'électrodes (118) couplées à au moins l'un du premier substrat et du deuxième substrat, les électrodes étant agencées le long de l'intervalle d'opérations de gouttelettes pour commander le mouvement d'une gouttelette le long des surfaces hydrophobes dans l'intervalle d'opérations de gouttelettes ; et
**caractérisé en ce que** l'actionneur de gouttelettes comprend en outre
une surface hydrophile ou hydrophile-panachée (122) exposée à l'intervalle d'opérations de gouttelettes, la surface hydrophile ou hydrophile-panachée étant positionnée de manière à entrer en contact avec la gouttelette lorsque la gouttelette se trouve à une position sélectionnée dans l'intervalle d'opérations de gouttelettes.

2. Actionneur de gouttelettes de la revendication 1, dans lequel les surfaces hydrophobes comportent au moins l'un d'un polymère de tétrafluoroéthylène, d'un polymère fluoré et d'un polymère fluoré amorphe.

3. Actionneur de gouttelettes de la revendication 1 ou 2, dans lequel la surface hydrophile-panachée comprend une surface rugueuse qui forme des régions interstitielles qui séparent une pluralité de nanopuits

4. Actionneur de gouttelettes de l'une quelconque des revendications 1 à 3, dans lequel les électrodes sont positionnées de manière à transporter la gouttelette vers la surface hydrophile ou hydrophile-panachée, ou à transporter la gouttelette loin de la surface hydrophile ou hydrophile-panachée.

5. Actionneur de gouttelettes de l'une quelconque des revendications 1 à 4, comprenant en outre une unité de commande, l'unité de commande étant configurée pour commander les électrodes afin de transporter la gouttelette sur la surface hydrophile ou hydrophile-panachée à partir d'au moins l'une des surfaces hydrophobes, ou configurée pour commander les électrodes afin de transporter la gouttelette sur au moins l'une des surfaces hydrophobes à partir de la surface hydrophile ou hydrophile-panachée.

6. Actionneur de gouttelettes des revendications 1 à 5, dans lequel la gouttelette est alignée avec une électrode désignée lorsqu'elle se trouve à la position sélectionnée, de sorte que l'électrode désignée soit tournée vers et adjacente à la gouttelette dans l'intervalle d'opérations de gouttelettes.

7. Actionneur de gouttelettes de la revendication 6, dans lequel la surface hydrophile ou hydrophile-panachée est positionnée de manière à être tournée vers l'électrode désignée avec l'intervalle d'opérations de gouttelettes entre elles, ou dans lequel la surface hydrophile ou hydrophile-panachée est couplée au même substrat que l'électrode désignée, ou dans lequel la surface hydrophile ou hydrophile-panachée est agencée entre les premier et deuxième substrats.

8. Actionneur de gouttelettes de la revendication 6 ou 7, dans lequel l'intervalle d'opérations de gouttelettes a une hauteur d'intervalle, la hauteur d'intervalle au niveau de l'électrode désignée étant différente de la hauteur d'intervalle au niveau d'une électrode adjacente à l'électrode désignée, de sorte que la gouttelette ait une hauteur, lorsqu'elle est alignée avec l'électrode désignée, différente de celle dans le cas où elle est alignée avec l'électrode adjacente.

9. Actionneur de gouttelettes de l'une quelconque des revendications 1 à 8, dans lequel la surface hydrophile-panachée a des parties hydrophiles et des parties superhydrophobes dans l'empreinte.

10. Actionneur de gouttelettes de l'une quelconque des revendications 1 à 9, dans lequel une couche diélectrique est positionnée entre la surface hydrophile ou hydrophile-panachée et les électrodes.

11. Actionneur de gouttelettes de l'une quelconque des revendications 1 à 10, comprenant en outre un détecteur optique couplé à l'un du premier substrat et du deuxième substrat, la surface hydrophile ou hydrophile-panachée étant alignée avec le détecteur optique pour détecter des signaux lumineux provenant de la surface hydrophile.

12. Procédé comprenant le fait :
de fournir un actionneur de gouttelettes comportant un intervalle d'opérations de gouttelettes et une pluralité d'électrodes positionnées le long de l'intervalle d'opérations de gouttelettes, l'intervalle d'opérations de gouttelettes étant défini entre des surfaces hydrophobes opposées, l'actionneur de gouttelettes ayant une surface hydrophile ou hydrophile-panachée exposée à l'intervalle d'opérations de gouttelettes ;
de commander les électrodes afin de transporter une gouttelette en utilisant des opérations de gouttelettes induites par électromouillage à travers l'intervalle d'opérations de gouttelettes le long des surfaces hydrophobes vers une position sélectionnée, où la gouttelette est en contact avec la surface hydrophile ou hydrophile-panachée lorsque la gouttelette se trouve dans une position sélectionnée.

13. Procédé de la revendication 12, dans lequel la commande des électrodes pour transporter la gouttelette comporte le transport de la gouttelette vers la surface hydrophile ou hydrophile-panachée, ou le transport de la gouttelette loin de la surface hydrophile ou hydrophile-panachée.

14. Procédé de la revendication 12 ou 13, dans lequel la gouttelette est une première gouttelette, le procédé comprenant en outre la commande des électrodes pour faire avancer une deuxième gouttelette afin de s'engager avec la première gouttelette et déplacer la première gouttelette depuis la position sélectionnée, ou le procédé comprenant en outre la commande des électrodes pour faire avancer la première gouttelette plus loin de la position sélectionnée après le déplacement de la première gouttelette.

15. Procédé de la revendication 12 ou 13, dans lequel la gouttelette est une première gouttelette, le procédé comprenant en outre la commande d'une deuxième gouttelette pour s'engager et se combiner avec la première gouttelette à la position sélectionnée et former une gouttelette combinée, le procédé comprenant en outre le fait de faire avancer au moins une partie de la gouttelette combinée loin de la position sélectionnée.

16. Système microfluidique comprenant :
des premier et deuxième substrats séparés par un intervalle d'opérations de gouttelettes, les premier et deuxième substrats comportant des surfaces hydrophobes respectives qui sont tournées vers l'intervalle d'opérations de gouttelettes ;
une pluralité d'électrodes couplées à au moins l'un du premier substrat et du deuxième substrat, les électrodes étant agencées le long de l'intervalle d'opérations de gouttelettes pour commander le mouvement d'une gouttelette le long des surfaces hydrophobes à travers l'intervalle d'opérations de gouttelettes ;
une surface hydrophile ou hydrophile-panachée exposée à l'intervalle d'opérations de gouttelettes, la surface hydrophile étant positionnée de manière à entrer en contact avec la gouttelette lorsque la gouttelette se trouve dans une position sélectionnée dans l'intervalle d'opérations de gouttelette ; et
une unité de commande qui est couplée de manière fonctionnelle aux électrodes et configurée pour commander les électrodes afin de réaliser des opérations de gouttelettes induites par électromouillage.
